# EUROPEAN PATENT APPLICATION

(11) **EP 4 575 754 A1**
(43) Date of publication of application: **25.06.2025**
(21) Application number: 23893595.1
(22) Date of filing: 31.10.2023
(51) Int. Cl.: G06F 3/16, H04R 3/00, H04W 4/80, H04W 8/00, H04W 76/14

(54) **AUDIO PLAYBACK CONTROL METHOD, RELATED APPARATUS, AND COMMUNICATION SYSTEM**

(30) Priority: 25.11.2022 CN 202211491599; 02.12.2022 CN 202211539134
(71) Applicant: Huawei Technologies Co., Ltd., Shenzhen, Guangdong 518129 (CN)
(72) Inventor: ZHANG, Xianchun, Shenzhen, Guangdong 518129 (CN); WANG, Shufeng, Shenzhen, Guangdong 518129 (CN); LIAO, Yousheng, Shenzhen, Guangdong 518129 (CN); LIN, Jianxin, Shenzhen, Guangdong 518129 (CN); REN, Tiansi, Shenzhen, Guangdong 518129 (CN); WU, Yu, Shenzhen, Guangdong 518129 (CN)
(74) Representative: MERH-IP Matias Erny Reichl Hoffmann Patentanwälte PartG mbB
(86) International application number: PCT/CN2023/128908
(87) International publication number: WO 2024/109504

(57) **Abstract**

This application provides an audio playing control method, a related apparatus, and a communication system. The method may be applied to a wearable device that integrates a smartwatch and earphones. The smartwatch may be used as a control and management device of the earphones to control audio played with a sound by the earphones. A user may control, through the smartwatch, the earphones to play audio on a specified device with a sound. According to the foregoing method, a conflict that a plurality of devices preempt the earphones can be avoided, and user experience of listening to audio through the earphones can be improved.

## Description

This application claims priorities to Chinese Patent Application No. 202211491599.4, filed with the China National Intellectual Property Administration on November 25, 2022 and entitled "AUDIO PLAYING CONTROL METHOD, RELATED APPARATUS, AND COMMUNICATION SYSTEM", and to Chinese Patent Application No. 202211539134.1, filed with the China National Intellectual Property Administration on December 2, 2022 and entitled "AUDIO PLAYING CONTROL METHOD, RELATED APPARATUS, AND COMMUNICATION SYSTEM", both of which are incorporated herein by reference in their entireties.

### TECHNICAL FIELD

This application relates to the field of terminal technologies, and in particular, to an audio playing control method, a related apparatus, and a communication system.

### BACKGROUND

Earphones may be connected to an electronic device (for example, a mobile phone, a smartwatch, a tablet computer, or a notebook computer), and serve as an extended device of the electronic device to play audio from the electronic device connected to the earphones. A pair of earphones may be connected to a plurality of electronic devices. When the plurality of electronic devices all need to make a sound, audio played by the earphones is controlled, to avoid a conflict that the plurality of electronic devices preempt the earphones, and bring better audio listening experience to a user.

### SUMMARY

This application provides an audio playing control method, a related apparatus, and a communication system. The method may be applied to a wearable device that integrates a smartwatch and earphones. The smartwatch may be used as a control and management device of the earphones to control audio played with a sound by the earphones. A user may control, through the smartwatch, the earphones to play audio on a specified device with a sound. According to the foregoing method, a conflict that a plurality of devices preempt the earphones can be avoided, and user experience of listening to audio through the earphones can be improved.

According to a first aspect, this application provides an audio playing control method. The method may be applied to a communication system. The communication system may include a wearable device and an audio apparatus. An audio apparatus slot accommodating the audio apparatus is disposed in the wearable device. A communication connection is established between the wearable device and the audio apparatus, and a communication connection is established between the wearable device and a first device. The wearable device may detect a first operation, where the first operation may be used to play first audio on the first device. In response to the first operation, the wearable device may send a first instruction to the first device, where the first instruction is used to trigger the first device to play the first audio. The audio apparatus may receive first audio data from the first device, and play the first audio based on the first audio data.

It can be learned from the foregoing method that a new product form that integrates the wearable device and the audio apparatus provided in this application may control another device to play audio. For example, the wearable device may control the first device to play audio through the audio apparatus. According to the foregoing method, a user can conveniently control a device to play audio.

With reference to the first aspect, in some embodiments, the wearable device may receive first information from the first device, where the first information includes one or more of the following: play progress of the first audio, description information of the first audio, and play volume of the first audio. The wearable device may display the first information.

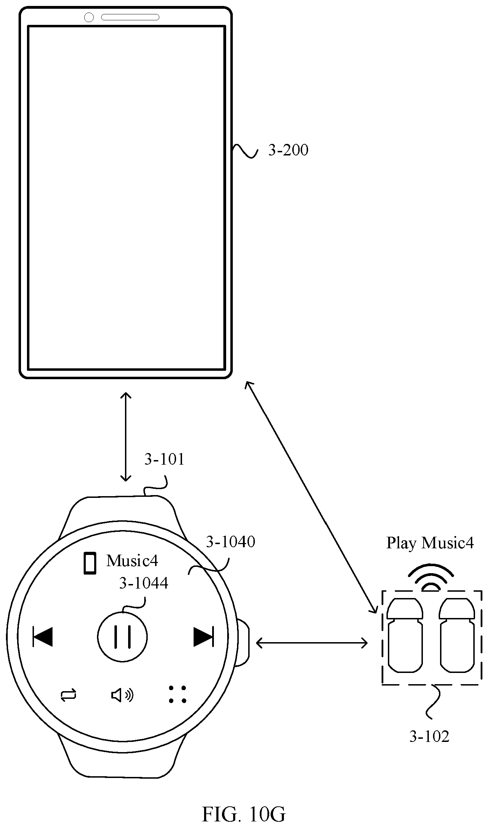

For an interface on which the wearable device may display the first information, refer to a user interface 3-1040 shown in FIG. 10G in a subsequent embodiment.

The description information of the first audio may include a name of the first audio, content of the first audio, and the like. For example, when the first audio is music, the description information of the first audio may include a song name, an author name, lyrics, and the like of the first audio.

When the audio played by the first device is switched from the first audio to other audio, the first device may further send information such as play progress, description information, and play volume of the other audio to the wearable device.

It can be learned from the foregoing embodiments that the wearable device may display related information of the audio played on the first device. In this way, the user can conveniently learn, on the wearable device, of the audio played on the first device, and control the audio played on the first device.

With reference to the first aspect, in some embodiments, the wearable device detects an operation of adjusting the play volume of the first audio to first volume, and may send a volume adjustment instruction to the audio apparatus. In response to the volume adjustment instruction, the audio apparatus adjusts the play volume of the first audio to the first volume.

In some other embodiments, the wearable device detects an operation of switching a noise control mode, and may send a noise control mode switching instruction to the audio apparatus. The audio apparatus may switch the noise control mode according to the noise control mode switching instruction, for example, switch to a noise cancellation mode, switch to an awareness mode, or disable the noise cancellation mode and the awareness mode.

It can be learned from the foregoing embodiments that, because the communication connection is established between the wearable device and the audio apparatus, the wearable device may directly control the audio apparatus, so that audio control such as volume adjustment and noise control mode switching can be quickly implemented.

In some embodiments, after detecting the operation of adjusting the play volume of the first audio to the first volume, the wearable device may further send a volume adjustment message to the first device. The volume adjustment message may indicate that the play volume of the first audio is adjusted to the first volume. In this way, although the user adjusts the play volume of the audio of the first device on the wearable device, the user can still view the adjusted volume on the first device. This can ensure that a playing status of the audio is synchronized among the wearable device, earphones, and the first device.

With reference to the first aspect, in some embodiments, the first instruction sent by the wearable device to the first device may be used to trigger the first device to play the first audio through the audio apparatus.

In a possible implementation, when receiving the first instruction, the first device may obtain a status of a connection between the first device and the audio apparatus. When the first device is not connected to the audio apparatus, the first device may establish the communication connection to the audio apparatus, to play the first audio through the audio apparatus. When the first device is connected to the audio apparatus, the first device may directly play the first audio through the audio apparatus.

In another possible implementation, after detecting the first operation, the wearable device may obtain the status of the connection between the audio apparatus and the first device. When the audio apparatus is connected to the first device, the wearable device sends the first instruction to the first device, to trigger the first device to play the first audio through the audio apparatus. When the communication connection is not established between the audio apparatus and the first device, the wearable device may send the first instruction to the first device. The first instruction may be used to trigger the first device to establish the communication connection to the audio apparatus, and play the first audio through the audio apparatus.

With reference to the first aspect, in some embodiments, after detecting the first operation, the wearable device may obtain the status of the connection between the audio apparatus and the first device. When the communication connection is not established between the audio apparatus and the first device, the wearable device may indicate the earphones to establish a communication connection to the first device, and send, to the first device, the first instruction for playing the first audio. If the audio apparatus is successfully connected to the first device, the first device may play the first audio through the audio apparatus. If the audio apparatus fails to be connected to the first device, the first device may play the first audio.

It can be learned from the foregoing embodiments that the wearable device may manage a device connected to the audio apparatus. In a scenario in which the audio on the first device is played, the wearable device may trigger the earphones to be connected to the first device. The user may listen to the audio of the first device through the earphones. This can reduce a conflict that another device preempts the audio apparatus.

With reference to the first aspect, in some embodiments, the wearable device may detect a second operation, where the second operation is used to play second audio on a second device. The wearable device sends a second instruction to the audio apparatus in response to the second operation, where the second instruction is used to trigger the audio apparatus to establish a communication connection to the second device. The audio apparatus establishes the communication connection to the second device in response to the second instruction. The wearable device sends a third instruction to the second device through the audio apparatus, where the third instruction is used to trigger the second device to play the second audio. The audio apparatus receives second audio data from the second device, and plays the second audio based on the second audio data.

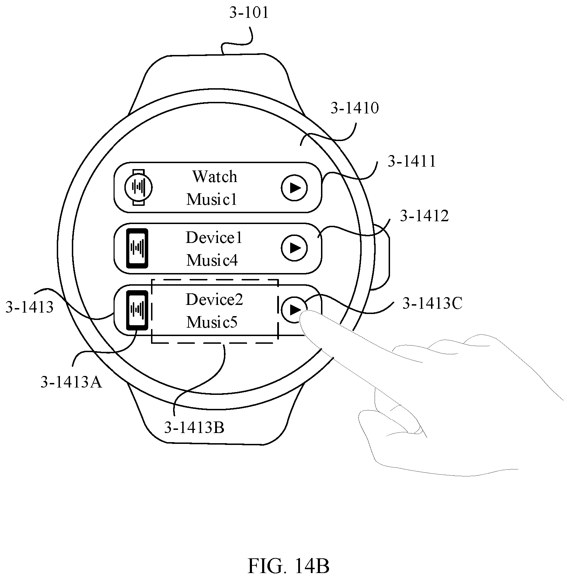

For the second operation, refer to an operation shown in FIG. 14B in a subsequent embodiment.

It can be learned from the foregoing embodiments that, although the second device does not establish a communication connection to the wearable device, the wearable device may still control, through the audio apparatus, the second device to play audio. In a scenario in which audio on the second device is played, the wearable device may trigger the audio apparatus to be connected to the second device, and control, through the audio apparatus, the second device to play the audio. The user may listen to the audio of the second device through the audio apparatus, and control audio playing through the wearable device. According to the foregoing method, the user can conveniently control, through the wearable device and the audio apparatus, a plurality of devices to play audio, and use the wearable device as a micro control center of the audio apparatus to control the audio apparatus to play audio on a specified device. This can improve user experience of performing audio control, and reduce a conflict that another device preempts the audio apparatus.

With reference to the first aspect, in some embodiments, the wearable device receives second information from the second device through the audio apparatus, where the second information includes one or more of the following: play progress of the second audio, description information of the second audio, and play volume of the second audio. The wearable device displays the second information.

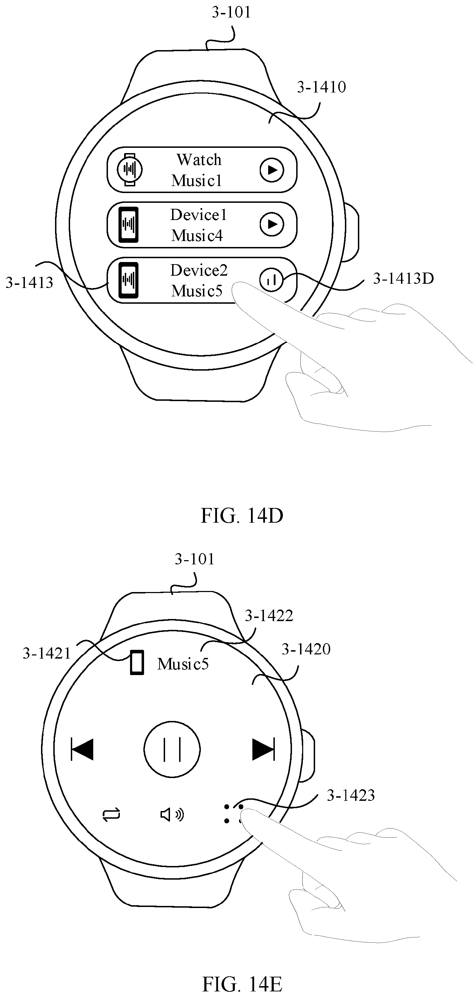

For an interface on which the wearable device displays the second information, refer to a user interface 3-1420 shown in FIG. 14E.

When audio played by the second device is switched from the second audio to other audio, the second device may further send information such as play progress, description information, and play volume of the other audio to the wearable device through the audio apparatus.

It can be learned from the foregoing embodiments that the wearable device may display related information of the audio played on the second device. In this way, the user can conveniently learn, on the wearable device, of the audio played on the second device, and control the audio played on the second device.

With reference to the first aspect, in some embodiments, the wearable device detects a third operation, where the third operation is used to play third audio on the wearable device. The wearable device sends third audio data to the audio apparatus in response to the third operation. The audio apparatus plays the third audio based on the third audio data.

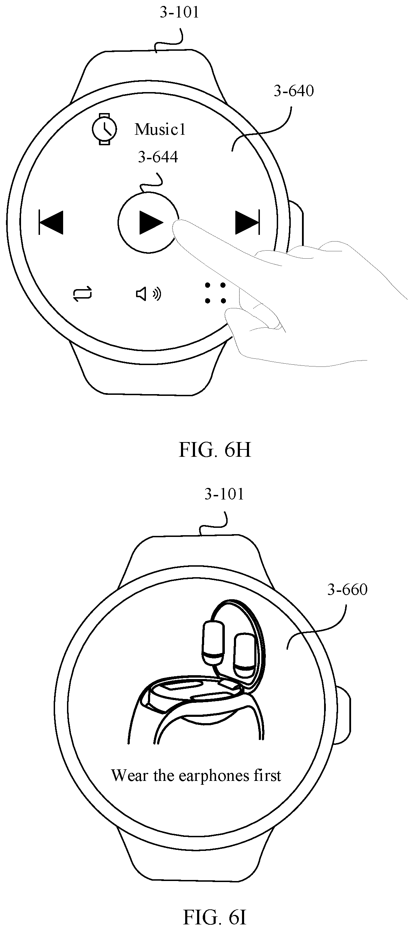

For the third operation, refer to an operation shown in FIG. 6H in a subsequent embodiment.

It can be learned that the audio apparatus may further play audio on the wearable device.

With reference to the first aspect, in some embodiments, the communication connection is established between the audio apparatus and the first device. When the audio apparatus plays the third audio based on the third audio data, after the first device detects an operation of playing the first audio, the audio apparatus may stop playing the third audio, and play the first audio based on the first audio data.

In other words, when the audio apparatus is connected to a plurality of devices, the audio apparatus may play audio on a device that detects an audio playing operation most recently. For example, when the wearable device detects the third operation of playing the third audio, the wearable device may send the first audio data to the audio apparatus. The audio apparatus may play the third audio on the wearable device. Then, when the first device detects an operation of playing the audio on the first device, the first device may send audio data of the audio on the first device to the audio apparatus. The audio apparatus may play the audio (for example, the first audio) on the first device, and stop playing the audio on the wearable device.

It may be understood that the user may perform different operations on the wearable device and the first device to implement different functions. The latest operation performed by the user may usually indicate what the user currently wants to do most. The audio apparatus may determine, based on a device to which to-be-played music indicated by a music play instruction most recently received from the user belongs, whether the user currently wants to listen to local music on the wearable device or listen to music on the first device. In this way, the audio apparatus may play music on a device that the user currently wants to listen to most. According to the foregoing embodiments, user experience of listening to audio through the audio apparatus can be improved.

With reference to the first aspect, in some embodiments, when the audio apparatus plays the second audio on the second device, the wearable device detects a fourth operation, where the fourth operation is used to play fourth audio on the first device. In response to the fourth operation, the wearable device sends a fourth instruction to the audio apparatus, and sends, to the first device, an instruction for playing the fourth audio, where the fourth instruction is used to trigger the audio apparatus to establish a communication connection to the first device. The audio apparatus establishes the communication connection to the first device in response to the fourth instruction. The audio apparatus receives fourth audio data from the first device, stops playing the second audio, and plays the fourth audio based on the fourth audio data.

It can be learned from the foregoing embodiments that, when the audio apparatus is not connected to the first device (for example, the audio apparatus is connected to the second device, and is playing the audio on the second device), if the user performs an operation on the wearable device and wants to listen to the fourth audio on the first device, the wearable device may trigger the audio apparatus to be connected to the first device, and control, through the audio apparatus, the first device to play the audio. The user may listen to the audio on the first device through the audio apparatus, and control audio playing through the wearable device. According to the foregoing method, the user can conveniently control, through the wearable device and the audio apparatus, a plurality of devices to play audio, and use the wearable device as a micro control center of the audio apparatus to control the audio apparatus to play audio on a specified device. This can improve user experience of performing audio control, and reduce a conflict that another device preempts the audio apparatus.

With reference to the first aspect, in some embodiments, the wearable device displays a first audio playing interface, where the first audio playing interface is an interface used to control the wearable device, the first device, or the second device to play audio; and the first audio playing interface includes one or more of the following audio controlling controls: an audio play/pause control, an audio switching control, and a volume adjustment control. If the first audio playing interface is an interface used to control the wearable device to play audio, and the wearable device detects an operation performed on a first audio controlling control on the first audio playing interface, the wearable device controls the audio on the wearable device through the first audio controlling control. Alternatively, if the first audio playing interface is an interface used to control the first device to play audio, and the wearable device detects an operation performed on a second audio controlling control on the first audio playing interface, the wearable device indicates, through the second audio controlling control, the first device to control the audio on the first device. Alternatively, if the first audio playing interface is an interface used to control the second device to play audio, and the wearable device detects an operation performed on a third audio controlling control on the first audio playing interface, the wearable device indicates, through the third audio controlling control and the audio apparatus, the second device to control the audio on the second device. The first audio controlling control, the second audio controlling control, and the third audio controlling control are any audio controlling control included in the first audio playing interface.

For the first audio playing interface, refer to a user interface 3-640 shown in FIG. 6F, a user interface 3-1040 shown in FIG. 10F, and a user interface 3-1420 shown in FIG. 14E in subsequent embodiments.

It can be learned from the foregoing embodiments that the smartwatch may display an interface used to control a plurality of different devices to play audio. The user may perform an operation on an interface that is on the smartwatch and that is used to control a device to play audio, to control audio playing of the device (for example, control audio playing/pausing, control volume, and switch audio).

With reference to the first aspect, in some embodiments, the first audio playing interface further includes a noise control mode switching control, the noise control mode switching control is used to switch a noise control mode of the audio apparatus, and the noise control mode includes a noise cancellation mode, an awareness mode, and a noise cancellation and awareness disabled mode.

With reference to the first aspect, in some embodiments, the wearable device may display a first interface, where the first interface includes one or more of the following controls: a first play control, a second play control, and a third play control, where the first play control is used to control the wearable device to play or pause the audio on the wearable device, the second play control is used to control the first device to play or pause the audio on the first device, and the third play control is used to control the second device to play or pause the audio on the second device.

For example, the first interface may be a leftmost screen interface of the wearable device. For the first interface, refer to a user interface 3-1410 shown in FIG. 14D in a subsequent embodiment.

It can be learned from the foregoing embodiments that the wearable device may display, on a same interface, controls used to control different devices to play audio. In this way, the user can quickly perform audio control on different devices, and does not need to spend time and energy in searching for operation entries for controlling the different devices to play audio. According to the foregoing embodiments, an audio control operation performed by the user can be simplified, and user experience can be improved.

With reference to the first aspect, in some embodiments, after the wearable device detects the first operation, the wearable device may obtain a wearing status of the audio apparatus. When the audio apparatus is in a not-worn state, the wearable device may provide a first prompt, where the first prompt is used to prompt the user to wear the audio apparatus.

With reference to the first aspect, in some embodiments, when the audio apparatus plays the second audio on the second device, the wearable device detects that the first device is playing audio, and the first device is closer to the wearable device than the second device. The wearable device sends a fifth instruction to the audio apparatus, where the fifth instruction is used to trigger the audio apparatus to establish the communication connection to the first device. The audio apparatus establishes the communication connection to the first device in response to the fifth instruction. The audio apparatus receives the audio data from the first device, stops playing the second audio, and plays the audio on the first device based on the audio data of the first device.

It can be learned from the foregoing embodiments that, when there are a plurality of devices that are playing audio around the wearable device, the wearable device may indicate the audio apparatus to play audio on a device closest to the wearable device.

With reference to the first aspect, in some embodiments, when the audio apparatus plays the second audio on the second device, the audio apparatus detects that the first device is playing the audio, and the first device is closer to the audio apparatus than the second device. The audio apparatus establishes the communication connection to the first device. The audio apparatus receives the audio data from the first device, stops playing the second audio, and plays the audio on the first device based on the audio data of the first device.

It can be learned from the foregoing embodiments that, when there are a plurality of devices that are playing audio around the audio apparatus, the audio apparatus may play audio on a device closest to the audio apparatus.

With reference to the first aspect, in some embodiments, the audio apparatus establishes the communication connection to the first device when the audio apparatus is taken out of the audio apparatus slot of the wearable device, where the audio apparatus is placed in the audio apparatus slot of the wearable device, and the communication connection is established between the audio apparatus and the first device before the audio apparatus is placed in the audio apparatus slot of the wearable device. Alternatively, the audio apparatus establishes the communication connection to the second device when the audio apparatus is taken out of the audio apparatus slot of the wearable device, where the audio apparatus is placed in the audio apparatus slot of the wearable device, and the communication connection is established between the audio apparatus and the second device before the audio apparatus is placed in the audio apparatus slot of the wearable device.

It can be learned from the foregoing embodiments that, after the audio apparatus is taken out of the audio apparatus slot, the audio apparatus may be reconnected to a device to which the audio apparatus is last connected before the audio apparatus is placed in the audio apparatus slot.

With reference to the first aspect, in some embodiments, the wearable device is any one of the following devices: a smartwatch, a smart band, smart glasses, a smart helmet, smart clothing, and a smart backpack; and the audio apparatus is any one of the following devices: earphones, a mini sound box, and a portable music player.

When the audio apparatus is earphones, the audio apparatus slot may be an earphone slot (or referred to as an earphone compartment).

According to a second aspect, this application provides an audio playing control method. The method may be applied to a wearable device. An audio apparatus slot accommodating an audio apparatus is disposed in the wearable device, a communication connection is established between the wearable device and the audio apparatus, and a communication connection is established between the wearable device and a first device. The wearable device detects a first operation, where the first operation is used to play first audio on the first device. In response to the first operation, the wearable device sends a first instruction to the first device, where the first instruction is used to trigger the first device to play the first audio. When the audio apparatus is connected to the first device, the audio apparatus may receive first audio data from the first device, and play the first audio based on the first audio data.

It can be learned from the foregoing method that a new product form that integrates the wearable device and the audio apparatus provided in this application may control another device to play audio. For example, the wearable device may control the first device to play audio through the audio apparatus. According to the foregoing method, a user can conveniently control a device to play audio.

With reference to the second aspect, in some embodiments, the wearable device receives first information from the first device, where the first information includes one or more of the following: play progress of the first audio, description information of the first audio, and play volume of the first audio. The wearable device displays the first information.

The description information of the first audio may include a name of the first audio, content of the first audio, and the like. For example, when the first audio is music, the description information of the first audio may include a song name, an author name, lyrics, and the like of the first audio.

It can be learned from the foregoing embodiments that the wearable device may display related information of the audio played on the first device. In this way, the user can conveniently learn, on the wearable device, of the audio played on the first device, and control the audio played on the first device.

With reference to the second aspect, in some embodiments, the wearable device detects an operation of adjusting the play volume of the first audio to first volume, and sends a volume adjustment instruction to the audio apparatus, where the volume adjustment instruction is used to trigger the audio apparatus to adjust the play volume of the first audio to the first volume.

It can be learned from the foregoing embodiments that, because the communication connection is established between the wearable device and the audio apparatus, the wearable device may directly control the audio apparatus, so that audio control such as volume adjustment and noise control mode switching can be quickly implemented.

In some embodiments, after detecting the operation of adjusting the play volume of the first audio to the first volume, the wearable device may further send a volume adjustment message to the first device. The volume adjustment message may indicate that the play volume of the first audio is adjusted to the first volume. In this way, although the user adjusts the play volume of the audio of the first device on the wearable device, the user can still view the adjusted volume on the first device. This can ensure that a playing status of the audio is synchronized among the wearable device, earphones, and the first device.

With reference to the second aspect, in some embodiments, the first instruction sent by the wearable device to the first device may be used to trigger the first device to play the first audio through the audio apparatus.

In a possible implementation, when receiving the first instruction, the first device may obtain a status of a connection between the first device and the audio apparatus. When the first device is not connected to the audio apparatus, the first device may establish the communication connection to the audio apparatus, to play the first audio through the audio apparatus. When the first device is connected to the audio apparatus, the first device may directly play the first audio through the audio apparatus.

In another possible implementation, after detecting the first operation, the wearable device may obtain the status of the connection between the audio apparatus and the first device. When the audio apparatus is connected to the first device, the wearable device sends the first instruction to the first device, to trigger the first device to play the first audio through the audio apparatus. When the communication connection is not established between the audio apparatus and the first device, the wearable device may send the first instruction to the first device. The first instruction may be used to trigger the first device to establish the communication connection to the audio apparatus, and play the first audio through the audio apparatus.

With reference to the first aspect, in some embodiments, after detecting the first operation, the wearable device may obtain the status of the connection between the audio apparatus and the first device. When the communication connection is not established between the audio apparatus and the first device, the wearable device may indicate the earphones to establish a communication connection to the first device, and send, to the first device, the first instruction for playing the first audio. If the audio apparatus is successfully connected to the first device, the first device may play the first audio through the audio apparatus. If the audio apparatus fails to be connected to the first device, the first device may play the first audio.

It can be learned from the foregoing embodiments that the wearable device may manage a device connected to the audio apparatus. In a scenario in which the audio on the first device is played, the wearable device may trigger the earphones to be connected to the first device. The user may listen to the audio of the first device through the earphones. This can reduce a conflict that another device preempts the audio apparatus.

With reference to the second aspect, in some embodiments, the wearable device may detect a second operation, where the second operation is used to play second audio on a second device. The wearable device sends a second instruction to the audio apparatus in response to the second operation, where the second instruction is used to trigger the audio apparatus to establish a communication connection to the second device. The audio apparatus establishes the communication connection to the second device in response to the second instruction. The wearable device sends a third instruction to the second device through the audio apparatus, where the third instruction is used to trigger the second device to play the second audio. The audio apparatus receives second audio data from the second device, and plays the second audio based on the second audio data.

It can be learned from the foregoing embodiments that, although the second device does not establish a communication connection to the wearable device, the wearable device may still control, through the audio apparatus, the second device to play audio. In a scenario in which audio on the second device is played, the wearable device may trigger the audio apparatus to be connected to the second device, and control, through the audio apparatus, the second device to play the audio. The user may listen to the audio of the second device through the audio apparatus, and control audio playing through the wearable device. According to the foregoing method, the user can conveniently control, through the wearable device and the audio apparatus, a plurality of devices to play audio, and use the wearable device as a micro control center of the audio apparatus to control the audio apparatus to play audio on a specified device. This can improve user experience of performing audio control, and reduce a conflict that another device preempts the audio apparatus.

With reference to the second aspect, in some embodiments, the wearable device receives second information from the second device through the audio apparatus, where the second information includes one or more of the following: play progress of the second audio, description information of the second audio, and play volume of the second audio. The wearable device displays the second information.

When audio played by the second device is switched from the second audio to other audio, the second device may further send information such as play progress, description information, and play volume of the other audio to the wearable device through the audio apparatus.

It can be learned from the foregoing embodiments that the wearable device may display related information of the audio played on the second device. In this way, the user can conveniently learn, on the wearable device, of the audio played on the second device, and control the audio played on the second device.

With reference to the second aspect, in some embodiments, the wearable device detects a third operation, where the third operation is used to play third audio on the wearable device. The wearable device sends third audio data to the audio apparatus in response to the third operation. The audio apparatus plays the third audio based on the third audio data.

It can be learned that the audio apparatus may further play audio on the wearable device.

With reference to the second aspect, in some embodiments, the communication connection is established between the audio apparatus and the first device. When the audio apparatus plays the third audio based on the third audio data, after the first device detects an operation of playing the first audio, the audio apparatus may stop playing the third audio, and play the first audio based on the first audio data.

In other words, when the audio apparatus is connected to a plurality of devices, the audio apparatus may play audio on a device that detects an audio playing operation most recently. For example, when the wearable device detects the third operation of playing the third audio, the wearable device may send the first audio data to the audio apparatus. The audio apparatus may play the third audio on the wearable device. Then, when the first device detects an operation of playing the audio on the first device, the first device may send audio data of the audio on the first device to the audio apparatus. The audio apparatus may play the audio (for example, the first audio) on the first device, and stop playing the audio on the wearable device.

It may be understood that the user may perform different operations on the wearable device and the first device to implement different functions. The latest operation performed by the user may usually indicate what the user currently wants to do most. The audio apparatus may determine, based on a device to which to-be-played music indicated by a music play instruction most recently received from the user belongs, whether the user currently wants to listen to local music on the wearable device or listen to music on the first device. In this way, the audio apparatus may play music on a device that the user currently wants to listen to most. According to the foregoing embodiments, user experience of listening to audio through the audio apparatus can be improved.

With reference to the second aspect, in some embodiments, the wearable device displays a first audio playing interface, where the first audio playing interface is an interface used to control the wearable device, the first device, or the second device to play audio; and the first audio playing interface includes one or more of the following audio controlling controls: an audio play/pause control, an audio switching control, and a volume adjustment control. If the first audio playing interface is an interface used to control the wearable device to play audio, and the wearable device detects an operation performed on a first audio controlling control on the first audio playing interface, the wearable device controls the audio on the wearable device through the first audio controlling control. Alternatively, if the first audio playing interface is an interface used to control the first device to play audio, and the wearable device detects an operation performed on a second audio controlling control on the first audio playing interface, the wearable device indicates, through the second audio controlling control, the first device to control the audio on the first device. Alternatively, if the first audio playing interface is an interface used to control the second device to play audio, and the wearable device detects an operation performed on a third audio controlling control on the first audio playing interface, the wearable device indicates, through the third audio controlling control and the audio apparatus, the second device to control the audio on the second device. The first audio controlling control, the second audio controlling control, and the third audio controlling control are any audio controlling control included in the first audio playing interface.

It can be learned from the foregoing embodiments that the smartwatch may display an interface used to control a plurality of different devices to play audio. The user may perform an operation on an interface that is on the smartwatch and that is used to control a device to play audio, to control audio playing of the device (for example, control audio playing/pausing, control volume, and switch audio).

With reference to the second aspect, in some embodiments, the first audio playing interface further includes a noise control mode switching control, the noise control mode switching control is used to switch a noise control mode of the audio apparatus, and the noise control mode includes a noise cancellation mode, an awareness mode, and a noise cancellation and awareness disabled mode.

With reference to the second aspect, in some embodiments, the wearable device may display a first interface, where the first interface includes one or more of the following controls: a first play control, a second play control, and a third play control, where the first play control is used to control the wearable device to play or pause the audio on the wearable device, the second play control is used to control the first device to play or pause the audio on the first device, and the third play control is used to control the second device to play or pause the audio on the second device.

For example, the first interface may be a leftmost screen interface of the wearable device.

It can be learned from the foregoing embodiments that the wearable device may display, on a same interface, controls used to control different devices to play audio. In this way, the user can quickly perform audio control on different devices, and does not need to spend time and energy in searching for operation entries for controlling the different devices to play audio. According to the foregoing embodiments, an audio control operation performed by the user can be simplified, and user experience can be improved.

With reference to the second aspect, in some embodiments, after the wearable device detects the first operation, the wearable device may obtain a wearing status of the audio apparatus. When the audio apparatus is in a not-worn state, the wearable device may provide a first prompt, where the first prompt is used to prompt the user to wear the audio apparatus.

With reference to the second aspect, in some embodiments, when the audio apparatus plays the second audio on the second device, the wearable device detects that the first device is playing audio, and the first device is closer to the wearable device than the second device. The wearable device sends a fifth instruction to the audio apparatus, where the fifth instruction is used to trigger the audio apparatus to establish the communication connection to the first device. The audio apparatus establishes the communication connection to the first device in response to the fifth instruction. The audio apparatus receives the audio data from the first device, stops playing the second audio, and plays the audio on the first device based on the audio data of the first device.

It can be learned from the foregoing embodiments that, when there are a plurality of devices that are playing audio around the wearable device, the wearable device may indicate the audio apparatus to play audio on a device closest to the wearable device.

With reference to the second aspect, in some embodiments, the wearable device may be any one of the following devices: a smartwatch, a smart band, smart glasses, a smart helmet, smart clothing, and a smart backpack.

According to a third aspect, this application provides an audio playing control method. The method may be applied to an audio apparatus, the audio apparatus is capable of being accommodated in an audio apparatus slot of a wearable device, and a communication connection is established between the audio apparatus and the wearable device. The audio apparatus receives first audio data from a first device, and plays first audio on the first device based on the first audio data. The audio apparatus receives a first audio control instruction from the wearable device, and controls the first audio according to the first audio control instruction, where the first audio control instruction includes one or more of the following: an audio play or playing pause instruction, a volume adjustment instruction, and a noise control mode switching instruction, the noise control mode switching instruction is used to switch a noise control mode of the audio apparatus, and the noise control mode includes a noise cancellation mode, an awareness mode, and a noise cancellation and awareness disabled mode.

It can be learned from the foregoing method that a new product form that integrates the wearable device and the audio apparatus provided in this application may control another device to play audio. For example, the wearable device may control the first device to play audio through the audio apparatus, and directly control the audio apparatus, so that audio control such as volume adjustment and noise control mode switching can be quickly implemented. According to the foregoing method, a user can conveniently control a device to play audio.

With reference to the third aspect, in some embodiments, the audio apparatus may receive a second instruction from the wearable device, where the second instruction is used to trigger the audio apparatus to establish a communication connection to a second device. The audio apparatus establishes the communication connection to the second device in response to the second instruction. The audio apparatus receives second audio data from the second device, and plays second audio on the second device based on the second audio data.

It can be learned from the foregoing embodiments that the wearable device may manage a device connected to the audio apparatus. In this way, the user may control, through the wearable device, the audio apparatus to be connected to a specified device, and listen to audio on the specified device through the audio apparatus. This can reduce a conflict that another device preempts the audio apparatus.

With reference to the third aspect, in some embodiments, the audio apparatus may receive third audio data from the wearable device, and play third audio on the wearable device based on the third audio data.

It can be learned from the foregoing embodiments that the audio apparatus may further play audio on the wearable device.

With reference to the third aspect, in some embodiments, a communication connection is established between the audio apparatus and the first device. When the audio apparatus plays the audio on the wearable device, after the first device detects an operation of playing the first audio, the audio apparatus may stop playing the third audio, and play the first audio based on the first audio data.

In other words, when the audio apparatus is connected to a plurality of devices, the audio apparatus may play audio on a device that detects an audio playing operation most recently. For example, when the wearable device detects the third operation of playing the third audio, the wearable device may send the first audio data to the audio apparatus. The audio apparatus may play the third audio on the wearable device. Then, when the first device detects an operation of playing the audio on the first device, the first device may send audio data of the audio on the first device to the audio apparatus. The audio apparatus may play the audio (for example, the first audio) on the first device, and stop playing the audio on the wearable device.

It may be understood that the user may perform different operations on the wearable device and the first device to implement different functions. The latest operation performed by the user may usually indicate what the user currently wants to do most. The audio apparatus may determine, based on a device to which to-be-played music indicated by a music play instruction most recently received from the user belongs, whether the user currently wants to listen to local music on the wearable device or listen to music on the first device. In this way, the audio apparatus may play music on a device that the user currently wants to listen to most. According to the foregoing embodiments, user experience of listening to audio through the audio apparatus can be improved.

With reference to the third aspect, in some embodiments, when the audio apparatus plays the second audio on the second device, the audio apparatus receives a fourth instruction from the wearable device, where the fourth instruction is used to trigger the audio apparatus to establish a communication connection to the first device. The audio apparatus establishes the communication connection to the first device in response to the fourth instruction. The audio apparatus receives fourth audio data from the first device, stops playing the second audio, and plays fourth audio on the first device based on the fourth audio data.

It can be learned from the foregoing embodiments that, when the audio apparatus is not connected to the first device (for example, the audio apparatus is connected to the second device, and is playing the audio on the second device), if the user performs an operation on the wearable device and wants to listen to the fourth audio on the first device, the wearable device may trigger the audio apparatus to be connected to the first device, and control, through the audio apparatus, the first device to play the audio. The user may listen to audio on the first device through the audio apparatus, and control audio playing through the wearable device. According to the foregoing method, the user can conveniently control, through the wearable device and the audio apparatus, a plurality of devices to play audio, and use the wearable device as a micro control center of the audio apparatus to control the audio apparatus to play audio on a specified device. This can improve user experience of performing audio control, and reduce a conflict that another device preempts the audio apparatus.

With reference to the third aspect, in some embodiments, when the audio apparatus plays the second audio on the second device, the audio apparatus detects that the first device is playing the audio, and the first device is closer to the audio apparatus than the second device. The audio apparatus establishes the communication connection to the first device. The audio apparatus receives the audio data from the first device, stops playing the second audio, and plays the audio on the first device based on the audio data of the first device.

It can be learned from the foregoing embodiments that, when there are a plurality of devices that are playing audio around the audio apparatus, the audio apparatus may play audio on a device closest to the audio apparatus.

With reference to the third aspect, in some embodiments, the audio apparatus is any one of the following devices: earphones, a mini sound box, and a portable music player.

According to a fourth aspect, this application provides a wearable device. An audio apparatus slot accommodating an audio apparatus is disposed in the wearable device. The wearable device includes a communication apparatus, a memory, and a processor. The communication apparatus may be configured to establish a communication connection between the wearable device and the audio apparatus. The memory may be configured to store a computer program. The processor may be configured to invoke the computer program, for the wearable device to perform the method according to any possible implementation of the second aspect.

According to a fifth aspect, this application provides an audio apparatus. The audio apparatus can be accommodated in an audio apparatus slot of a wearable device. The audio apparatus includes a communication apparatus, a memory, and a processor. The communication apparatus may be configured to establish a communication connection between the audio apparatus and the wearable device. The memory may be configured to store a computer program, the processor may be configured to invoke the computer program, for the audio apparatus to perform the method according to any possible implementation of the third aspect.

According to a sixth aspect, this application provides a computer-readable storage medium, including instructions. When the instructions are run on an electronic device, the electronic device is enabled to perform the method according to any possible implementation of the second aspect or the third aspect.

According to a seventh aspect, this application provides a computer program product. The computer program product may include computer instructions. When the computer instructions are run on an electronic device, the electronic device is enabled to perform the method according to any possible implementation of the second aspect or the third aspect.

According to an eighth aspect, this application provides a chip. The chip is used in an electronic device, the chip includes one or more processors, and the processor is configured to invoke computer instructions to enable the electronic device to perform the method according to any possible implementation of the second aspect or the third aspect.

It may be understood that the wearable device provided in the fourth aspect, the audio apparatus provided in the fifth aspect, the computer-readable storage medium provided in the sixth aspect, the computer program product provided in the seventh aspect, and the chip provided in the eighth aspect are all configured to perform the method provided in embodiments of this application. Therefore, for beneficial effects that can be achieved, refer to beneficial effects in the corresponding method. Details are not described herein again.

### BRIEF DESCRIPTION OF DRAWINGS

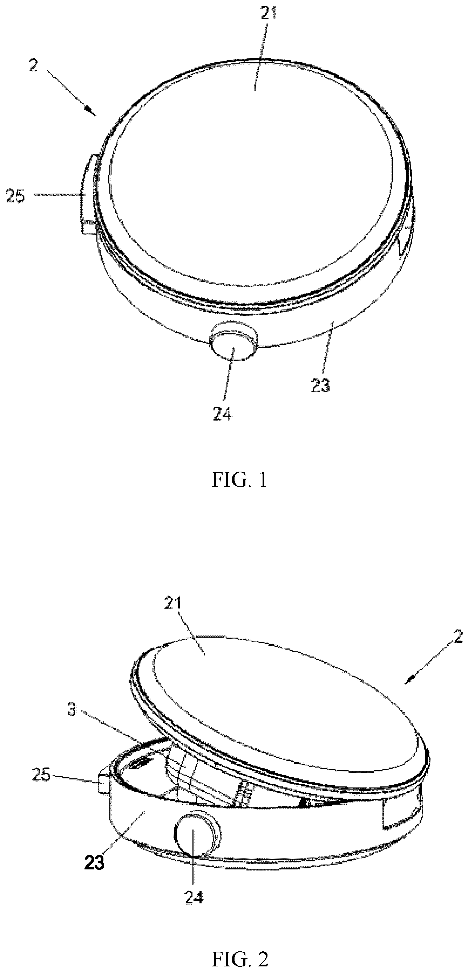

FIG. 1 to FIG. 4 show examples of a wearable device including a wireless audio apparatus;

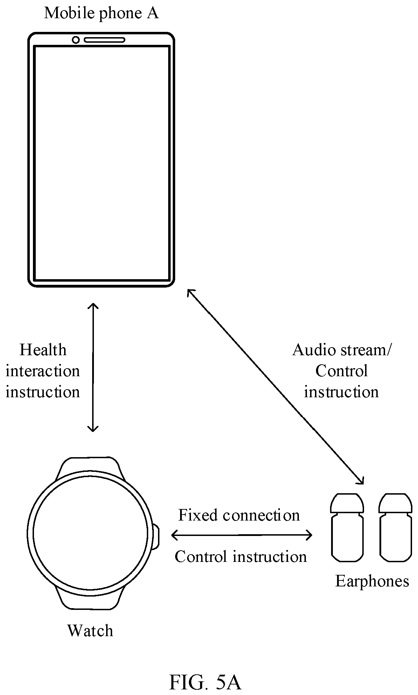

FIG. 5A to FIG. 5D are diagrams of some device connection manners according to an embodiment of this application;

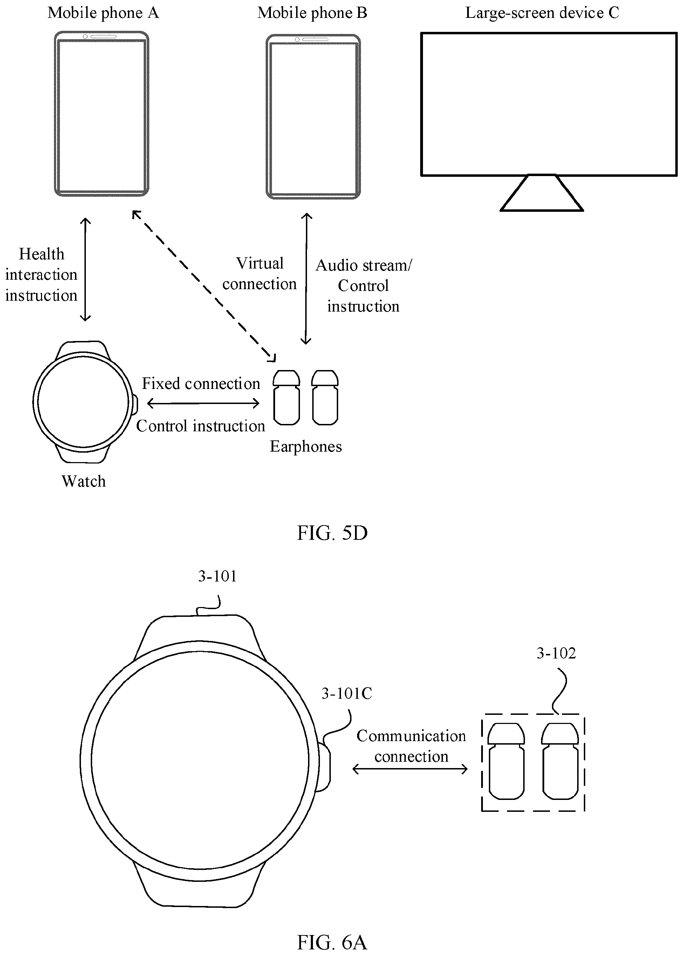

FIG. 6A to FIG. 6J are some diagrams of an audio playing scenario according to an embodiment of this application;

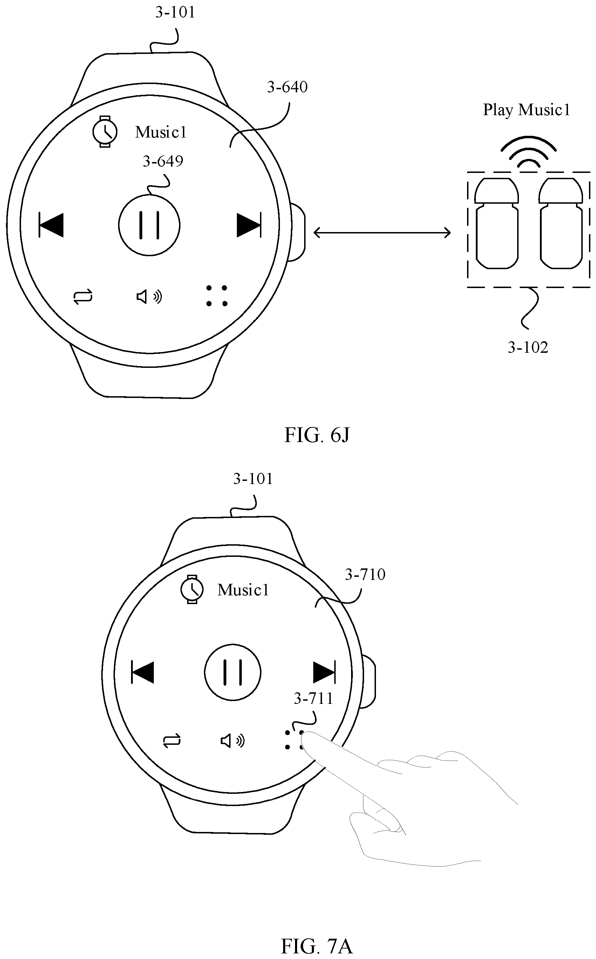

FIG. 7A to FIG. 7C are some diagram of a scenario in which a smartwatch 3-101 controls audio playing according to an embodiment of this application;

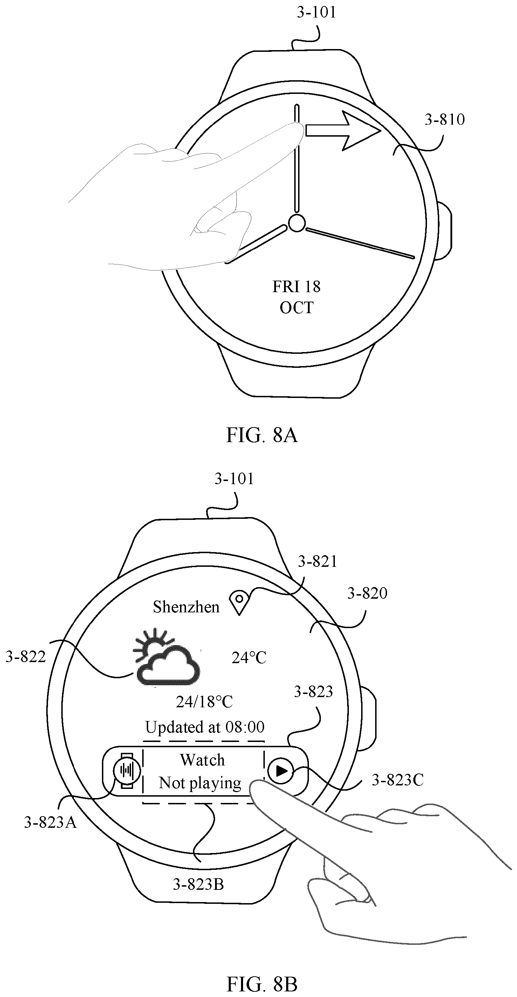

FIG. 8A to FIG. 8F are some diagrams of an audio playing control scenario according to an embodiment of this application;

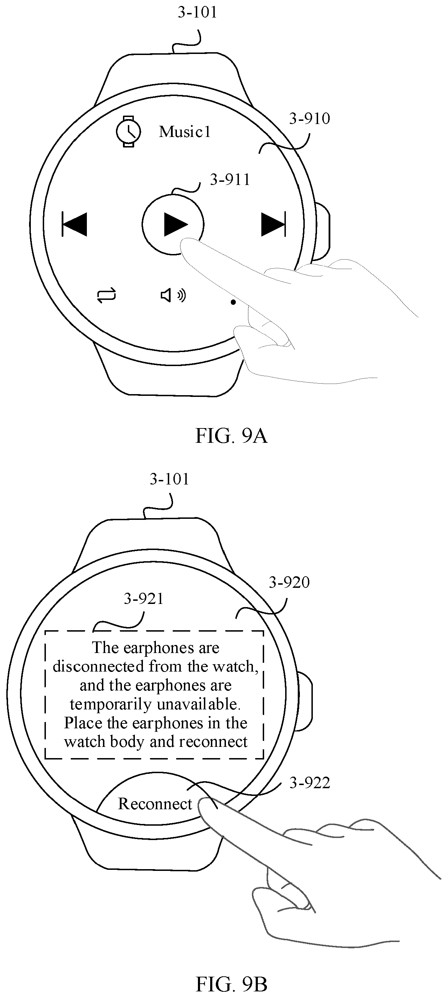

FIG. 9A to FIG. 9C are some diagrams of a scenario in which a smartwatch 3-101 establishes a communication connection to earphones 3-102 according to an embodiment of this application;

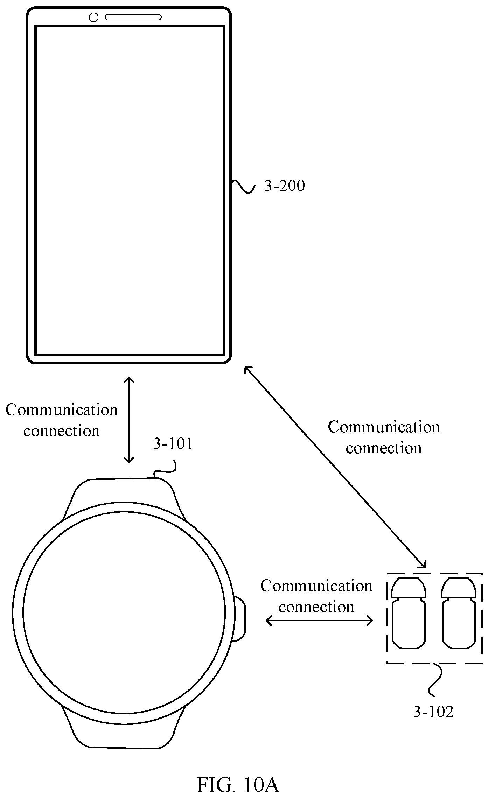

FIG. 10A to FIG. 10M are diagrams of some audio playing scenarios according to an embodiment of this application;

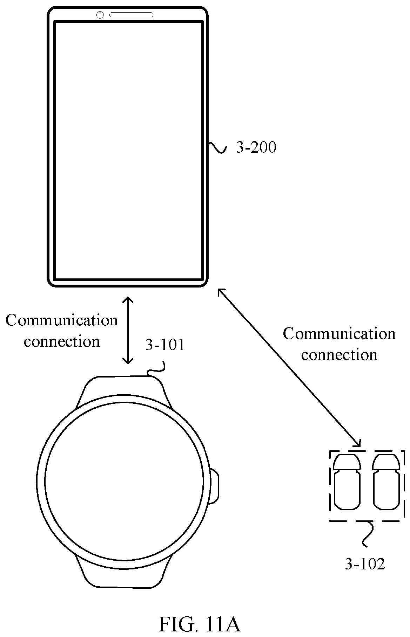

FIG. 11A to FIG. 11E are some diagrams of an audio playing scenario according to an embodiment of this application;

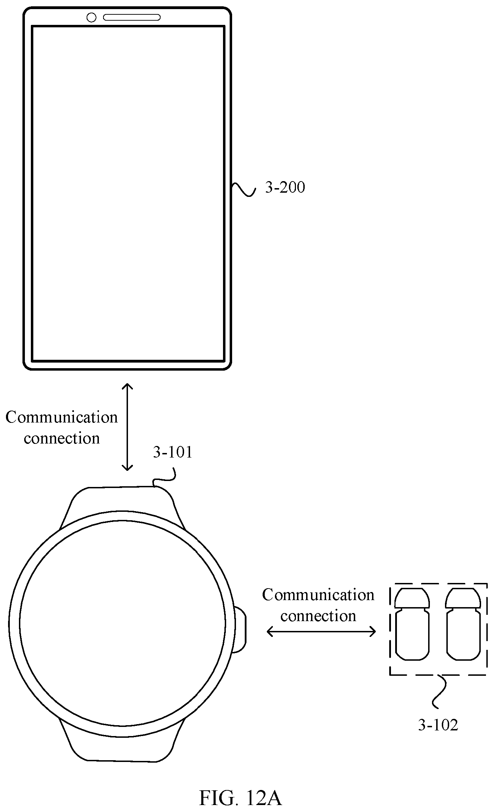

FIG. 12A to FIG. 12E are some diagrams of an audio playing scenario according to an embodiment of this application;

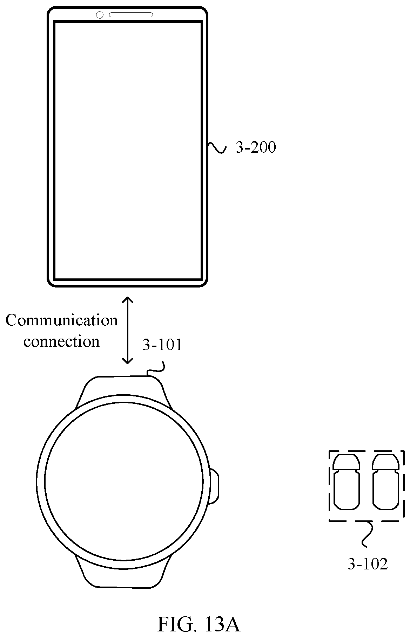

FIG. 13A to FIG. 13E are some diagrams of an audio playing control scenario according to an embodiment of this application;

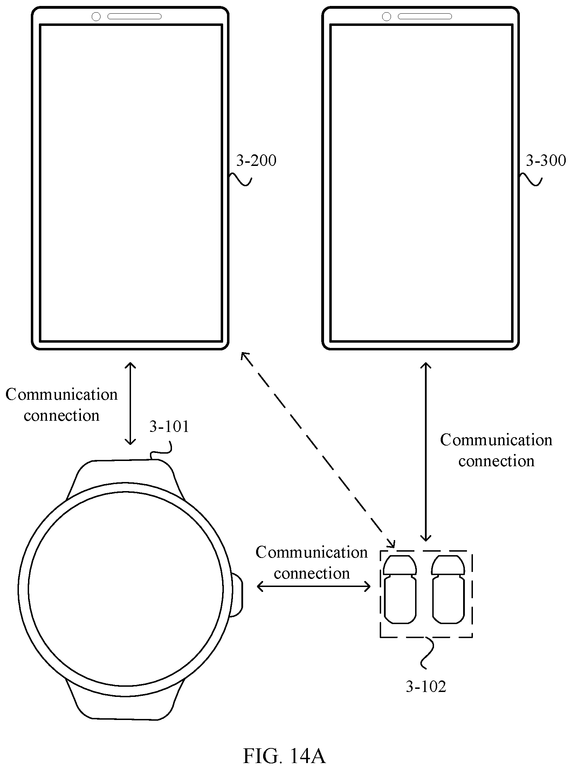

FIG. 14A to FIG. 14M are some diagrams of an audio playing control scenario according to an embodiment of this application;

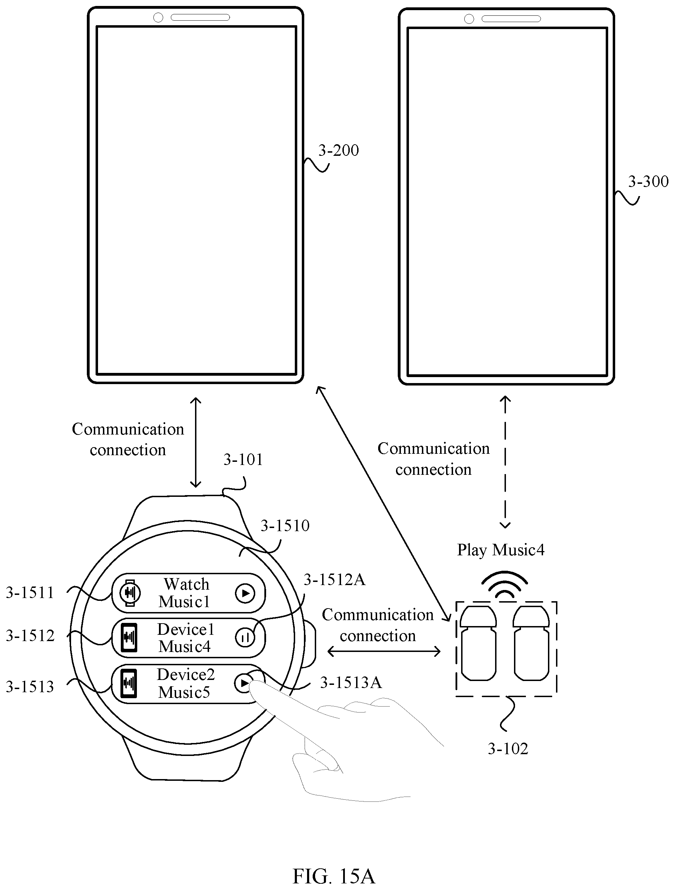

FIG. 15A to FIG. 15F are some diagrams of an audio playing control scenario according to an embodiment of this application;

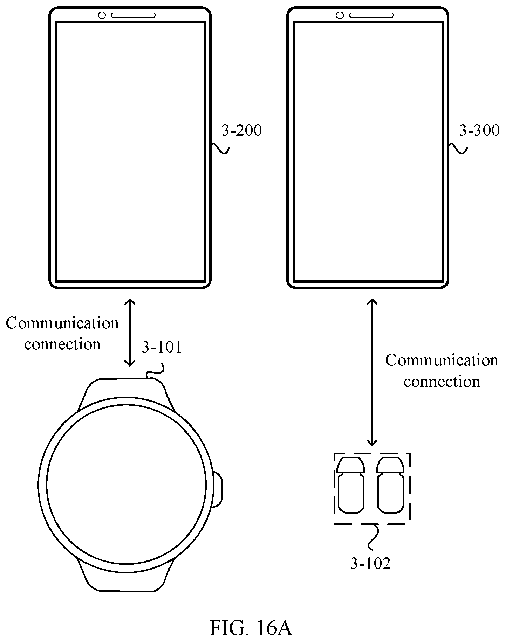

FIG. 16A to FIG. 16G are some diagrams of an audio playing control scenario according to an embodiment of this application;

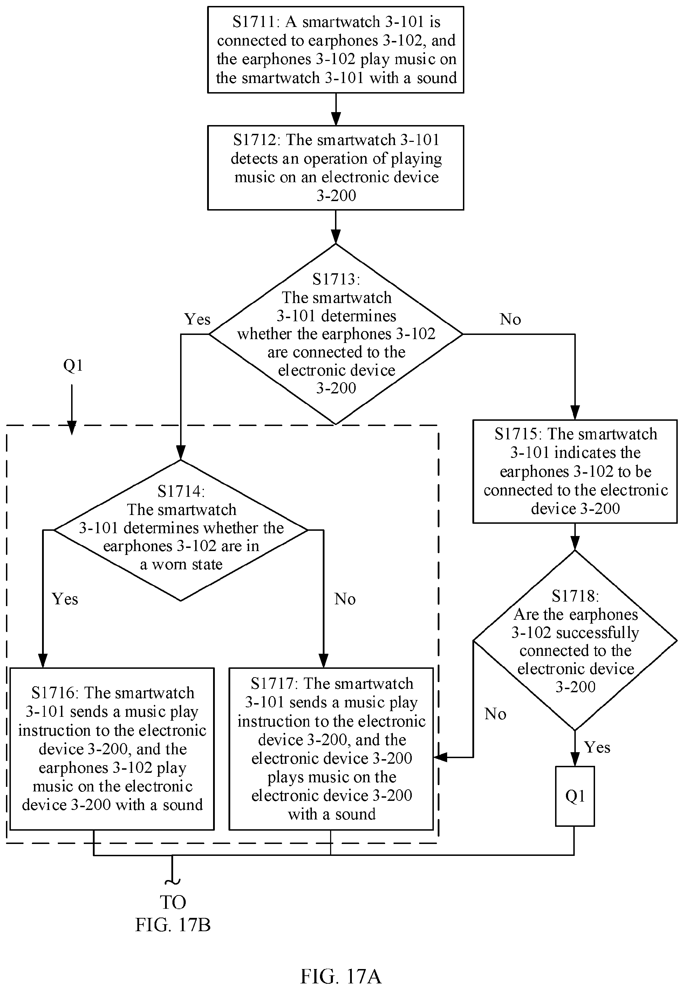

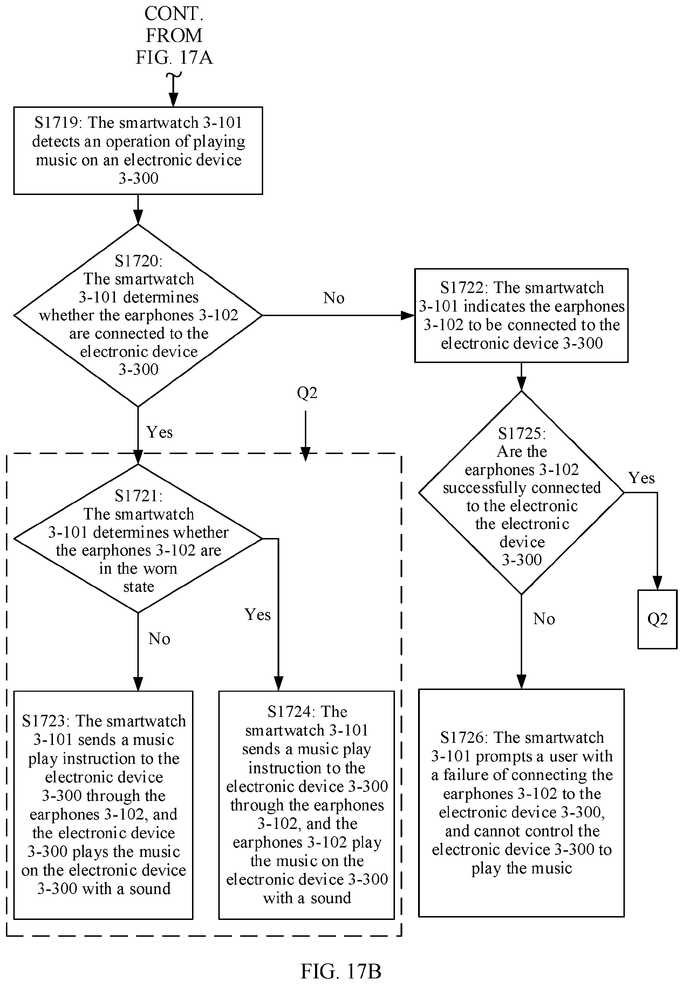

FIG. 17A and FIG. 17B are a flowchart of an audio playing control method according to an embodiment of this application;

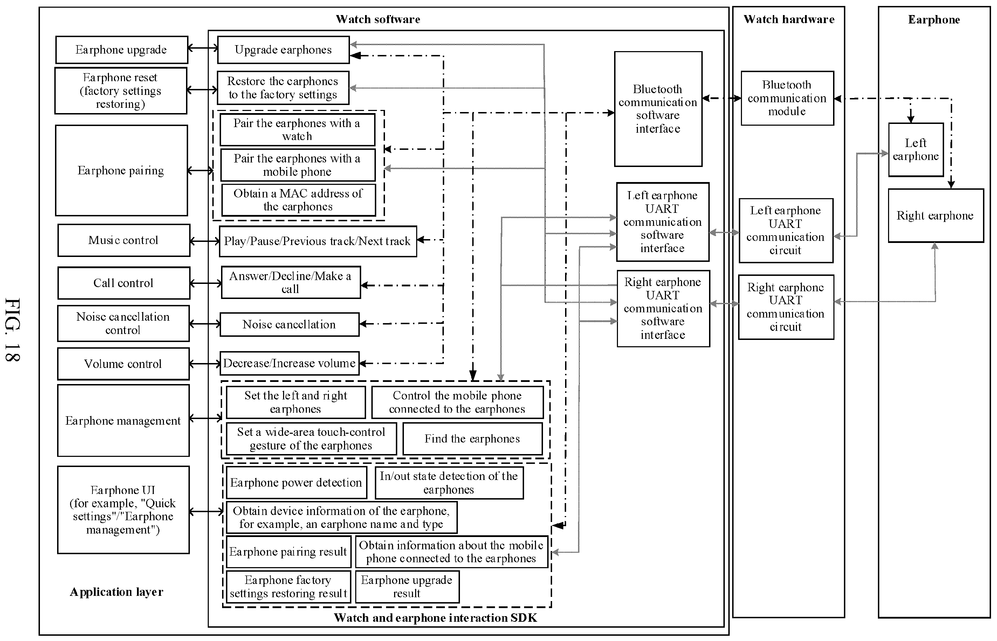

FIG. 18 is a software architecture of a watch and earphones according to an embodiment of this application;

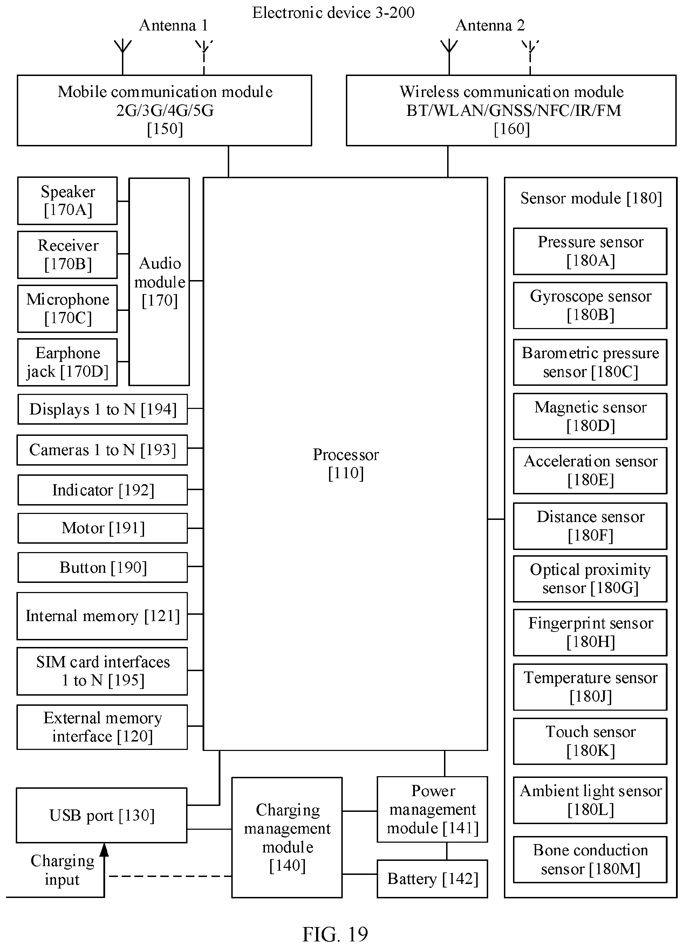

FIG. 19 is a diagram of a structure of an electronic device 3-200 according to an embodiment of this application;

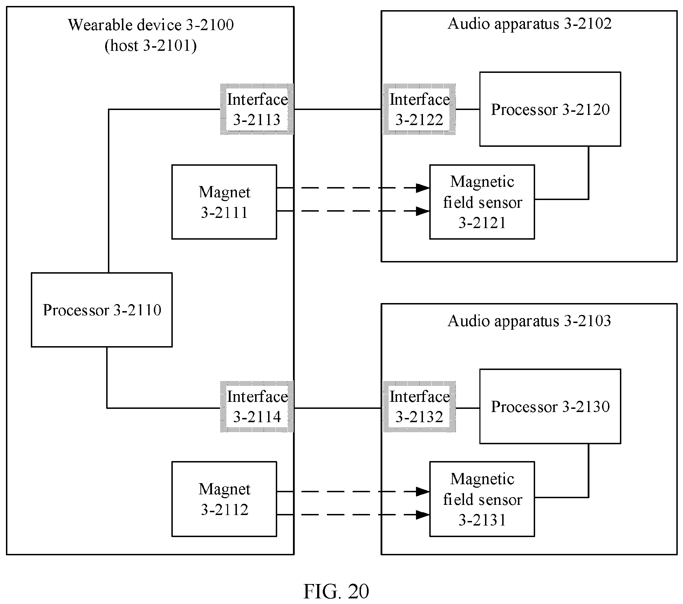

FIG. 20 is a diagram of a structure of a wearable device accommodating an audio apparatus according to an embodiment of this application; and

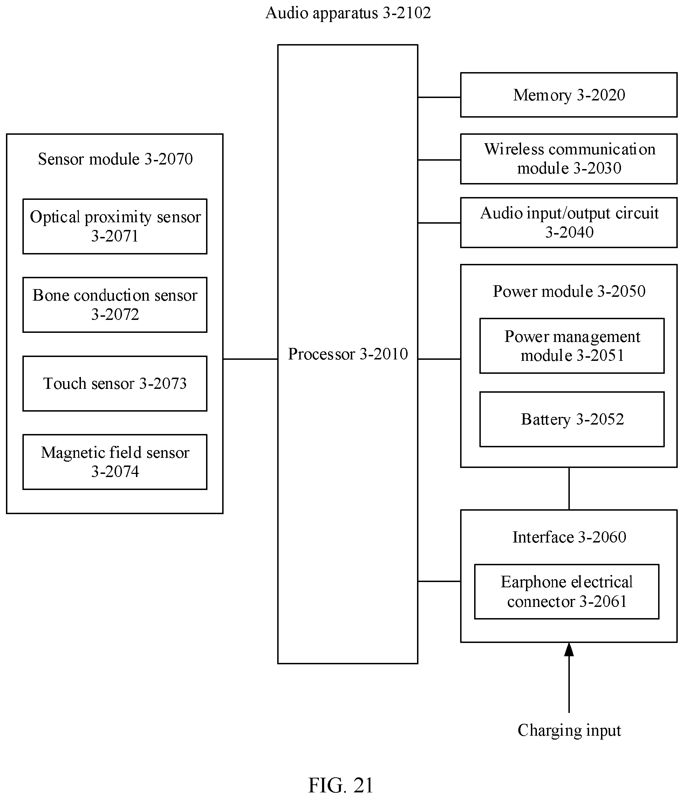

FIG. 21 is a diagram of a structure of an audio apparatus according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a", and "this" of singular forms used in this specification and the appended claims of this application are intended to include expressions such as "one or more", unless otherwise specified in the context clearly. It should be further understood that in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and variants of the terms all mean "include but are not limited to", unless otherwise specifically emphasized in another manner. The term "connection" includes a direct connection and an indirect connection, unless otherwise indicated. "First" and "second" are merely intended for a purpose of description, and shall not be understood as an indication or implication of relative importance or implicit indication of a quantity of indicated technical features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

A term "user interface (user interface, UI)" in the following embodiments of this application is a medium interface for interaction and information exchange between an application (application, APP) or an operating system (operating system, OS) and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

Embodiments of this application provide a wearable device including a wireless audio apparatus, to form a new product form in which the wearable device and the audio apparatus are integrated, so that a user can easily obtain both the wearable device and the audio apparatus. Based on the new product form, an embodiment of this application provides a music play control method. In addition to providing new user experience, this application implements simple and efficient human-machine interaction. The wearable device and the audio apparatus may be treated as one device. The audio apparatus may be considered as a microphone and speaker of the wearable device, and the wearable device may alternatively serve as a display device and micro control center of the audio apparatus. In this way, the user can perform visual control such as volume adjustment, incoming call answering, and music playing on audio playing. The wearable device may be further used as a charger of the audio apparatus, and the like.

The following first describes the new product form and typical product features and functions, and then describes a music playing control method provided in embodiments of this application based on the new product form one by one.

### New product form

FIG. 1 to FIG. 4 show examples of a wearable device including a wireless audio apparatus, and provide a new product form in which the wearable device and the audio apparatus are integrated. The audio apparatus may be earphones, including but not limited to Bluetooth earphones (for example, true wireless stereo (true wireless stereo, TWS) earphones). Certainly, the audio apparatus may alternatively be another audio apparatus, for example, a mini sound box or a portable music player. The wearable device may be an electronic device like a smartwatch, an electronic sphygmomanometer, a smart band, a smart helmet, smart clothing, smart glasses, a mobile wireless fidelity (wireless-fidelity, Wi-Fi) device, or a smart backpack. The following uses an example in which the wearable device is a smartwatch and the audio apparatus is earphones for description.

As shown in FIG. 1 to FIG. 4, the wearable device 1 may include a host 2 and earphones 3. Here, "include" means that the earphones 3 may be accommodated in the host 2.

The host 2 may include a first part 21 and a second part 23. The first part 21 may be referred to as a cover body, and the second part 23 may be referred to as a main body. The host 2 may further include a wrist strap, and the wrist strap may be connected to two opposite sides of the second part 23. The earphones 3 may include a first earphone 31 and a second earphone 32. Structures of the first earphone 31 and the second earphone 32 may be completely consistent.

FIG. 1 shows that the host 2 is in a closed state. In this case, the first part 21 and the second part 23 are closed. When the host 2 is closed, the first part 21 and the second part 23 may enclose accommodation space, and the earphones 3 are accommodated in the accommodation space. A groove part that is of the second part 23 and that participates in forming the accommodation space may be referred to as an earphone compartment, and may specifically include a left-ear earphone compartment and a right-ear earphone compartment. The earphone compartment may also be referred to as an earphone slot.

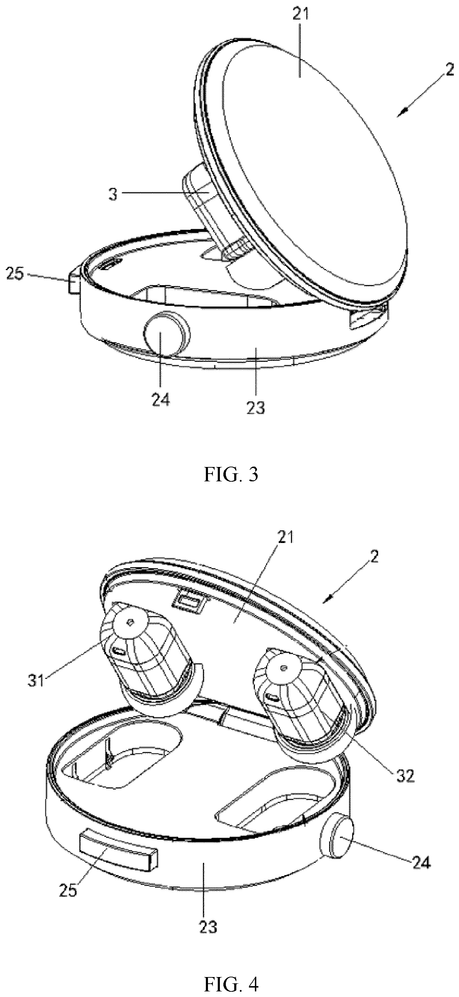

FIG. 2 to FIG. 4 show that the host 2 is in an open state. In this case, the first part 21 may be opened at a specific angle relative to the second part 23. For example, an opening angle a of the first part 21 in FIG. 2 may be approximately 15 degrees. An opening angle b of the first part 21 in FIG. 3 may be approximately 75 degrees. It may be understood that a specific value of an opening angle in a case in which the first part 21 is at an extreme location may be designed based on a product requirement, for example, may be greater than or equal to 90 degrees. This is not limited to the foregoing description. As shown in FIG. 2 to FIG. 4, when the host 2 is in the open state, the earphones 3 may be detached from the second part 23 and attached to the first part 21. This design facilitates a user to take out and place the earphones 3. The attachment may be implemented by magnetically attracting an earphone magnet by an attracting magnet mounted on the first part 21. Certainly, when the host 2 is in the open state, the earphones 3 may alternatively not be detached from the second part 23, but are accommodated in the earphone compartment in the second part 23.

Not limited to the open state shown in FIG. 2 to FIG. 4, that the host 2 is in the open state may alternatively mean another state. For example, the first part 21 translates relative to the second part 23 until projections of the first part 21 and the second part 23 on a same plane do not overlap or slightly overlap. In this way, the earphones located in the earphone compartment in the second part 23 are fully exposed to the outside and available to the user.

As shown in FIG. 1 to FIG. 3, the host 2 may further include a function button 24 and an open button 25. The function button 24 is configured to be pressed and/or rotated by the user, so that the host 2 implements a corresponding function, for example, selection, confirmation, or image display switching. The function button 24 may be, for example, a power-on/off button. The open button 25 may be mounted on the second part 23. The open button 25 may have a lock structure, so that the open button 25 can cooperate with a lock structure in the first part 21 to implement unlocking and locking of the host 2. Alternatively, the open button 25 may be mounted on the first part. In this case, the second part also has a lock structure. The opening button cooperates with the lock structure in the second part, to implement unlocking and locking of the host.

It may be understood that the wearable device may have an audio apparatus slot. The audio apparatus slot may be configured to accommodate the audio apparatus. The audio apparatus may include a first audio apparatus and a second audio apparatus. When the audio apparatus is earphones, the first audio apparatus may be the first earphone 31, and the second audio apparatus may be the second earphone 32. The audio apparatus slot may also include a first audio apparatus slot and a second audio apparatus slot. The first audio apparatus slot and the second audio apparatus slot may be configured to accommodate the first audio apparatus and the second audio apparatus. When the audio apparatus is earphones, the audio apparatus slot may be the earphone compartment (or the earphone slot). The first audio apparatus slot may be the left-ear earphone compartment. The second audio apparatus slot may be the right-ear earphone compartment.

The foregoing section briefly describes composition of the wearable device including the wireless audio apparatus. A person skilled in the related art can further understand typical product features and functions of the wearable device from the following content.

### Typical product features and functions

### 1. When the host 2 is opened, the earphones 3 are attracted to the first part 21 of the host 2.

Refer to FIG. 1 and FIG. 4. When the host 2 is in the closed state, the earphones 3 are accommodated in the space enclosed by the first part 21 and the second part 23. The first part 21 may have a first host attracting magnet, and a magnet (also referred to as an earphone magnet) may also be correspondingly configured in the earphones 3. Refer to FIG. 1 to FIG. 4. When the host 2 is gradually opened from the closed state, because there is a magnetic attraction force between the earphone magnet and the first host attracting magnet, the earphones 3 are attracted to the first part 21.

The second part 23 may have a second host attracting magnet, and the second host attracting magnet may also be magnetically attracted to the earphone magnet. Comparatively, a magnetic field of the first host attracting magnet is stronger, and the magnetic attraction force between the first host attracting magnet and the earphone magnet is larger; and a magnetic field of the second host attracting magnet is weaker, and a magnetic attraction force between the second host attracting magnet and the earphone magnet is smaller. When the host 2 is gradually opened from the closed state, because the magnetic attraction force of the first host attracting magnet is greater than the magnetic attraction force of the second host attracting magnet, the earphones 3 are attracted to the first part 21, and rotate relative to the second part 23 with the first part 21.

### 2. Detection of the open/closed state of the host 2

A status detection magnet may be mounted in the second part 23 of the host 2.

The first part 21 of the host 2 may have a magnetic field sensor. The magnetic field sensor may be referred to as a first magnetic field sensor, and is configured to detect a magnetic flux of the status detection magnet in the second part 23 of the host 2. The magnetic flux that is of the status detection magnet and that is detected by the first magnetic field sensor may be directly proportional to a spacing between the first magnetic field sensor and the status detection magnet. When the host 2 is in the closed state, the first magnetic field sensor detects a maximum magnetic flux. After the host 2 is completely opened, the first magnetic field sensor detects a minimum magnetic flux.

When the host 2 is gradually opened from the closed state, the spacing between the first magnetic field sensor and the status detection magnet gradually increases, and the magnetic flux that is of the status detection magnet and that is detected by the first magnetic field sensor tends to decrease. When the magnetic flux detected by the first magnetic field sensor is less than a first threshold, it may be considered that the host 2 is in the open state.

On the contrary, when the host 2 is gradually closed from the open state, the spacing between the first magnetic field sensor and the status detection magnet gradually decreases, and the magnetic flux that is of the status detection magnet and that is detected by the first magnetic field sensor tends to increase. When the magnetic flux detected by the first magnetic field sensor is greater than a second threshold, it may be considered that the host 2 is in the closed state.

When it is determined that the host 2 is in the open state, a display on the host 2 may perform corresponding interface display.

When it is determined that the host 2 is in the open state and the earphones 3 are in the host 2 (how to detect whether the earphones 3 are located in the host 2 is described below), a communication electrode of the host 2 may send a signal to a communication electrode of the earphones 3, to wake up the earphones 3. When it is determined that the host 2 is in the closed state and the earphones 3 are located in the host 2, the host 2 may start foreign object detection, and start charging of the earphones 3 after determining that no foreign object enters the host 2.

Locations of the first magnetic field sensor and the status detection magnet may be interchanged. To be specific, the first magnetic field sensor may be in the second part 23, and the status detection magnet may be in the first part 21.

Not limited to the status detection magnet and the magnetic field sensor, the open/closed state of the host 2 may be further detected in another detection manner. For example, a pair of contact detection spring plates may be respectively configured on the first part 21 and the second part 23, and whether the host 2 is in the closed state or the open state may be determined based on a detected contact state. For another example, a pair of an infrared transmitter and an infrared receiver may be respectively configured on the first part 21 and the second part 23, and whether the host 2 is in the closed state or the open state may be determined based on received signal strength.

When it is detected that the host 2 is in the open state, the host 2 may perform corresponding interface display on the display 211. The interface display is described in detail in the following embodiments. Details are not described here.

### 3. In-position detection of the earphones 3

An in-position status of the earphones 3 may include: Two earphones are in compartments, a single earphone is in a compartment, and the two earphones are not in the compartments (including a case in which the two earphones are attracted to the first part 21). Here, a "compartment" is an earphone compartment that is in the second part 23 and that is configured to accommodate earphones. There may be two earphone compartments, and the first earphone 31 and the second earphone 32 may be respectively accommodated in different earphone compartments.

The in-position detection of the earphones may be performed by the host 2. The second part 23 of the host 2 may have a magnetic field sensor. The magnetic field sensor may be referred to as a second magnetic field sensor, and is configured to detect a change of a magnetic flux of the earphone magnet in the earphones. The two earphone compartments in the second part 23 may be respectively provided with magnetic field sensors, and are respectively configured to detect in-position statuses of the first earphone 31 and the second earphone 32. The magnetic flux that is of the earphone magnet and that is detected by the second magnetic field sensor may be directly proportional to a spacing between the second magnetic field sensor and the earphone magnet. When the magnetic flux detected by the second magnetic field sensor is large, for example, greater than a specific threshold, it may be considered that the earphones are in the compartment. When the magnetic flux detected by the second magnetic field sensor is small, for example, less than the specific threshold, it may be considered that the earphones are not in the compartment.

The in-position detection of the earphones may alternatively be performed by the earphones. The earphones may also have a magnetic field sensor. The magnetic field sensor may be referred to as a third magnetic field sensor, and may be configured to detect a change in the magnetic flux of the status detection magnet in the second part 23 of the host 2. The magnetic flux that is of the status detection magnet and that is detected by the third magnetic field sensor may be directly proportional to a spacing between the third magnetic field sensor and the status detection magnet. When the earphones are in the compartment, the magnetic flux detected by the third magnetic field sensor is large, for example, greater than a specific threshold. When the earphones are not in the compartment, the magnetic flux detected by the third magnetic field sensor is small, for example, less than the specific threshold.

The host 2 may display the in-position status of the earphones 3 on the display 211. For example, when the user presses the function button 24 to light up the display 211, an in-position earphone is displayed on the display 211, and an out-of-position earphone is displayed to be in a "vacant" state. The in-position status of the earphones 3 may also be displayed on an electronic device like a mobile phone that is paired with and connected to the wearable device. Display of the in-position status of the earphones is described in detail in subsequent embodiments. Details are not described here.

### 4. Charging

The earphones may have a charging electrode. After the earphones are placed in the earphone compartment, the charging electrode can be in contact with a charging electrode in the earphone compartment, to obtain power supply.

When the host 2 is not coupled to an external power supply, the host 2 supplies power to the earphones. When the host 2 is coupled to the external power supply, the host 2 and the earphones may be charged together. The earphones may be in contact with the charging electrode in the earphone compartment through the charging electrode of the earphones, to obtain power supply from the external power supply. A manner of charging through the external power supply may be wired charging or wireless charging. To implement wireless charging, the host 2 (for example, the bottom of the second part 23 of the host 2) needs to be provided with a wireless charging coil.

Here, coupling the external power supply may mean that the external power supply is directly connected in a wired manner or is in an effective contact range that is required by wireless charging and that is from the external power supply through the wireless charging coil.

Charging of the host 2 and the earphones may be further optimized based on a specific scenario. A charging method is described in the following embodiments. Details are not described here.

Not limited to the typical features and functions described in the foregoing 1 to 4, the wearable device including the wireless audio apparatus may further have other features or functions, for example, a foreign object detection function and charging overheat protection.

The following describes, by using an example in which the wearable device is a watch and the wireless audio apparatus is Bluetooth earphones, a series of methods provided in embodiments of this application based on the wearable device including the wireless audio apparatus.

**Before the audio playing control method is described, several device connection manners are first described. A wireless communication connection in a device connection manner may be a Bluetooth connection, a Wi-Fi connection, or the like, or a combination of a plurality of wireless communication connections.**

**FIG. 5A** **shows a first connection manner, which may be vividly referred to as a "triangular connection".** The "triangular connection" may be established based on a method of "one-time pairing of an entire device", or may be converted from a "U-shaped connection". This will be described in the following content. Details are not described here.

In the "triangular connection", wireless communication connections are established between a watch and earphones, between the watch and a mobile phone A, and between the mobile phone A and the earphones. Certainly, the mobile phone may be replaced with another electronic device, for example, a tablet computer, a notebook computer, a smart television, or a large-screen device.

A connection between the watch and the earphones may be referred to as a "fixed connection", and establishment of the connection may be automatically performed by a device, and does not need to be triggered by a user, thereby reducing use complexity. For example, when the watch is powered on for the first time and the earphones are in position, the connection may be automatically established. For the user, the connection seems to "exist naturally", and therefore is referred to as a "fixed connection (or an inherent connection)".

The "fixed connection" may be used for data transmission between the watch and the earphones. In a direction from the watch to the earphones, transmitted data may include a noise cancellation instruction and a volume control instruction. The control instruction may be generated when the user performs a control operation on the watch or the mobile phone A by using a series of graphical user interfaces. In the direction from the watch to the earphones, the transmitted data may further include an audio stream, to trigger the earphones to play audio on the watch. In a direction from the earphones to the watch, transmitted data may include earphone status information like power of the earphones, wearing detection data, and the like. The wearing detection data may include detection data about whether the earphones are worn, and include detection data such as a wearing direction and displacement in a wearing process that are obtained through a motion sensor like a gyroscope. The latter detection data may be used to recognize left and right earphones. The "fixed connection" may be further used by the earphones to forward data between the mobile phone A and the watch, for example, health interaction data.

A connection between the watch and the mobile phone A may be used for data transmission between the watch and the mobile phone A. In a direction from the mobile phone A to the watch, transmitted data may include an exercise report, a reminder, and the like in health interaction data. In a direction from the watch to the mobile phone A, transmitted data may include device information (for example, MAC addresses and device names) of the watch and the earphones, statuses of the watch and the earphones (for example, states of charge and an earphone in-position status), exercise data and physiological data such as blood oxygen and a heart rate in the health interaction data, and the like. In the direction from the watch to the mobile phone A, a connection between the watch and the mobile phone A may be further used to transmit an audio control instruction from the watch, for example, a music play instruction like a previous/next track instruction, and a call control instruction like an answering/declining instruction, to trigger the mobile phone A to switch music, answer/decline an incoming call, and the like, and finally affect sound rendered by the earphones. In other words, for audio of the mobile phone A, the user may perform a control operation on the watch.

A connection between the mobile phone A and the earphones may be used for data transmission between the mobile phone A and the earphones. In a direction from the mobile phone A to the earphones, transmitted data may include an audio stream, for example, a streaming audio stream generated during music playing, and a voice audio stream generated during a call. This is not limited thereto. The connection may also be used by the mobile phone A to directly transmit a noise cancellation instruction or a volume decrease/increase instruction to the earphones. In a direction from the earphones to the mobile phone A, transmitted data may include audio collected by a microphone of the earphones, for example, voice audio collected by the microphone of the earphones in a call scenario, or a voice instruction like a "previous/next track" instruction in a music playing scenario. The connection may also be used by the earphones to directly transmit earphone status information such as the power of the earphones, the wearing detection data, and the like to the mobile phone A.

In the "triangle connection", after receiving the data from the earphones, the watch may correspondingly display the data on a watch screen, so that the user can learn about an earphone status like the power of the earphones and a wearing status of the earphones. After receiving the data from the watch, the mobile phone A may correspondingly display the data on a screen of the mobile phone A, so that the user learns of statuses of the watch and the earphones (for example, states of charge and whether the earphones are in position), an exercise status (for example, a running speed) of the user, a physiological status (for example, the blood oxygen and the heart rate) of the user, and the like.

It can be learned that in the "triangle connection", the earphones may play audio from the watch or the mobile phone A. The "triangle connection" allows the user to control, through the watch, audio playing on the mobile phone A and answer/decline an incoming call of the mobile phone A, and the user does not need to find the mobile phone A (which may be placed in a bag) to perform these control operations.

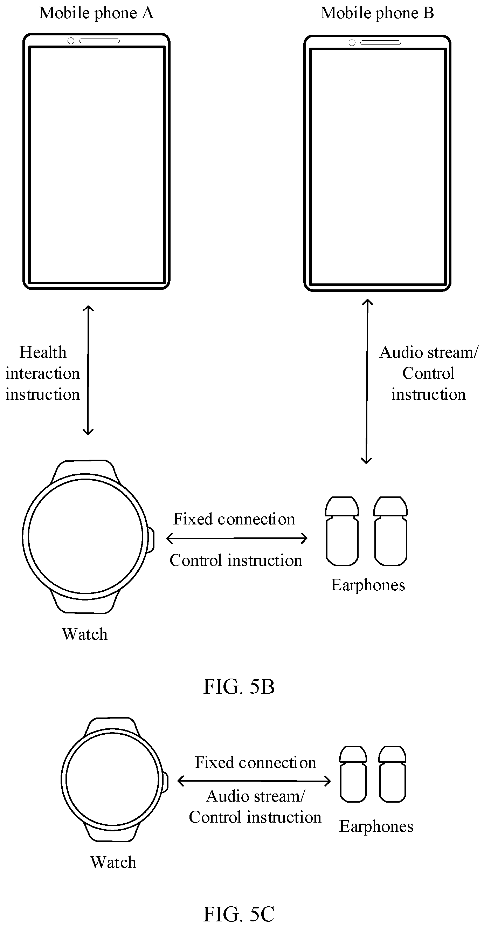

**FIG. 5B** **shows a second connection manner, which may be vividly referred to as a "U-shaped connection".** The "U-shaped connection" may be generated because earphones independently perform pairing with a mobile phone or an entire device of a watch and the earphones changes a mobile phone. This will be described in the following content. Details are not described here.

In the "U-shaped connection", wireless communication connections are established between the watch and the earphones, between the watch and a mobile phone A, and between the earphones and a mobile phone B.

A "fixed connection" between the watch and the earphones may be used for data transmission between the watch and the earphones. In a direction from the watch to the earphones, transmitted data may include an audio control instruction like a noise cancellation instruction and a volume decrease/increase instruction, and an audio stream sent by the watch to the earphones. In a direction from the earphones to the watch, transmitted data may include power of the earphones, wearing detection data, and the like. In addition, in the direction from the earphones to the watch, the transmitted data may further include device information of the mobile phone B connected to the earphones, for example, a device name and a device model. In other words, even if the watch is not connected to the mobile phone B in the "U-shaped connection", the watch can still learn of information about the mobile phone connected to the earphones.

The connection between the watch and the mobile phone A may be used for data transmission between the watch and the mobile phone A. In a direction from the mobile phone A to the watch, transmitted data may include an exercise report, a reminder, and the like in the health interaction data. In a direction from the watch to the mobile phone A, transmitted data may include device information (for example, MAC addresses and device names) of the watch and the earphones, statuses of the watch and the earphones (for example, states of charge and an earphone in-position status), exercise data and physiological data such as blood oxygen and a heart rate in the health interaction data, and the like.

A connection between the mobile phone B and the earphones may be used by the mobile phone B to transmit, to the earphones, an audio stream, for example, a streaming audio stream generated during music playing or a voice audio stream generated during a call. This is not limited thereto. The connection may also be used by the mobile phone B to directly transmit a control instruction like a noise cancellation instruction or a volume decrease/increase instruction to the earphones. The connection between the mobile phone B and the earphones may be used by the earphones to transmit device information (for example, a device name) of the earphones, a status (for example, the power) of the earphones, the wearing detection data, and the like to the mobile phone B. The connection may be further used by the earphones to transmit, to the mobile phone B, audio collected by a microphone of the earphones, for example, voice audio collected by the microphone of the earphones in a call scenario, or a voice instruction like a "previous/next track" instruction in a music playing scenario.

In the "U-shaped connection", after receiving the data from the earphones, the watch may correspondingly display the data, so that the user can learn about an earphone status like the power of the earphones and a wearing status of the earphones. After receiving the data from the watch, the mobile phone A may correspondingly display the data on a screen of the mobile phone A, so that the user learns of statuses of the watch and the earphones (for example, states of charge and whether the earphones are in position), an exercise status (for example, a running speed) of the user, a physiological status (for example, the blood oxygen and the heart rate) of the user, and the like. After receiving the data from the earphones, the mobile phone B may correspondingly display the data on a screen of the mobile phone B, so that the user learns of the earphone status (for example, the power). A related user interface will be described in detail in the subsequent implementations. Details are not described here.

It can be learned that, different from the "triangular connection", in the "U-shaped connection", the earphones and the watch are no longer connected to a same mobile phone, but are respectively connected to different mobile phones. The "U-shaped connection" allows the user to use the earphones to play audio of the mobile phone B, and use the watch to exchange health data with the mobile phone A. In other words, the watch and the earphones may serve different devices.

Further, the "U-shaped connection" can further provide richer user experience.

The user may also control, through the watch, the earphones to play audio on the mobile phone B, for example, control, through the watch, the earphones to play a next track of music on the mobile phone B, answer an incoming call of the mobile phone B, and the like. In other words, the "fixed connection" between the watch and the earphones may further serve music playing and incoming call answering/declining of the mobile phone B.

Details are described below.

In the direction from the earphones to the watch, the "fixed connection" may be used to transmit interface description information of a music playing interface and an incoming call screen from the mobile phone B, for example, a music name and a play control name, for example, a name, an incoming call number, and a home location of a calling party. Correspondingly, the watch may display a music playing interface and an incoming call screen on the watch based on the interface description information, so that the user can control, through the watch, audio playing of the mobile phone B. However, because a screen of the watch and the screen of the mobile phone B are usually different in size, shape, and the like, the music playing interface/incoming call screen displayed on the watch is naturally different from the music playing interface/incoming call screen displayed on the mobile phone B, even if both the watch and the mobile phone B provide a user interface for same audio.

In addition, in the direction from the watch to the earphones, the "fixed connection" may be used to transmit an audio control instruction from the watch, for example, a music play instruction like a previous/next track instruction, and a call control instruction like an answering/declining instruction. These control instructions are generated when the user performs a control operation on the watch by using the music playing interface and the incoming call screen. Then, these instructions are forwarded to the mobile phone B through the earphones, to trigger the mobile phone B to switch music, answer/decline an incoming call, and the like, and finally affect sound rendered by the earphones. In other words, for audio of the mobile phone B, the mobile phone B needs to be notified of the control operation performed by the user on the watch B through the earphones, so that the mobile phone B can learn of a control requirement of the user, and perform corresponding music playing control and call control.

To avoid a conflict that occurs when both the mobile phone A and the mobile phone B need to use the watch to display an interface, the watch may preferentially display an interface for the mobile phone A, or may display an interface for the mobile phone B in a manner such as a small window or a floating window while displaying an interface for the mobile phone A in full screen. An interface to be displayed may be further determined based on a function selected by the user on the watch. For example, if the user selects "Health", health interaction data between the watch and the mobile phone A is displayed. If the user selects "Current music", audio of the mobile phone B currently played by the earphones is displayed. In actual application, the conflict may alternatively be resolved according to another policy. This is not limited herein.

The user may also use the earphones to play audio of the mobile phone A, and control, through the watch, the earphones to play the audio on the mobile phone A.

Details are described below.

The communication connection between the watch and the mobile phone A and the "fixed connection" between the watch and the earphones may be further used to transmit the audio stream of the mobile phone A. In other words, the audio stream of the mobile phone A may be forwarded to the earphones through the watch, to implement rendering and playing.

In addition, in the direction from the mobile phone A to the watch, the communication connection between the watch and the mobile phone A may be further used to transmit interface description information of a music playing interface and an incoming call screen of the mobile phone A to the watch. Correspondingly, the watch may display a music playing interface and an incoming call screen on the watch based on the interface description information, so that the user controls, through the watch, audio playing of the mobile phone A. In the direction from the watch to the mobile phone A, the communication connection between the watch and the mobile phone A may be further used to transmit an audio control instruction generated by the user on the watch, for example, a music play instruction like a previous/next track instruction, and a call control instruction like an answering/declining instruction, to trigger the mobile phone A to switch music, answer/decline an incoming call, and the like, and finally affect sound rendered by the earphones. The "fixed connection" may be further used to transmit a volume control instruction, a noise cancellation instruction, and the like from the mobile phone A, to control the earphones to adjust volume, perform noise cancellation, and the like.

To avoid a conflict that occurs when both the mobile phone A and the mobile phone B need to use the earphones to play audio, the watch may receive, only when the mobile phone B does not use the earphones to play audio, an audio stream from the mobile phone A and forward the audio stream to the earphones. In other words, the earphones may preferentially play the audio of the mobile phone B. The watch may determine, based on an audio service priority, which audio is to be preferentially played. For example, a priority of a phone call is higher than a priority of music, and the watch and the mobile phone agree on this priority policy. For example, if the mobile phone A receives an incoming call when the mobile phone B plays music, the watch may send a playing pause instruction to the mobile phone B through the earphones, and forward an audio stream of the mobile phone A to the earphones. In actual application, the conflict may alternatively be resolved according to another policy. This is not limited herein.

**FIG. 5C** **shows a third connection manner, namely, the "fixed connection" mentioned above.** The "fixed connection" may be generated due to automatic pairing of a watch and earphones. This will be described in the following content. Details are not described here.

A scenario to which the "fixed connection" is applicable may be an exercise scenario. In the exercise scenario, the earphones may play audio from the watch. The "fixed connection" may be mainly used to transmit an audio stream that is sent by the watch to the earphones and a control instruction like a noise cancellation instruction or a volume decrease/increase instruction. Certainly, the "fixed connection" may further be used to transmit power of the earphones and wearing detection data that are sent by the earphones to the watch, a voice instruction collected by a microphone of the earphones, for example, a voice instruction like a "previous/next track" instruction in a music playing scenario, and the like.

**FIG. 5D** **shows a fourth connection manner, which may be vividly referred to as "2+1 connection".** "2+1" in the "2+1 connection" is described from a perspective of earphones, where "2" indicates two physical connections respectively established between the earphones and a watch and between the earphones and a mobile phone, and "1" indicates a virtual connection established between the earphones and another device (for example, a large-screen device).

If the watch and earphones are connected to a same mobile phone, for example, a mobile phone A, the "2+1 connection" is a "triangle connection" plus a virtual connection. If the watch and the earphones are respectively connected to different mobile phones, for example, mobile phones A and B, the "2+1 connection" is a "U-shaped connection" plus a virtual connection.

The "2+1 connection" may be generated because the earphones are paired with and connected to a new mobile phone, and keep a virtual connection with an old mobile phone. This will be mentioned in the following content. Details are not described here.

Not limited to one virtual connection, the earphones can further establish more virtual connections with more devices, to form a "2+2 connection", a "2+3 connection", or even a more complex communication architecture. In this way, the Bluetooth earphone can automatically switch, through the virtual connection, to process audio services of a plurality of electronic devices. Technologies of the "2+1 connection", the "2+2 connection", and even the "2+3 connection" are not limited in this application. For example, Bluetooth dual-connection and Bluetooth multi-connection technologies recorded in the following two patent documents may be used: Chinese Patent Application No. 201910314715.7, entitled "BLUETOOTH CONNECTION METHOD, DEVICE, AND SYSTEM"; and Chinese Patent Application No. 202011292453.8, entitled "AUDIO CONTROL SYSTEM". The entire content of the two patent documents is hereby incorporated herein by reference.

This application provides an audio playing control method. A smartwatch 3-101 may control a plurality of electronic devices (for example, the smartwatch 3-101, an electronic device 3-200, and an electronic device 3-300) to play audio. In addition, the smartwatch 3-101 may be used as a control and management device of earphones 3-102 to control audio played with a sound by the earphones 3-102. In this way, a user may control, through the smartwatch 3-101, the earphones 3-102 to play audio on a specified device with a sound. According to the foregoing method, a conflict that a plurality of devices preempt the earphones 3-102 can be avoided, and user experience of listening to audio through the earphones 3-102 can be improved.

It should be noted that the smartwatch 3-101 may be the wearable device 1 shown in FIG. 1 to FIG. 4. The earphones 3-102 may be an audio apparatus that can be accommodated in the wearable device 1, for example, the earphones 3 shown in FIG. 1 to FIG. 4. The earphones 3-102 may include the first earphone 31 and the second earphone 32 shown in FIG. 4.

Herein, an example in which the wearable device is the smartwatch 3-101 and the audio apparatus is the earphones 3-102 is used, and some audio playing control scenarios provided in embodiments of this application are described based on the foregoing device connection manner.

In embodiments of this application, audio played by a device may include but is not limited to music, radio, an audio book, and the like. In subsequent embodiments of this application, an example in which the played audio is music is specifically used for description.

**FIG. 6A to FIG. 6J** **show an example of a scenario in which the earphones 3-102 play audio on the smartwatch 3-101.**

As shown in FIG. 6A, a communication connection is established between the smartwatch 3-101 and the earphones 3-102. The communication connection may be, for example, a Bluetooth communication connection. A manner of establishing the communication connection between the smartwatch 3-101 and the earphones 3-102 is not limited in embodiments of this application. For the manner of establishing the communication connection between the smartwatch 3-101 and the earphones 3-102, refer to the descriptions in the foregoing embodiments. Details are not described herein again.

The smartwatch 3-101 may include a button 3-101C. The button 3-101C may be disposed on a side of a watch body of the smartwatch 3-101. A location of the button 3-101C on the smartwatch 3-101 is not limited in embodiments of this application.

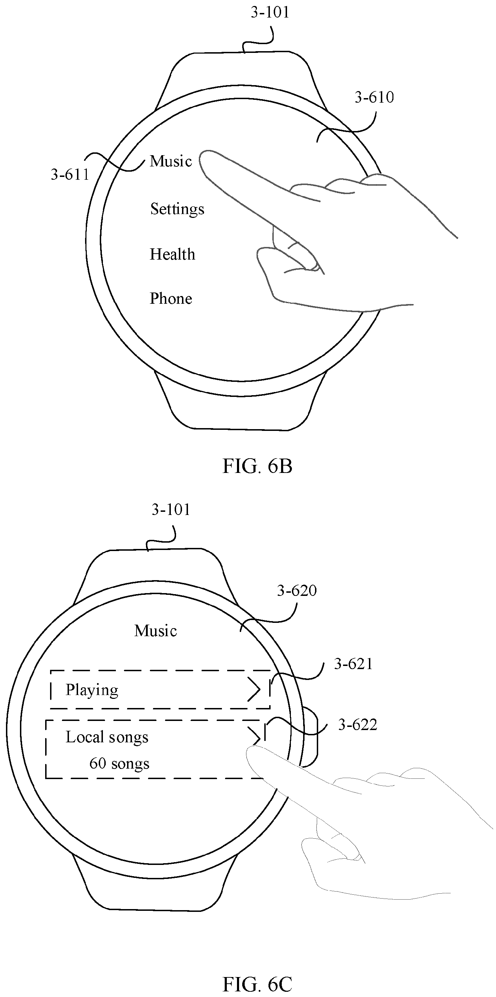

As shown in FIG. 6B, the smartwatch 3-101 may display a user interface 3-610. In some embodiments, the user interface 3-610 may be displayed by the smartwatch 3-101 in response to an operation on the button 3-101C, for example, a press operation. The operation of triggering the smartwatch 3-101 to display the user interface 3-610 is not limited in embodiments of this application.

The user interface 3-610 may include a music control 3-611, a setting control, a health control, a call control, and the like. The music control 3-611 may be used to trigger the smartwatch 3-101 to open a user interface of a Music application. The setting control may be used to trigger the smartwatch 3-101 to open a user interface of a Settings application. The health control may be used to trigger the smartwatch 3-101 to open a user interface of a Health application. The call control may be used to trigger the smartwatch 3-101 to open a user interface of a Call application.

As shown in FIG. 6B, in response to an operation, for example, a tap operation, performed on the music control 3-611, the smartwatch 3-101 may display a user interface 3-620 shown in FIG. 6C.

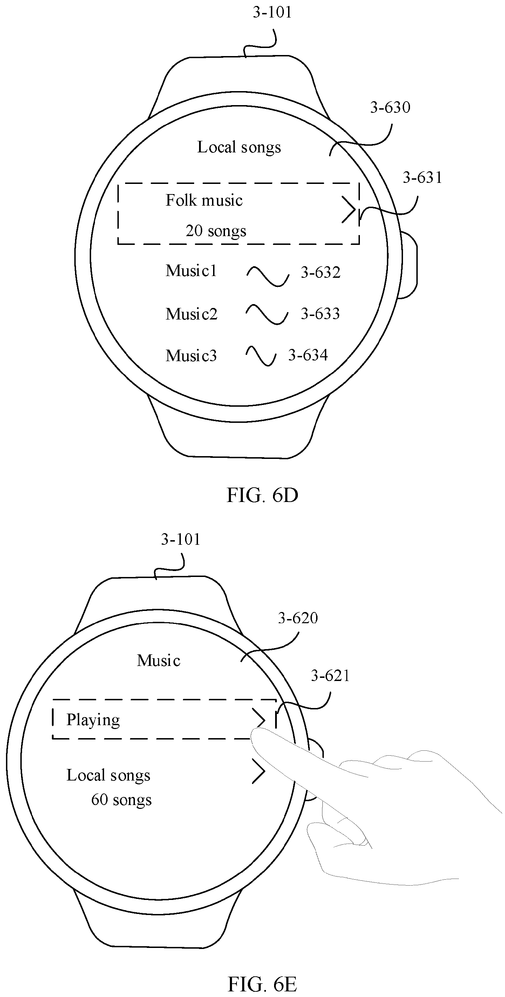

As shown in FIG. 6C, the user interface 3-620 may include a playing control 3-621 and a local songs control 3-622. The playing control 3-621 may be used to view music that is being played on the smartwatch 3-101. The local songs control 3-622 may be used to view information about music stored in the smartwatch 3-101. In response to an operation, for example, a tap operation, performed on the local songs control 3-622, the smartwatch 3-101 may display a user interface 3-630 shown in FIG. 6D.

As shown in FIG. 6D, the user interface 3-630 may be used to display the information about the music stored in the smartwatch 3-101. For example, the user interface 3-630 may include a folk music option 3-631, a Music1 option 3-632, a Music2 option 3-633, and a Music3 option 3-634. The folk music option 3-631 may be used to view information about music in a group "Folk music" in classifications. The Music1 option 3-632, the Music2 option 3-633, and the Music3 option 3-634 may be respectively used to view information about music named Music1, Music2, and Music3.

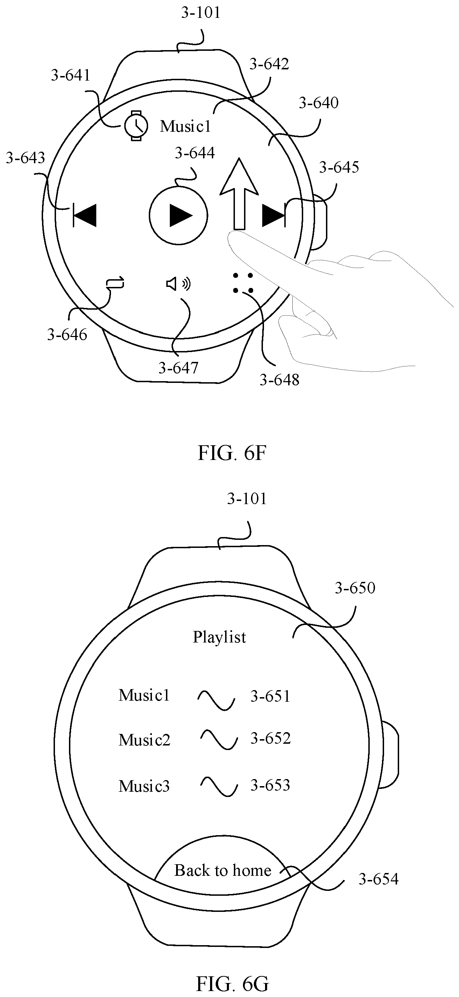

As shown in FIG. 6E, in response to an operation, for example, a tap operation, performed on the playing control 3-621, the smartwatch 3-101 may display a user interface 3-640 shown in FIG. 6F.

As shown in FIG. 6F, the user interface 3-640 may include a device type identifier 3-641, a music name 3-642, a previous track control 3-643, a play control 3-644, a next track control 3-645, a playing sequence control 3-646, a volume control 3-647, and a music setting control 3-648.

The device type identifier 3-641 may indicate a type of a device to which music to be played or being played on the user interface 3-640 belongs. The type of the device may include a mobile phone, a smartwatch, a tablet computer, and the like. For example, the device type identifier 3-641 is a watch icon shown in FIG. 6F, and may indicate that the device to which the music to be played or being played on the user interface 3-640 belongs is a smartwatch. The smartwatch is the smartwatch 3-101 in this application.

The music name 3-642 may indicate a name of the music to-be-played or being played on the user interface 3-640. For example, the music name is "Music1". It can be learned from the foregoing embodiments that the music named "Music1" is music on the smartwatch 3-101.

The previous track control 3-643 may be used to switch to a previous track of music.

The play control 3-644 may be used to trigger the smartwatch 3-101 to play music, for example, the music named "Music 1".

The next track control 3-645 may be used to switch to a next track of music.

The playing sequence control 3-646 may be used to adjust a sequence of playing music by the smartwatch 3-101. For example, the sequence of playing music may include single loop, shuffle, playlist loop, and the like.

The volume control 3-647 may be used to adjust music playing volume.

The music setting control 3-648 may be used to open a music playing setting interface.

In some embodiments, in response to a user operation of sliding upward on the user interface 3-640, the smartwatch 3-101 may display a user interface 3-650 shown in FIG. 6G.

As shown in FIG. 6G, a playlist in which music may be displayed is displayed on the user interface 3-650. The playlist may include one or more music options. The smartwatch 3-101 may play, in an arrangement sequence of the music options in the playlist, music corresponding to the music options. For example, the playlist may include a Music1 option 3-651, a Music2 option 3-652, and a Music3 option 3-653.

The user interface 3-650 may further include a back to home control 3-654. The back to home control 3-654 may be used to trigger the smartwatch 3-101 to display a main interface of music playing. The main interface of music playing may be the user interface 3-640 shown in FIG. 6F.

As shown in FIG. 6H, in response to an operation, for example, a tap operation, performed on the play control 3-644, the smartwatch 3-101 may detect whether the earphones 3-102 are in a worn state. In a possible implementation, the earphones 3-102 may perform wearing detection periodically or aperiodically. The smartwatch 3-101 may receive a wearing detection result sent by the earphones 3-102, to determine whether the earphones 3-102 are in the worn state. Optionally, the smartwatch 3-101 may send a wearing detection instruction to the earphones 3-102, to indicate the earphones 3-102 to perform wearing detection. According to the wearing detection instruction, the earphones 3-102 may perform wearing detection, and send a wearing detection result to the smartwatch 3-101. An implementation method in which the earphones 3-102 perform wearing detection is not limited in embodiments of this application.

When it is detected that the earphones 3-102 are not in the worn state, the smartwatch 3-101 may display a user interface 3-660 shown in FIG. 6I. The user interface 3-660 may include prompt information. The prompt information may be used to prompt the user to wear the earphones 3-102. For example, the prompt information may include a text prompt "Wear the earphones first". Specific content of the prompt information on the user interface 3-660 is not limited in embodiments of this application.

When it is detected that the earphones 3-102 are in the worn state, the smartwatch 3-101 may send audio data of music playing to the earphones 3-102, to play music through the earphones 3-102. In this way, the user may listen to local music on the smartwatch 3-101 through the earphones 3-102.

As shown in FIG. 6J, when it is detected that the earphones 3-102 are in the worn state, the smartwatch 3-101 may change the play control 3-644 on the user interface 3-640 shown in FIG. 6H to a pause control 3-649 on the user interface 3-640 shown in FIG. 6J. The pause control 3-649 may be used to trigger the smartwatch 3-101 to pause playing of the music. The smartwatch 3-101 may send audio data of the music named "Music1" to the earphones 3-102. The earphones 3-102 may play the Music1.

In some embodiments, when the smartwatch 3-101 establishes a communication connection to only a single earphone (for example, a left-ear earphone or a right-ear earphone) in the earphones 3-102, and the single earphone that establishes the communication connection to the smartwatch, that is, -101, is in the worn state, the smartwatch 3-101 may send, in response to an operation performed on the play control 3-644 shown in FIG. 6H, the audio data of music playing to the single earphone. In this way, when the smartwatch 3-101 establishes a communication connection to only a single earphone, music may still be played through the single earphone.

In some embodiments, a communication connection is established between the smartwatch 3-101 and each of two earphones (the left-ear earphone and the right-ear earphone) in the earphones 3-102. When the smartwatch 3-101 detects that one earphone in the earphones 3-102 is in the worn state and the other earphone is in a not-worn state, the smartwatch 3-101 may send, in response to the operation performed on the play control 3-644 shown in FIG. 6H, the audio data of music playing to the earphone in the worn state. The earphone in the worn state may play music from the smartwatch 3-101. When the other earphone changes from the not-worn state to the worn state, the smartwatch 3-101 may send the audio data of music playing to the other earphone, to play music through the two earphones in the earphones 3-102. It can be learned that when the user wears only one earphone in the earphones 3-102, the user may still listen to the local music on the smartwatch 3-101 through the worn earphone.

In some embodiments, in a case in which the earphones 3-102 are in the worn state and play music from the smartwatch 3-101, when it is detected that the user takes off the earphones 3-102 (that is, the earphones 3-102 change from the worn state to the not-worn state), the earphones 3-102 may pause playing of the music. The earphones 3-102 may send a music playing pause message to the smartwatch 3-101. When receiving the music playing pause message, the smartwatch 3-101 may change the pause control 3-649 shown in FIG. 6J to the play control 3-644 shown in FIG. 6H. Further, when it is detected that the user wears the earphones 3-102 (that is, the earphones 3-102 change from the not-worn state to the worn state), the earphones 3-102 may resume the music. The earphones 3-102 may send a music resuming message to the smartwatch 3-101. When receiving the music resuming message, the smartwatch 3-101 may change the play control 3-644 shown in FIG. 6H to the pause control 3-649 shown in FIG. 6J.

It can be learned from the scenario shown in FIG. 6A to FIG. 6J that, when the earphones 3-102 are placed outside a compartment in the smartwatch 3-101, and the communication connection is established between the earphones 3-102 and the smartwatch 3-101, the smartwatch 3-101 may play music on the smartwatch 3-101 through the earphones 3-102. When receiving a music playing operation, the smartwatch 3-101 may further detect the wearing status of the earphones 3-102, and when the earphones 3-102 are in the not-worn state, prompt the user to wear the earphones. This can improve user experience of playing music through the smartwatch 3-101 and the earphones 3-102.

**FIG. 7A to FIG. 7C** **show an example of a scenario in which the smartwatch 3-101 manages audio playing.**

As shown in FIG. 7A, the smartwatch 3-101 may display a user interface 3-710. For the user interface 3-710, refer to the user interface 3-640 shown in FIG. 6J. Details are not described herein again. It can be learned from the user interface 3-710 that the smartwatch 3-101 is playing local music "Music1". When the smartwatch 3-101 plays the music "Music1", a sound-making device may be the earphones 3-102 shown in FIG. 6J.

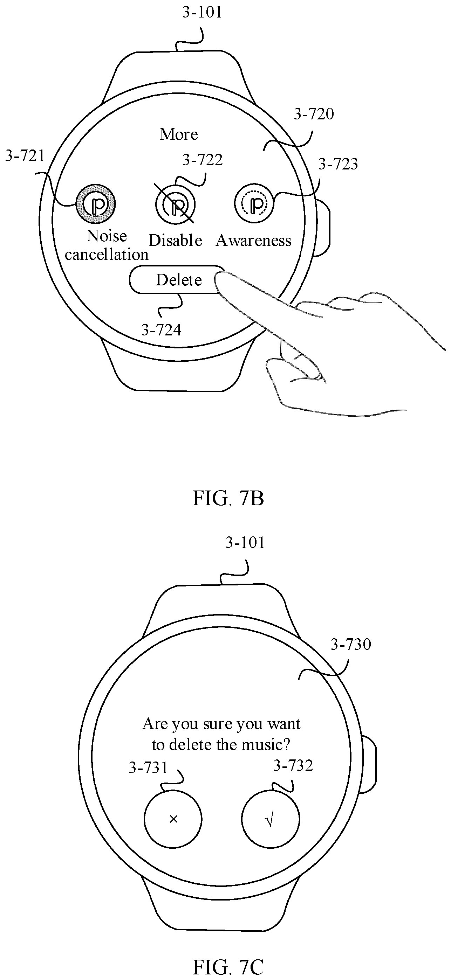

The user interface 3-710 may include a music setting control 3-711. For the music setting control 3-711, refer to the descriptions of the music setting control 3-648 shown in FIG. 6F. In response to an operation, for example, a tap operation, performed on the music setting control 3-711, the smartwatch 3-101 may display a user interface 3-720 shown in FIG. 7B. The user interface 3-720 may be a music playing setting interface.

As shown in FIG. 7B, the user interface 3-720 may include controls corresponding to one or more music setting items, for example, a noise cancellation control 3-721, a disable control 3-722, an awareness control 3-723, and a delete control 3-724.

The noise cancellation control 3-721 may be used to enable a noise cancellation mode of the earphone 3-102. The noise cancellation mode may reduce interference caused by an external ambient sound to audio listening performed by a user through the earphones 3-102. In response to an operation, for example, a tap operation, performed on the noise cancellation control 3-721, the smartwatch 3-101 may send, to the earphones 3-102, a message for enabling the noise cancellation mode. Then, the earphones 3-102 may enable the noise cancellation mode, to filter out the external ambient sound and cancel noise. An implementation method in which the earphones 3-102 filter out the external ambient sound in the noise cancellation mode and cancel the noise is not limited in embodiments of this application.

The awareness control 3-723 may be used to enable an awareness mode of the earphones 3-102. The foregoing awareness mode can help the user talk with another person when the user wears the earphones. In response to an operation, for example, a tap operation, performed on the awareness control 3-723, the smartwatch 3-101 may send, to the earphones 3-102, a message for enabling the awareness mode. Then, the earphones 3-102 may enable the awareness mode, to filter out a background sound in the external ambient sound, but retain a human voice. An implementation method in which the earphones 3-102 filter out the background sound in the external ambient sound in the awareness mode but retain the human voice is not limited in embodiments of this application.

The disable control 3-722 may be used to disable the awareness mode and the noise cancellation mode of the earphones 3-102. In response to an operation, for example, a tap operation, performed on the disable control 3-722, the smartwatch 3-101 may send, to the earphones 3-102, a message indicating to maintain the awareness mode and the noise cancellation mode in a disabled state. In this way, the earphones 3-102 may maintain the awareness mode and the noise cancellation mode in the disabled state.

It may be understood that, in a same time period, only one of the noise cancellation control 3-721, the disable control 3-722, and the awareness control 3-723 can be in a selected state in the same time period. A display style used when any one of the noise cancellation control 3-721, the disable control 3-722, and the awareness control 3-723 is in the selected state may be different from a display style used when any one of the noise cancellation control 3-721, the disable control 3-722, and the awareness control 3-723 is in an unselected state. For example, as shown in FIG. 7B, the noise cancellation control 3-721 is in the selected state. The noise cancellation control 3-721 may have a dark display style. The disable control 3-722 and the awareness control 3-723 are in the unselected state. The disable control 3-722 and the awareness control 3-723 may have light-color display styles. Display styles of the noise cancellation control 3-721, the disable control 3-722, and the awareness control 3-723 are not limited in embodiments of this application.

The delete control 3-724 may be used to delete music indicated by the user interface 3-710 shown in FIG. 7A, for example, the music named "Music1". In response to an operation, for example, a tap operation, performed on the delete control 3-724, the smartwatch 3-101 may display a user interface 3-730 shown in FIG. 7C.

As shown in FIG. 7C, the user interface 3-730 may include prompt information, to query the user whether to delete music (for example, the music "Music1"). The user interface 3-730 may further include a cancel control 3-731 and a confirm control 3-732. The cancel control 3-731 may be used to cancel deleting the music. The confirm control 3-732 may be used to trigger the smartwatch 3-101 to delete the music (for example, the music "Music1") indicated by the user interface 3-710. It may be understood that the music "Music1" indicated by the user interface 3-710 shown in FIG. 7A is music locally stored in the smartwatch 3-101. Therefore, in response to an operation performed on the confirm control 3-732, the smartwatch 3-101 may locally delete the music "Music1".

In some embodiments, if the music indicated by the user interface 3-710 is not music locally stored in the smartwatch 3-101, but music from another device (for example, the electronic device 3-200 or the electronic device 3-300), the user interface 3-720 shown in FIG. 7B may not include the delete control 3-724, or the delete control 3-724 on the user interface 3-720 shown in FIG. 7B is in an unavailable state. Optionally, if the music indicated by the user interface 3-710 is music locally stored in another device (for example, the electronic device 3-200 or the electronic device 3-300), the user interface 3-720 shown in FIG. 7B may still include the delete control 3-724, and the delete control 3-724 is in an available state. In response to an operation performed on the delete control 3-724, the smartwatch 3-101 may send a music deletion message to the electronic device to which the music indicated by the user interface 3-720 belongs. When receiving the music deletion message, the electronic device may locally delete the music indicated by the user interface 3-720.

Not limited to the controls shown in FIG. 7B, the user interface 3-720 may further include controls corresponding to more or fewer music setting items.

It can be learned from the scenario shown in FIG. 7A to FIG. 7C that the user can conveniently control, through the smartwatch 3-101, audio played on the earphones 3-102.

**FIG. 8A to FIG. 8F** **show an example of a scenario in which audio playing is controlled through the smartwatch 3-101.**

As shown in FIG. 8A, the smartwatch 3-101 may display a user interface 3-810. The user interface 3-810 may be a home screen of the smartwatch 3-101. In response to an operation of sliding rightward on the user interface 3-810, the smartwatch 3-101 may display a user interface 3-820 shown in FIG. 8B. The user interface 3-820 may be a leftmost screen interface of the smartwatch 3-101.

As shown in FIG. 8B, the user interface 3-820 may include location information 3-821, weather information 3-822, and a music control 3-823. The user interface 3-820 may further include more or less content. This is not limited in embodiments of this application.

The location information 3-821 may indicate a location of the smartwatch 3-101.

The weather information 3-822 may indicate weather of the location of the smartwatch 3-101.

The music control 3-823 may be used to control music locally stored in the smartwatch 3-101. The music control 3-823 may include a device type identifier 3-823A, a music information display area 3-823B, and a play control 3-823C.

The device type identifier 3-823A may indicate a type of a device to which music that can be controlled by the music control 3-823 belongs. For example, the device type identifier 3-823A is a watch icon, and may indicate that the type of the device to which the music that can be controlled by the music control 3-823 belongs is a watch.

The music information display area 3-823B may be used to display information such as a name of the device to which the music that can be controlled by the music control 3-823 belongs and a name of the music. For example, text information "Watch is not playing" may be displayed in the music information display area 3-823B. This may indicate that the name of the device to which the music that can be controlled by the music control 3-823 belongs is "Watch" (namely, a name of the smartwatch 3-101), and there is no to-be-played music in the smartwatch 3-101. That the name of the smartwatch 3-101 is "Watch" is merely an example for description of this application. The name of the smartwatch 3-101 is not limited in embodiments of this application.

The play control 3-823C may be used to trigger the smartwatch 3-101 to play music in the device to which the music that can be controlled by the music control 3-823 belongs (namely, the music locally stored in the smartwatch 3-101).

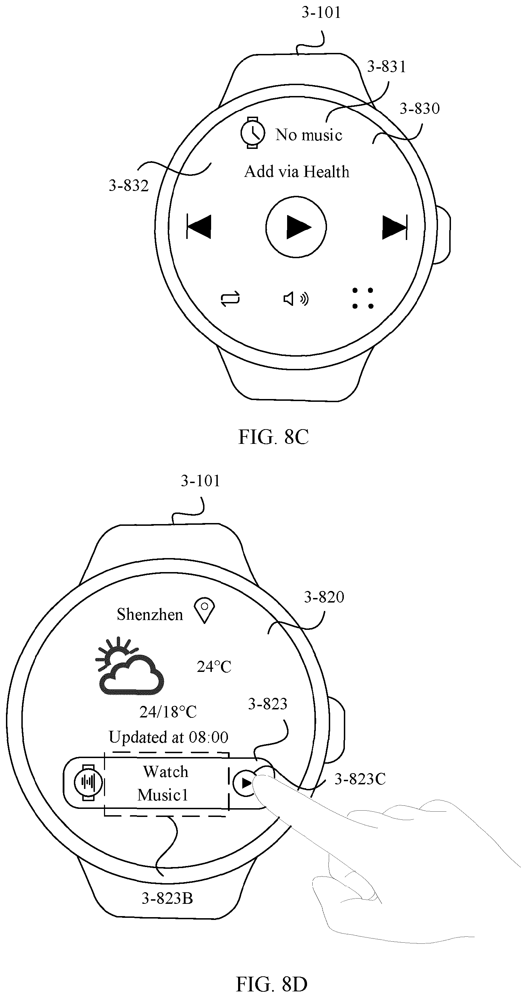

In some embodiments, the smartwatch 3-101 does not store music. In response to an operation, for example, a tap operation, performed on the music control 3-823 shown in FIG. 8B, the smartwatch 3-101 may display a user interface 3-830 shown in FIG. 8C.

As shown in FIG. 8C, the user interface 3-830 may include prompt information 3-831 and prompt information 3-832. Content of the prompt information 3-831 may be "No music". Content of the prompt information 3-832 may be "Add via Health". The prompt information 3-831 and the prompt information 3-832 may be used to give the user a prompt that the smartwatch 3-101 does not store music, and the user may add music to the smartwatch 3-101 through the Health app.

In some embodiments, the smartwatch 3-101 stores music. In response to the operation of sliding rightward shown in FIG. 8A, the smartwatch 3-101 may display a user interface 3-820 shown in FIG. 8D. For the user interface 3-820, refer to the descriptions in the foregoing embodiments.

As shown in FIG. 8D, the user interface 3-820 may include the music control 3-823. The music control 3-823 may include the music information display area 3-823B and the play control 3-823C.

In FIG. 8D, text information "Watch Music1" may be displayed in the music information display area 3-823B. This may indicate that the name of the device to which the music that can be controlled by the music control 3-823 belongs is "Watch" (namely, the smartwatch 3-101), and to-be-played music in the smartwatch 3-101 is the music "Music1". In response to an operation, for example, a tap operation, performed on the play control 3-823C shown in FIG. 8D, the smartwatch 3-101 may detect whether the earphones 3-102 are in a worn state. When it is detected that the earphones 3-102 are in the worn state, the smartwatch 3-101 may play the to-be-played music (namely, the music "Music1") displayed in the music information display area 3-823B.

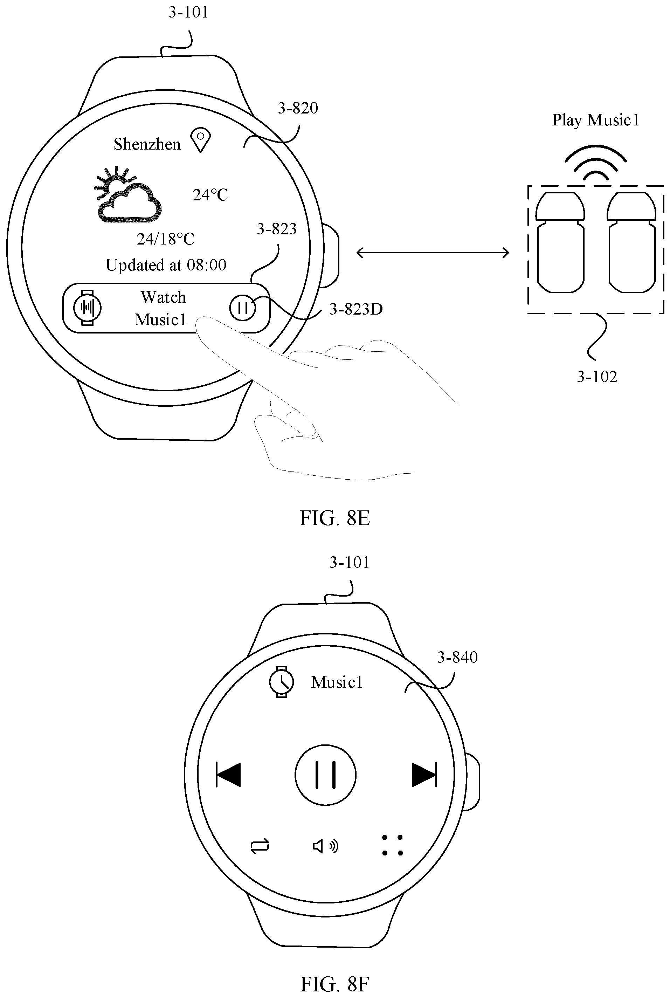

As shown in FIG. 8E, the smartwatch 3-101 may send audio data of the music "Music1" to the earphones 3-102, and play the music "Music1" through the earphones 3-102. In addition, the smartwatch 3-101 may display a user interface 3-820 shown in FIG. 8E. It can be learned that when the music "Music1" is played, the smartwatch 3-101 may change the play control 3-823C shown in FIG. 8D to a pause control 3-823D shown in FIG. 8E.

As shown in FIG. 8E, in response to an operation, for example, a tap operation, performed on an area other than the pause control 3-823D in the music control 3-823, the smartwatch 3-101 may display a user interface 3-840 shown in FIG. 8F. For the user interface 3-840, refer to the user interface 3-640 shown in FIG. 6J. Details are not described herein again.

It can be learned from the scenario shown in FIG. 8A to FIG. 8F that the user may quickly find an entry for controlling audio playing on the leftmost screen interface on the smartwatch 3-101. According to the foregoing embodiments, convenience of controlling audio playing by the user can be improved.

In some embodiments, if it is detected, when an audio playing operation is received, that the smartwatch 3-101 is not connected to the earphones 3-102, the smartwatch 3-101 may prompt the user to connect the smartwatch 3-101 to the earphones 3-102 and provide a quick connection entry for triggering the smartwatch 3-101 to establish a communication connection to the earphones 3-102.

**FIG. 9A to FIG. 9C** **show an example of a scenario in which the smartwatch 3-101 establishes a communication connection to the earphones 3-102.**

As shown in FIG. 9A, the smartwatch 3-101 may display a user interface 3-910 shown in FIG. 9A. For the user interface 3-910, refer to the user interface 3-640 shown in FIG. 6F. Details are not described herein again. The user interface 3-910 may include a play control 3-911. In response to an operation performed on the play control 3-911, the smartwatch 3-101 may detect whether a communication connection is established between the smartwatch 3-101 and the earphones 3-102.

When it is detected that the communication connection is established between the smartwatch 3-101 and the earphones 3-102, the smartwatch 3-101 may play music according to embodiments shown in FIG. 6H to FIG. 6J.

When it is detected that no communication connection is established between the smartwatch 3-101 and the earphones 3-102, the smartwatch 3-101 may display a user interface 3-920 shown in FIG. 9B. The user interface 3-920 may include a connection prompt 3-921. Content of the connection prompt 3-921 may be "The earphones are disconnected from the watch, and the earphones are temporarily unavailable. Place the earphones in the watch body and reconnect". The content of the connection prompt 3-921 is not limited in embodiments of this application. It can be learned that the connection prompt 3-921 may be used to give a user a prompt that the smartwatch 3-101 is not connected to the earphones 3-102, and prompt the user with an operation manner of connecting the smartwatch 3-101 to the earphones 3-102.

The user interface 3-920 may further include a reconnection control 3-922. The reconnection control 3-922 is used as a quick connection entry for triggering the smartwatch 3-101 to establish the communication connection to the earphones 3-102, and may be used to trigger the smartwatch 3-101 to establish the communication connection to the earphones 3-102.

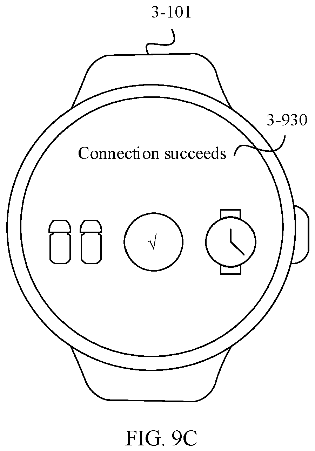

In response to an operation performed on the reconnection control 3-922, the smartwatch 3-101 may search for the earphones 3-102, and establish the communication connection to the earphones 3-102. For the manner of establishing the communication connection between the smartwatch 3-101 and the earphones 3-102, refer to the descriptions in the foregoing embodiments. Details are not described herein again. When the communication connection between the smartwatch 3-101 and the earphones 3-102 is successfully established, the smartwatch 3-101 may display a user interface 3-930 shown in FIG. 9C, to give the user a prompt that the smartwatch 3-101 and the earphones 3-102 are successfully connected.

After the smartwatch 3-101 and the earphones 3-102 are successfully connected, the smartwatch 3-101 may play music according to embodiments shown in FIG. 6H to FIG. 6J.

The foregoing audio playing operation is not limited in embodiments of this application. In addition to the operation performed on the play control 3-911 shown in FIG. 9A, the audio playing operation may further include the operation performed on the play control 3-823C on the user interface 3-820 (namely, the leftmost screen interface) shown in FIG. 8D.

It can be learned from the scenario shown in FIG. 9A to FIG. 9C that, when the smartwatch 3-101 plays locally stored music through the earphones 3-102, a communication connection needs to be established between the smartwatch 3-101 and the earphones 3-102. If the smartwatch 3-101 is not connected to the earphones 3-102 when receiving the audio playing operation, the smartwatch 3-101 may provide a quick connection entry for establishing a communication connection, so that the user can quickly connect the smartwatch 3-101 to the earphones 3-102. In this way, the user does not need to spend time and energy in another setting interface to search for a connection control for connecting the smartwatch 3-101 and the earphones 3-102. In this way, user experience can be improved.

**FIG. 10A to FIG. 10J** **show an example of a scenario in which the earphones 3-102 plays audio on the electronic device 3-200.**

As shown in FIG. 10A, the smartwatch 3-101 is paired with the electronic device 3-200, and a communication connection is established between the smartwatch 3-101 and the electronic device 3-200. A communication connection is established between the smartwatch 3-101 and the earphones 3-102. A communication connection is also established between the electronic device 3-200 and the earphones 3-102. The communication connections between the smartwatch 3-101, the earphones 3-102, and the electronic device 3-200 may be, for example, Bluetooth communication connections. A manner of establishing the communication connections between the smartwatch 3-101, the earphones 3-102, and the electronic device 3-200 is not limited in embodiments of this application. For a manner of establishing a communication connection between every two of the smartwatch 3-101, the earphones 3-102, and the electronic device 3-200, refer to the descriptions in the foregoing embodiments. Details are not described herein again.

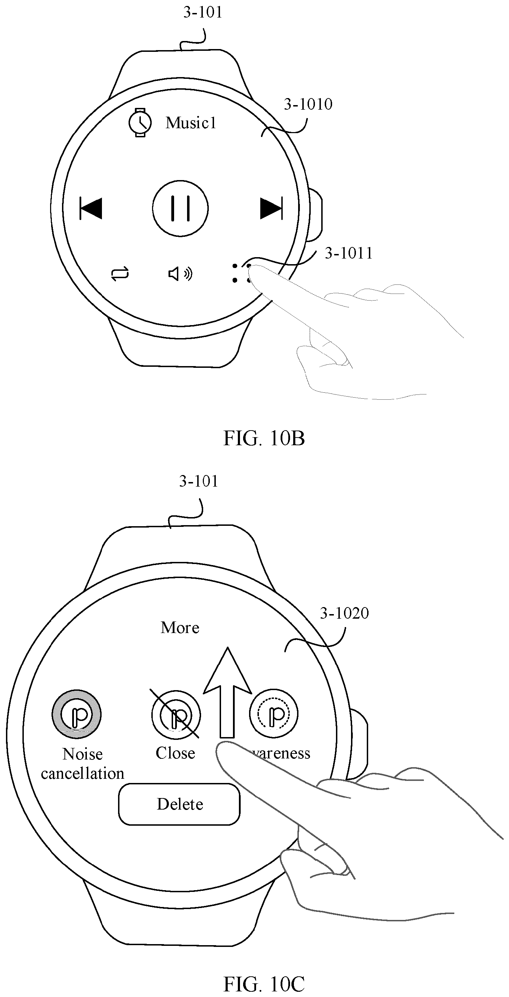

As shown in FIG. 10B, the smartwatch 3-101 may display a user interface 3-1010. For the user interface 3-1010, refer to the user interface 3-640 shown in FIG. 6J. Details are not described herein again. It can be learned from the user interface 3-1010 that the smartwatch 3-101 is playing local music "Music1" of the smartwatch 3-101. The music "Music1" may be played with a sound by the earphones 3-102.

The user interface 3-1010 may include a music setting control 3-1011. In response to an operation performed on the music setting control 3-1011, the smartwatch 3-101 may display a user interface 3-1020 shown in FIG. 10C.

For the user interface 3-1020, refer to the user interface 3-720 shown in FIG. 7B. Details are not described herein again.

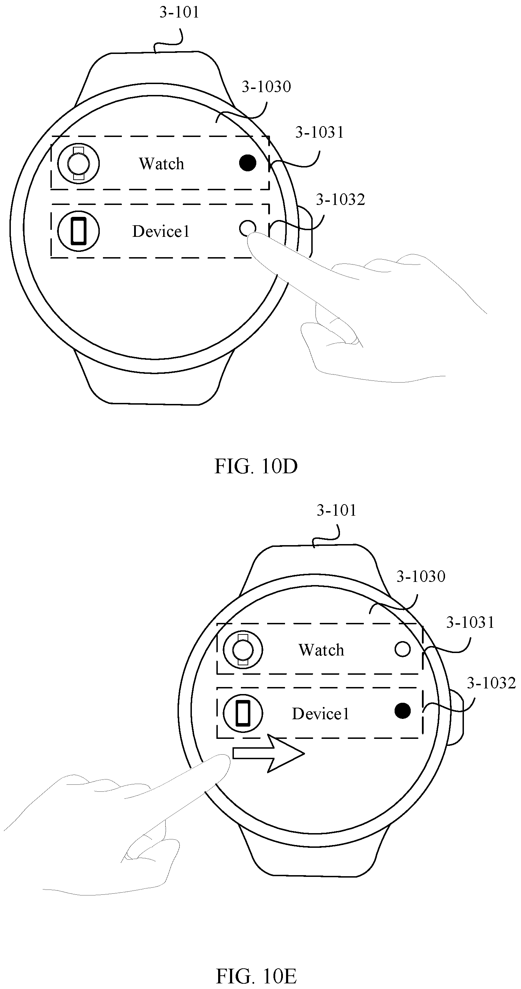

As shown in FIG. 10C, in response to an operation of sliding upward performed on the user interface 3-1020, the smartwatch 3-101 may display a user interface 3-1030 shown in FIG. 10D.

As shown in FIG. 10D, one or more device options may be displayed on the user interface 3-1030. Devices indicated by the one or more device options may include a device that has established a communication connection to the earphones 3-102. The device options on the user interface 3-1030 may be used to perform device switching, to control music playing of different devices through the smartwatch 3-101.

For example, the user interface 3-1030 may include a device option 3-1030 and a device option 3-1032. The device option 3-1031 may indicate a smartwatch named "Watch", namely, the smartwatch 3-101. The device option 3-1032 may indicate a mobile phone named "Device1", namely, the electronic device 3-200. In embodiments of this application, an example in which the electronic device 3-200 is a mobile phone named "Device1" is used for description. Names of the smartwatch 3-101 and the electronic device 3-200 are not limited in embodiments of this application.

That a device option on the user interface 3-1030 is in a selected state may indicate that the smartwatch 3-101 provides a related operation control for controlling a device corresponding to the device option to play music, for example, a control for controlling music playing, a control for controlling music pause, a control for switching to a previous or next track of music, or a control for adjusting volume.

It can be learned from FIG. 10B that the user interface 3-1010 displayed by the smartwatch 3-101 includes an operation control for controlling the smartwatch 3-101 to play local music. Correspondingly, in FIG. 10D, the device option 3-1031 is in a selected state. In this way, after returning to the user interface 3-1010 on the smartwatch 3-101, the user may control, through the operation control on the user interface 3-1010, local music playing of the smartwatch 3-101.

As shown in FIG. 10D, in response to an operation performed on the device option 3-1032, the smartwatch 3-101 may display a user interface 3-1030 shown in FIG. 10E. The smartwatch 3-101 changes a device option in the selected state on the user interface 3-1030 from the device option 3-1031 to the device option 3-1032. In FIG. 10E, the device option 3-1032 is in the selected state.

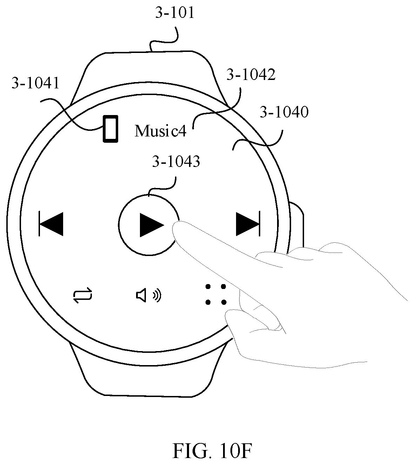

As shown in FIG. 10E, when the device option 3-1032 is in the selected state, in response to an operation of sliding rightward performed on the user interface 3-1030, the smartwatch 3-101 may display a user interface 3-1040 shown in FIG. 10F. The user interface 3-1040 may include an operation control for controlling the electronic device 3-200 to play music.

As shown in FIG. 10F, the user interface 3-1040 may include a device type identifier 3-1041, a music name 3-1042, and a play control 3-1043.

The device type identifier 3-1041 may indicate a type of a device to which music to be played or being played on the user interface 3-1040 belongs. For example, the device type identifier 3-1041 is a mobile phone icon shown in FIG. 10F, and may indicate that the device to which the music to be played or being played on the user interface 3-1040 belongs is a mobile phone. The mobile phone is the electronic device 3-200 in this application.

The music name 3-1042 may indicate a name of the music to-be-played or being played on the user interface 3-1040. For example, the music name is "Music4". The music named "Music4" may be music from the electronic device 3-200.

The play control 3-1040 may be used to control the electronic device 3-200 to play music, for example, the music named "Music4".

For other controls on the user interface 3-1040, refer to the descriptions of the user interface 3-640 shown in FIG. 6F in the foregoing embodiments. Details are not described herein again.

As shown in FIG. 10G, in response to an operation performed on the play control 3-1043 shown in FIG. 10F (the operation may be a first operation), the smartwatch 3-101 may send, to the electronic device 3-200, a message for playing the music "Music4". When receiving the message for playing the music "Music4", the electronic device 3-200 may send audio data of the music "Music4" to the earphones 3-102. In this way, the earphones 3-102 may play the music "Music4" with a sound.

In addition, if the electronic device 3-200 starts to play the music "Music4", the electronic device 3-200 may send, to the smartwatch 3-101, a message indicating that the music "Music4" is being played. Then, the smartwatch 3-101 may change the play control 3-1043 shown in FIG. 10F to a pause control 3-1044 shown in FIG. 10G. The pause control 3-1044 may be used to control the electronic device 3-200 to pause playing of the music.

The audio on the electronic device 3-200 may include first audio. For example, the first audio may include the music "Music4". Audio data sent by the electronic device 3-200 to the earphones 3-102 may include first audio data. For example, the first audio data may include the audio data of the music "Music4". The first audio data may be an audio stream of the first audio, and may be used by a device that receives the first audio data to play the first audio.

In a possible implementation, in a scenario in which the smartwatch 3-101 controls the electronic device 3-200 to play music on the electronic device 3-200 through the earphones 3-102 shown in FIG. 10G, control information of music playing may be transmitted between the smartwatch 3-101 and the electronic device 3-200. The control information of music playing may include: information about pausing playing, information about resuming, information about switching music, information about adjusting a playing sequence, information about enabling a noise cancellation mode or an awareness mode, information about disabling the noise cancellation mode and the awareness mode, a name of music being played, a singer name, and the like. Audio data of music playing may be transmitted between the electronic device 3-200 and the earphones 3-102. The audio data of music playing may be used by the earphones 3-102 to play corresponding music with a sound.

In another possible implementation, in a scenario in which the smartwatch 3-101 controls the electronic device 3-200 to play music on the electronic device 3-200 through the earphones 3-102 shown in FIG. 10G, control information and audio data of music playing may be transmitted between the smartwatch 3-101 and the electronic device 3-200. Then, the smartwatch 3-101 may send the audio data from the electronic device 3-200 to the earphones 3-102. The earphones 3-102 may play music on the electronic device 3-200 based on the audio data.

It may be understood that, when the operation performed on the play control 3-1043 shown in FIG. 10F is received, the smartwatch 3-101 may first detect whether there is a communication connection between the smartwatch 3-101 and the electronic device 3-200. If the communication connection between the smartwatch 3-101 and the electronic device 3-200 is disconnected, the smartwatch 3-101 may give the user a prompt that the smartwatch 3-101 is not connected to the electronic device 3-200, and the smartwatch 3-101 and the electronic device 3-200 need to be connected to control playing of music on the electronic device 3-200 through the smartwatch 3-101.

In addition, in the process in which the earphones 3-102 play the music from the electronic device 3-200, when it is detected that the user takes off the earphones 3-102 (that is, the earphones 3-102 change from a worn state to a not-worn state), the earphones 3-102 may pause playing of the music. When it is detected that the user wears the earphones 3-102 (that is, the earphones 3-102 change from the not-worn state to the worn state), the earphones 3-102 may resume the music.

In some embodiments, if the earphones 3-102 are not connected to the smartwatch 3-101, and are not connected to the electronic device 3-200, after the electronic device 3-200 detects a music playing operation or receives a music playing message from the smartwatch 3-101, the music on the electronic device 3-200 may be played with a sound through a speaker of the electronic device 3-200.

It can be learned from the scenario shown in FIG. 10B to FIG. 10G that the user may control, through the smartwatch 3-101, different devices (for example, the smartwatch 3-101 and the electronic device 3-200) to play music. The user may control the earphones 3-102 to play music on the different devices with a sound. When the user controls, through the smartwatch 3-101, the music locally stored in the smartwatch 3-101 to be played, the earphones 3-102 may play, with a sound, the music locally stored in the smartwatch 3-101. When the earphones 3-102 play, with a sound, the music locally stored in the smartwatch 3-101, the electronic device 3-200 may play the music with a sound through the speaker of the electronic device 3-200 after receiving the music playing operation. When the user switches, through the smartwatch 3-101, an object for controlling music playing from the smartwatch 3-101 to the electronic device 3-200, the earphones 3-102 may play the music on the electronic device 3-200 with a sound. In this way, when the earphones 3-102 are connected to both the smartwatch 3-101 and the electronic device 3-200, the smartwatch 3-101 may be used as a control and management device of the earphones 3-102 to control music played with a sound by the earphones 3-102. This can avoid a conflict of preempting the earphones 3-102 when both the smartwatch 3-101 and the electronic device 3-200 need to play music. The user may control, through the smartwatch 3-101, the earphones 3-102 to play the music on the smartwatch 3-101 or the music on the electronic device 3-200.

In some embodiments, the smartwatch 3-101 may further provide, on a leftmost screen interface, an operation entry for controlling different devices to play music.

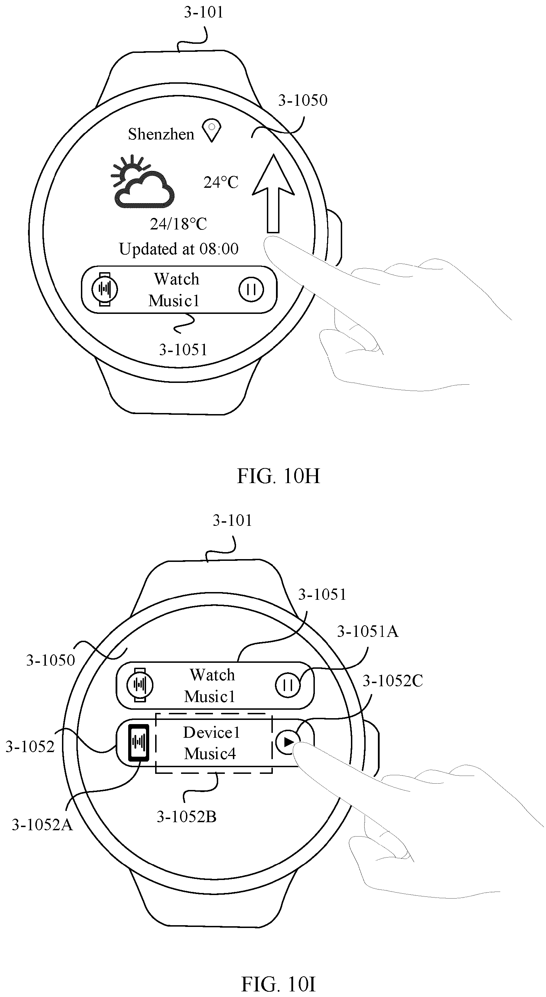

As shown in FIG. 10H, the smartwatch 3-101 may display a user interface 3-1050. For the user interface 3-1050, refer to the user interface 3-820 shown in FIG. 8E. Details are not described herein again. In response to an operation of sliding upward on the user interface 3-1050, the smartwatch 3-101 may display a user interface 3-1050 shown in FIG. 10I.

As shown in FIG. 10I, the user interface 3-1050 may include a music control 3-1051 and a music control 3-1052.

The music control 3-823 may be used to control music locally stored in the smartwatch 3-101. For the music control 3-1051, refer to the music control 3-823 shown in FIG. 8E. The music control 3-1051 includes a pause control 3-1051A. The pause control 3-1051A may be used to control playing of the music to be paused. It can be learned from the music control 3-1051 that the smartwatch 3-101 is playing music (for example, the music "Music1"). The music "Music1" on the smartwatch 3-101 may be played with a sound by the earphones 3-102.

The music control 3-1052 may be used to control the music on the electronic device 3-200. The music control 3-1052 may include a device type identifier 3-1052A, a music information display area 3-1052B, and a play control 3-1052C.

The device type identifier 3-1052A may indicate a type of a device to which music that can be controlled by the music control 3-1052 belongs. For example, the device type identifier 3-1052A is a mobile phone icon, and may indicate that the type of the device to which the music that can be controlled by the music control 3-1052 belongs is a mobile phone.

The music information display area 3-1052B may be used to display information such as a name of the device to which the music that can be controlled by the music control 3-1052 belongs and a name of the music. For example, text information "Device1 Music4" may be displayed in the music information display area 3-1052B. This may indicate that the name of the device to which the music that can be controlled by the music control 3-1052 belongs is "Device1" (namely, a name of the electronic device 3-200), and there is to-be-played music "Music4" on the electronic device 3-200.

The play control 3-1052C may be used to trigger the smartwatch 3-101 to play music on the device to which the music that can be controlled by the music control 3-1052 belongs (namely, the music on the electronic device 3-200). In response to an operation performed on the play control 3-1052C shown in FIG. 10I, the smartwatch 3-101 may pause playing of the local music (for example, the music "Music1") of the smartwatch 3-101. In addition, the smartwatch 3-101 may control the electronic device 3-200 to play music (for example, the music "Music4").

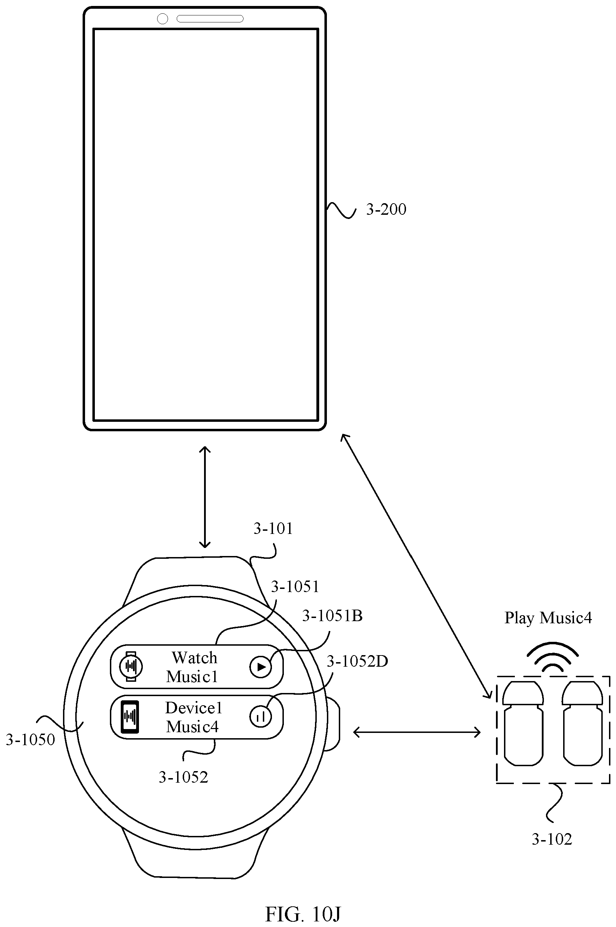

As shown in FIG. 10J, in response to the operation performed on the play control 3-1052C shown in FIG. 10I, the smartwatch 3-101 may display a user interface 3-1050 shown in FIG. 10J. The smartwatch 3-101 may change the pause control 3-1051A in the music control 3-1051 shown in FIG. 10I to a play control 3-1051B shown in FIG. 10J, and change the play control 3-1052C in the music control 3-1052 shown in FIG. 10I to a pause control 3-1052D shown in FIG. 10J. It can be learned from the music control 3-1051 and the music control 3-1052 shown in FIG. 10J that playing of the local music on the smartwatch 3-101 is paused. The music on the electronic device 3-200 is being played. The earphones 3-102 may switch from playing the music (for example, the music "Music1") on the smartwatch 3-101 with a sound to playing the music (for example, the music "Music4") on the electronic device 3-200 with a sound.

For an implementation method in which the smartwatch 3-101 controls the electronic device 3-200 to play music and the earphones 3-102 to play the music on the electronic device 3-200, refer to the descriptions in the foregoing embodiments. Details are not described herein again.

It can be learned that the user may quickly control playing of the music on the smartwatch 3-101 and playing of the music on the electronic device 3-200 through the music control 3-1051 and the music control 3-1052 on the user interface 3-1050 (namely, the leftmost screen interface) shown in FIG. 10I. In addition, when the earphones 3-102 are connected to the smartwatch 3-101, and the earphones 3-102 are connected to the electronic device 3-200, the user may control, through the music control 3-1051 and the music control 3-1052, the earphones 3-102 to play the music on the smartwatch 3-101 or the music on the electronic device 3-200.

Not limited to the music control 3-1051 and the music control 3-1052 shown in FIG. 10I, the user interface 3-1050 may further include more or fewer music controls, to control music on a device connected to the earphones 3-102.

It can be learned from the scenario shown in FIG. 10A to FIG. 10J that the smartwatch 3-101 may control the electronic device 3-200 connected to the smartwatch 3-101 to play music. In addition, the user may switch, through the smartwatch 3-101, music played on the earphones between the music on the smartwatch 3-101 and the music on the electronic device 3-200. This can avoid a conflict that a plurality of devices preempt the earphones 3-102, and improve user experience of listening to audio through the earphones 3-102.

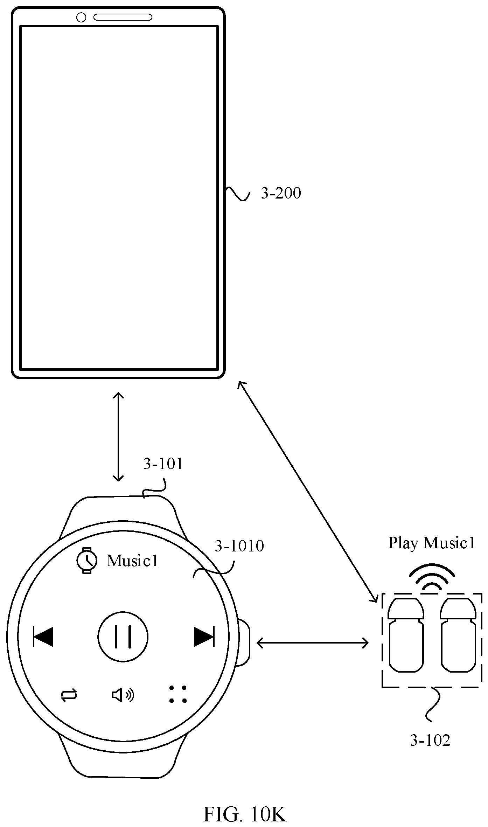

**FIG. 10K to FIG. 10M** **show an example of a scenario in which both the smartwatch 3-101 and the electronic device 3-200 play audio.**

As shown in FIG. 10K, the smartwatch 3-101 is paired with the electronic device 3-200, and a communication connection is established between the smartwatch 3-101 and the electronic device 3-200. A communication connection is established between the earphones 3-102 and the smartwatch 3-101. In addition, a communication connection is also established between the earphones 3-102 and the electronic device 3-200.

The smartwatch 3-101 may display a user interface 3-1010. For the user interface 3-1010, refer to the descriptions of the embodiment shown in FIG. 10B. It can be learned that the smartwatch 3-101 is playing locally stored music (for example, music "Music1") with a sound through the earphones 3-102.

In some embodiments, a user may perform an operation on the electronic device 3-200, to control the electronic device 3-200 to play music.

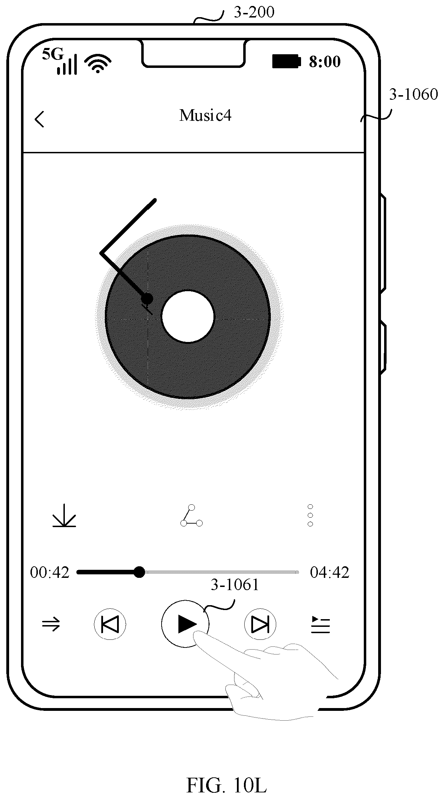

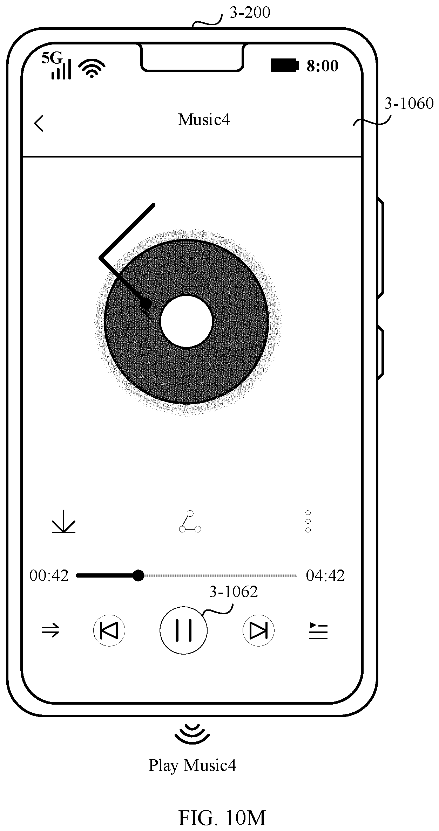

As shown in FIG. 10L, the electronic device 3-200 may display a user interface 3-1060. The user interface 3-1060 may be a user interface of a Music application on the electronic device 3-200. The user interface 3-1060 may include a play control 3-1061. The play control 3-1061 may be used to trigger the electronic device 3-200 to play to-be-played music (for example, music "Music4") corresponding to the user interface 3-1060. In response to an operation performed on the play control 3-1061, the electronic device 3-200 may start to play the music, and display a user interface 3-1062 shown in FIG. 10M.

As shown in FIG. 10M, the electronic device 3-200 may change the play control 3-1061 shown in FIG. 10L to a pause control 3-1062 shown in FIG. 10M. The pause control 3-1062 may be used to trigger the electronic device 3-200 to pause playing of the music. The electronic device 3-200 may play music "Music4" with a sound through a speaker of the electronic device 3-200.

In some embodiments, if the earphones 3-102 do not perform a service of the smartwatch 3-101 (for example, the earphones 3-102 do not play audio from the smartwatch 3-101), after the electronic device 3-200 receives the operation performed on the play control 3-1061 shown in FIG. 10L, the electronic device 3-200 may send audio data of music playing to the earphones 3-102, and the earphones 3-102 play music on the electronic device 3-200.

It can be learned from the scenario shown in FIG. 10K to FIG. 10M that, when the earphones 3-102 are connected to both the smartwatch 3-101 and the electronic device 3-200, if the earphones 3-102 are playing the music on the smartwatch 3-101, the electronic device 3-200 may independently play the music with a sound in response to a music playing operation. In this way, a conflict that the electronic device and the smartwatch 3-101 preempt the earphones 3-102 is avoided.

In some embodiments, when the earphones 3-102 are connected to both the smartwatch 3-101 and the electronic device 3-200, the earphones 3-102 may alternatively play music on a corresponding device based on a music play instruction and audio data of music playing that are recently received.

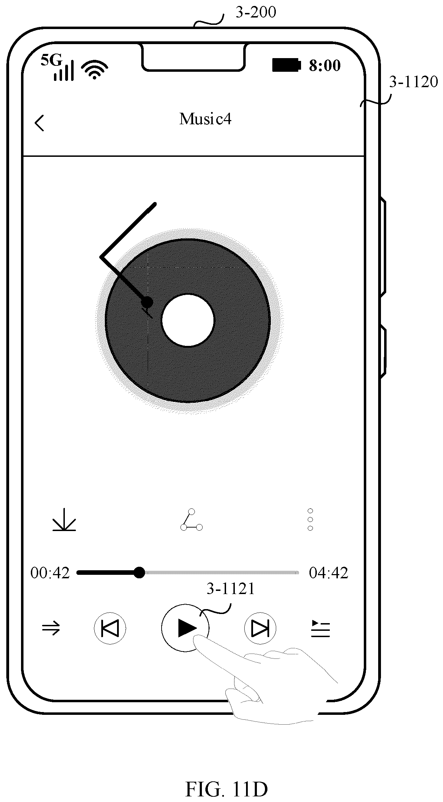

For example, in response to an operation performed on the smartwatch 3-101 to play the local music on the smartwatch 3-101, the smartwatch 3-101 may send, to the earphones 3-102, an instruction for playing the local music on the smartwatch 3-101 and audio data of the local music on the smartwatch 3-101. In this way, the earphones 3-102 may play the local music on the smartwatch 3-101. When the earphones 3-102 are playing the local music on the smartwatch 3-101, in response to an operation performed on the electronic device 3-200 to play the music on the electronic device 3-200 (for example, an operation performed on a play control 3-1121 shown in FIG. 11D), the electronic device 3-200 may send, to the earphones 3-102, an instruction for playing the music on the electronic device 3-200 and audio data of the music on the electronic device 3-200. In this way, the earphones 3-102 may play the music on the electronic device 3-200, and pause playing of the local music on the smartwatch 3-101.

It may be understood that the user may perform different operations on the smartwatch 3-101 and the electronic device 3-200 to implement different functions. The latest operation performed by the user may usually indicate what the user currently wants to do most. The earphones 3-102 may determine, based on a device to which to-be-played music indicated by a music play instruction recently received by the user belongs, whether the user currently wants to listen to the local music on the smartwatch 3-101 or listen to the music on the electronic device 3-200. In this way, the earphones 3-102 may play music on a device that the user currently wants to listen to most. According to the foregoing embodiments, user experience of listening to audio through the earphones 3-102 can be improved.

With reference to the scenario shown in FIG. 10A to FIG. 10J, it can be learned that when the user controls, through the smartwatch 3-101, the smartwatch 3-101 to play the local music, the earphones 3-102 may play the local music on the smartwatch 3-101 with a sound. When the user controls, through the smartwatch 3-101, the electronic device 3-200 to play the music, the earphones 3-102 may play the music on the electronic device 3-200 with a sound. In other words, the smartwatch 3-101 may be used as a control and management device of the earphones to control audio played with a sound by the earphone 3-102. This can avoid a conflict that a plurality of devices preempt the earphones 3-102, and improve user experience of listening to audio through the earphones 3-102.

**FIG. 11A to FIG. 11E** **show an example of another scenario in which the earphones 3-102 play audio on the electronic device 3-200.**

As shown in FIG. 11A, the smartwatch 3-101 is paired with the electronic device 3-200, and a communication connection is established between the smartwatch 3-101 and the electronic device 3-200. A communication connection is established between the electronic device 3-200 and the earphones 3-102. However, a communication connection between the smartwatch 3-101 and the earphones 3-102 is disconnected. The communication connection between the smartwatch 3-101 and the electronic device 3-200 and the communication connection between the electronic device 3-200 and the earphones 3-102 may be, for example, Bluetooth communication connections. A communication connection manner is not limited in embodiments of this application. For a manner in which the smartwatch 3-101 establishes the communication connection to the electronic device 3-200 and a manner in which the electronic device 3-200 establishes the communication connection to the earphones 3-102, refer to the descriptions in the foregoing embodiments. Details are not described herein again.

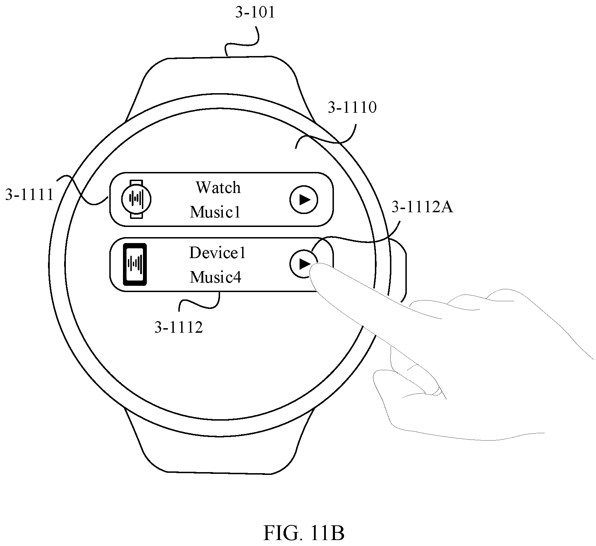

As shown in FIG. 11B, the smartwatch 3-101 may display a user interface 3-1110. For the user interface 3-1110, refer to the user interface 3-1050 shown in FIG. 10J. The user interface 3-1110 may include a music control 3-1111 and a music control 3-1112. The music control 3-1111 may be used to control music locally stored in the smartwatch 3-101. The music control 3-1112 may be used to control music on the electronic device 3-200. The music control 3-1112 may include a play control 3-1112A. In response to an operation performed on the play control 3-1112A, the smartwatch 3-101 may send a message for playing the music (for example, music "Music4") to the electronic device 3-200. When receiving the music playing message, the electronic device 3-200 may send audio data of the to-be-played music (for example, the music "Music4") to the earphones. In this way, the earphones 3-102 may play the music from the electronic device 3-200 with a sound.

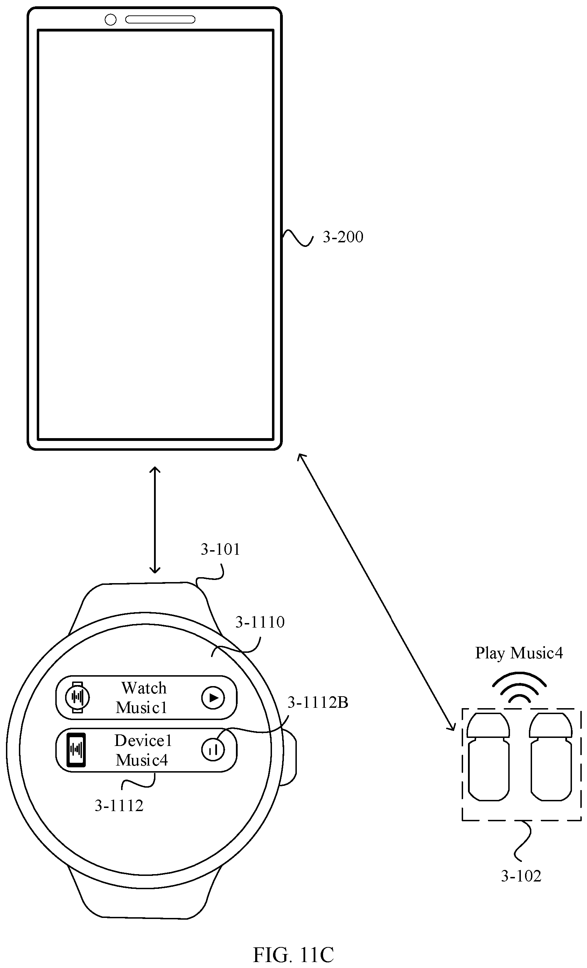

As shown in FIG. 11C, when the electronic device 3-200 plays the music through the earphones 3-102, the smartwatch 3-101 may display a user interface 3-1110. The smartwatch 3-101 may change the play control 3-1112A shown in FIG. 11B to a pause control 3-1112B shown in FIG. 11C. The pause control 3-1112B may be used to control the electronic device 3-200 to pause playing of the music. Music playing control information may be transmitted between the smartwatch 3-101 and the electronic device 3-200. Audio data of music playing may be transmitted between the electronic device 3-200 and the earphones 3-102.

In some embodiments, when the electronic device 3-200 establishes the communication connection to the earphones 3-102, the electronic device 3-200 may control, based on a received operation of controlling music playing, music played with a sound by the earphones 3-102.

As shown in FIG. 11D, the electronic device 3-200 may display a user interface 3-1120. The user interface 3-1120 may be a user interface of a Music application on the electronic device 3-200. The user interface 3-1120 may include a play control 3-1121. In response to an operation performed on the play control 3-1121, the electronic device 3-200 may start to play to-be-played music (for example, the music "Music4") corresponding to the user interface 3-1120.

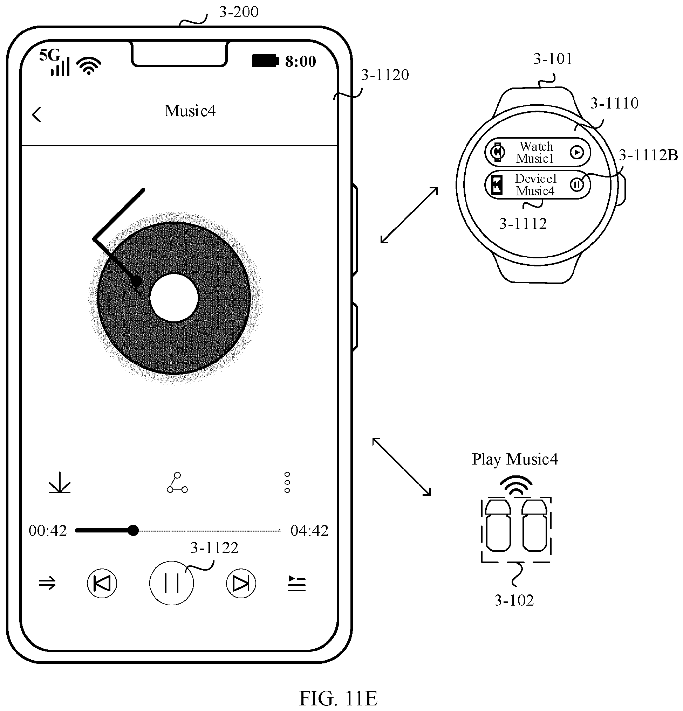

Specifically, as shown in FIG. 11E, the electronic device 3-200 may send the audio data of the music "Music4" to the earphones 3-102. The earphones 3-102 may play the music "Music4" with a sound based on the audio data of the music "Music4". The electronic device 3-200 may send, to the smartwatch 3-101, a message indicating that the music "Music4" is being played. When receiving the message indicating that the music "Music4" is being played, the smartwatch 3-101 may display the user interface 3-1110 shown in FIG. 11E. In FIG. 11E, the user interface 3-1110 may include the music control 3-1112. The music control 3-1112 may include a pause control 3-1113B. For the music control 3-1112, refer to the descriptions of the embodiment shown in FIG. 11C. In addition, when the music is being played, the electronic device 3-200 may display a user interface 3-1120 shown in FIG. 11E. The electronic device 3-200 may change the play control 3-1121 shown in FIG. 11D to a pause control 3-1122 shown in FIG. 11E. The pause control 3-1122 may be used to pause playing of the music.

It can be learned from the scenario shown in FIG. 11A to FIG. 11E that, when the earphones 3-102 establish the communication connection to the electronic device 3-200, but the communication connection between the earphones 3-102 and the smartwatch 3-101 is disconnected, the user can still listen to the music on the electronic device 3-200 through the earphones 3-102, and can control playing of the music on the electronic device 3-200 by performing an operation on the smartwatch 3-101 or the electronic device 3-200.

**FIG. 12A to FIG. 12E** **show an example of another scenario in which the earphones 3-102 play audio on the electronic device 3-200.**

As shown in FIG. 12A, the smartwatch 3-101 is paired with the electronic device 3-200, and a communication connection is established between the smartwatch 3-101 and the electronic device 3-200. A communication connection is established between the smartwatch 3-101 and the earphones 3-102. However, no communication connection is established between the earphones 3-102 and the electronic device 3-200. The communication connection between the smartwatch 3-101 and the electronic device 3-200 and the communication connection between the smartwatch 3-101 and the earphones 3-102 may be, for example, Bluetooth communication connections. A communication connection manner is not limited in embodiments of this application. For a manner in which the smartwatch 3-101 establishes the communication connection to the electronic device 3-200 and a manner in which the smartwatch 3-101 establishes the communication connection to the earphones 3-102, refer to the descriptions in the foregoing embodiments. Details are not described herein again.

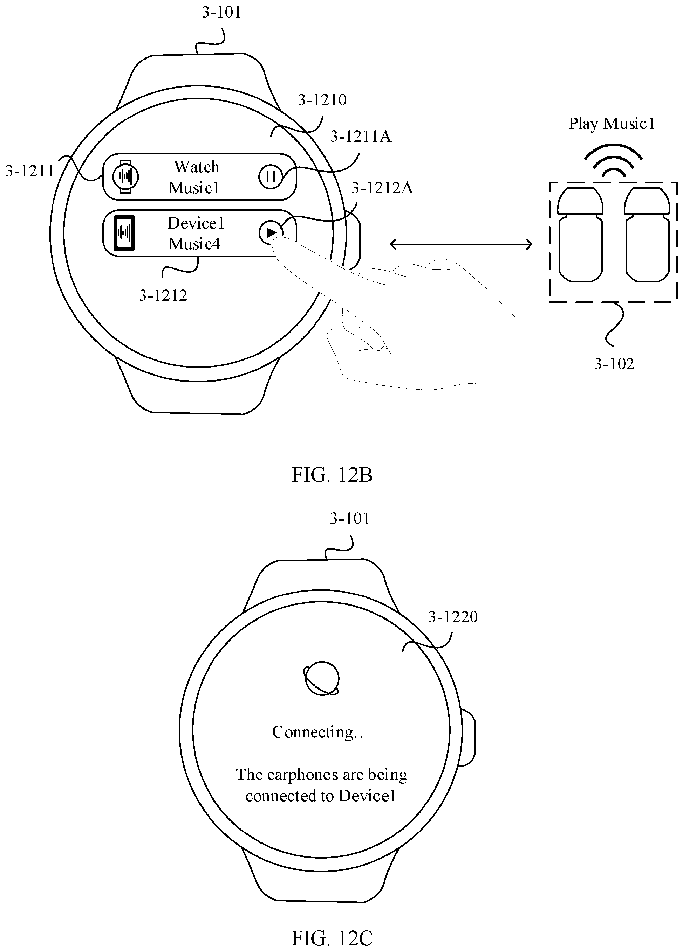

As shown in FIG. 12B, the smartwatch 3-101 may display a user interface 3-1210. For the user interface 3-1210, refer to the user interface 3-1051 shown in FIG. 10I. The user interface 3-1210 may include a music control 3-1211 and a music control 3-1212. The music control 3-1211 may be used to control music locally stored in the smartwatch 3-101. The music control 3-1211 may include a pause control 3-1211A. The music control 3-1212 may be used to control music on the electronic device 3-200. The music control 3-1212 may include a play control 3-1212A.

It can be learned from FIG. 12B that the smartwatch 3-101 is playing the locally stored music (for example, music "Music1"). The earphones 3-102 may play the local music "Music1" from the smartwatch 3-101 with a sound.

In response to an operation performed on the play control 3-1212A shown in FIG. 12B, the smartwatch 3-101 may detect whether the earphones 3-102 are connected to the electronic device 3-200. In a possible implementation, the smartwatch 3-101 may send a query message to the earphones 3-102, to query whether the earphones 3-102 are connected to the electronic device 3-200. The earphones 3-102 may send a status of a connection between the earphones 3-102 and the electronic device 3-200 to the smartwatch 3-101. An implementation in which the smartwatch 3-101 detects whether the earphones 3-102 are connected to the electronic device 3-200 is not limited in embodiments of this application.

If it is detected that a communication connection is established between the earphones 3-102 and the electronic device 3-200, the smartwatch 3-101 may control, according to embodiments shown in FIG. 10I and FIG. 10J, the electronic device 3-200 to play the music on the electronic device 3-200 through the earphones 3-102.

If it is detected that the earphones 3-102 are not connected to the electronic device 3-200, the smartwatch 3-101 may send, to the earphones 3-102, an instruction for establishing a communication connection to the electronic device 3-200, to indicate the earphones 3-102 to establish the communication connection to the electronic device 3-200. In addition, the smartwatch 3-101 may further send, to the electronic device 3-200, an instruction for establishing a communication connection to the earphones 3-102, to indicate the electronic device 3-200 to establish the communication connection to the earphones 3-102. Further, the earphones 3-102 and the electronic device 3-200 may establish the communication connection to each other according to the instruction for establishing the communication connection from the smartwatch 3-101.

In a process in which the smartwatch 3-101 indicates the earphones 3-102 to establish the communication connection to the electronic device 3-200, the smartwatch 3-101 may display a user interface 3-1220 shown in FIG. 12C. The user interface 3-1220 may include a connection prompt. The connection prompt may be used to give a user a prompt that the communication connection is being established between the earphones 3-102 and the electronic device 3-200. Content of the connection prompt may include "Connecting... The earphones are being connected to Device1". Specific content of the connection prompt on the user interface 3-1220 is not limited in embodiments of this application.

When the earphones 3-102 successfully establish the communication connection to the electronic device 3-200, the smartwatch 3-101 may pause playing of the local music (for example, the music "Music1") of the smartwatch 3-101. In addition, the smartwatch 3-101 may control, according to embodiments shown in FIG. 10I and FIG. 10J, the electronic device 3-200 to play the music on the electronic device 3-200 through the earphones 3-102.

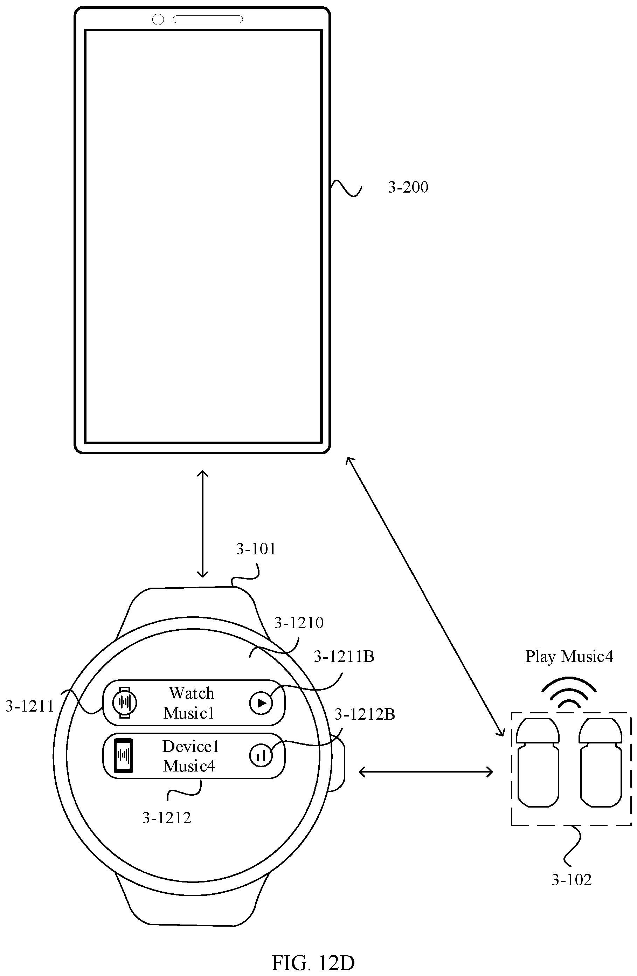

As shown in FIG. 12D, the earphones 3-102 successfully establish the communication connection to the electronic device 3-200. The electronic device 3-200 may send audio data of music playing to the earphones 3-102. The music played with a sound by the earphones 3-102 may be switched from the local music "Music1" of the smartwatch 3-101 shown in FIG. 12B to the music from the electronic device 3-200, for example, music "Music4". Music playing control information may be transmitted between the smartwatch 3-101 and the electronic device 3-200. The smartwatch 3-101 may display a user interface 3-1210 shown in FIG. 12D. After the earphones 3-102 play the music from the electronic device 3-200 with a sound, the smartwatch 3-101 may change the pause control 3-1211A in the music control 3-1211 shown in FIG. 12B to a play control 3-1211B shown in FIG. 12D. The play control 3-1211B may be used to trigger the smartwatch 3-101 to play the local music on the smartwatch 3-101 through the earphones 3-102. The smartwatch 3-101 may further change the play control 3-1212A in the music control 3-1212 shown in FIG. 12B to a pause control 3-1212B shown in FIG. 12D. The pause control 3-1212B may be used to trigger the smartwatch 3-101 to control the electronic device 3-200 to pause playing of the music. When the electronic device 3-200 pauses playing of the music, the earphones 3-102 may pause playing of the music from the electronic device 3-200 with a sound.

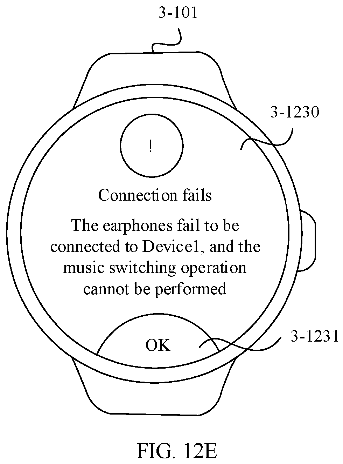

When the earphones 3-102 fail to establish the communication connection to the electronic device 3-200, the smartwatch 3-101 may display a user interface 3-1230 shown in FIG. 12E.

As shown in FIG. 12E, the user interface 3-1230 may include a connection failure prompt. The connection failure prompt may be used to give the user a prompt that the earphones 3-102 fail to establish the communication connection to the electronic device 3-200, and the music on the electronic device 3-200 cannot be played through the earphones 3-102. Content of the connection failure prompt may include "Connection fails. The earphones fail to be connected to Device1, and the music switching operation cannot be performed". The content of the connection failure prompt on the user interface 3-1230 is not limited in embodiments of this application.

The user interface 1230 may further include a confirm control 3-1231. In response to an operation performed on the confirm control 3-1231, the smartwatch 3-101 may display the user interface 3-1210 shown in FIG. 12B again.

When the earphones 3-102 fail to be connected to the electronic device 3-200, the earphones 3-12 may resume the local music on the smartwatch 3-101, for example, the music "Music1".

In some embodiments, when the earphones 3-102 fail to establish the communication connection to the electronic device 3-200, the smartwatch 3-101 may further send, to the electronic device 3-200 based on an operation performed on the play control 3-1212A shown in FIG. 12B, a message for playing music (for example, the music "Music4"). The electronic device 3-200 may play the music in the electronic device 3-200 through a speaker of the electronic device 3-200 based on the music playing message. When the electronic device 3-200 independently play the music with a sound, the smartwatch 3-101 may change the play control 3-1212A shown in FIG. 12B to the pause control 3-1212B shown in FIG. 12D. In other words, when the earphones 3-102 fail to establish the communication connection to the electronic device 3-200, the smartwatch 3-101 may still control the electronic device 3-200 to play the music. In addition, the electronic device 3-200 may independently play the music with a sound.

It can be learned from the scenario shown in FIG. 12A to FIG. 12E that, when no communication connection is established between the earphones 3-102 and the electronic device 3-200, the smartwatch 3-101 may indicate, based on the operation of controlling the electronic device 3-200 to play the music, the electronic device 3-200 to establish the communication connection to the earphones 3-102. In this way, when controlling, through the smartwatch 3-101, the electronic device 3-200 to play the music, the user may not need to manually perform an operation of connecting the earphones 3-102 to the electronic device 3-200, and may listen to the music on the electronic device 3-200 through the earphones 3-102 after the earphones 3-102 are successfully connected to the electronic device 3-200.

**FIG. 13A to FIG. 13E** **show an example of a scenario in which audio playing is controlled through the smartwatch 3-101.**

As shown in FIG. 13A, the smartwatch 3-101 is paired with the electronic device 3-200, and a communication connection is established between the smartwatch 3-101 and the electronic device 3-200. A communication connection between the earphones 3-102 and the smartwatch 3-101 is disconnected. In addition, a communication connection between the earphones 3-102 and the electronic device 3-200 is disconnected.

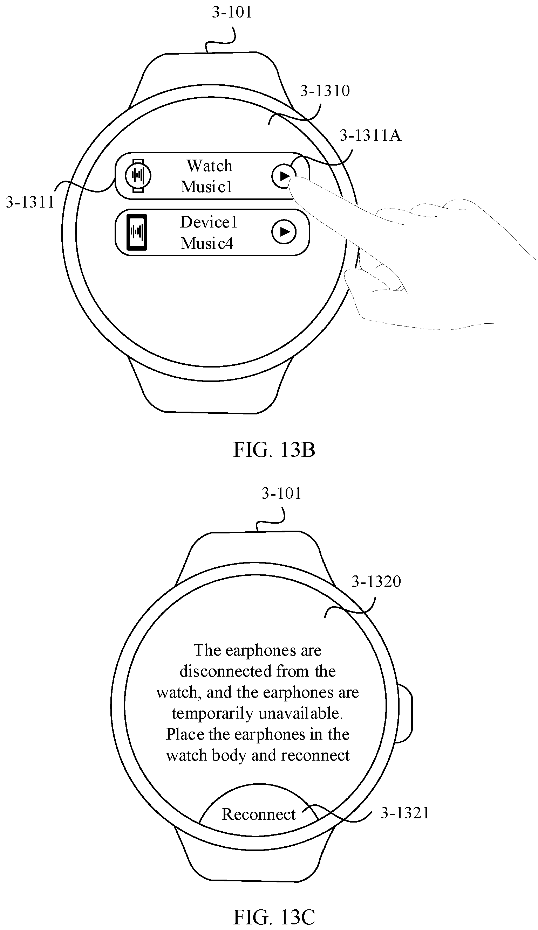

As shown in FIG. 13B, the smartwatch 3-101 may display a user interface 3-1310. For the user interface 3-1310, refer to the user interface 3-1050 shown in FIG. 10I. The user interface 3-1310 may include a music control 3-1311. The music control 3-1311 may include a play control 3-1311A. In response to an operation performed on the play control 3-1311A, the smartwatch 3-101 may detect whether the smartwatch 3-101 is connected to the earphones 3-102. When it is detected that the smartwatch 3-101 is not connected to the earphones 3-102, the smartwatch 3-101 may display a user interface 3-1320 shown in FIG. 13C. For the user interface 3-1320, refer to the user interface 3-920 shown in FIG. 9B.

As shown in FIG. 13C, the user interface 3-1320 may include a reconnection control 3-1321. The reconnection control 3-1321 is used as a quick connection entry for triggering the smartwatch 3-101 to establish the communication connection to the earphones 3-102, and may be used to trigger the smartwatch 3-101 to establish the communication connection to the earphones 3-102.

When the smartwatch 3-101 is not connected to the earphones 3-102, for an implementation in which the smartwatch 3-101 plays locally stored music, refer to the foregoing descriptions of the scenario shown in FIG. 9A to FIG. 9C. Details are not described herein again.

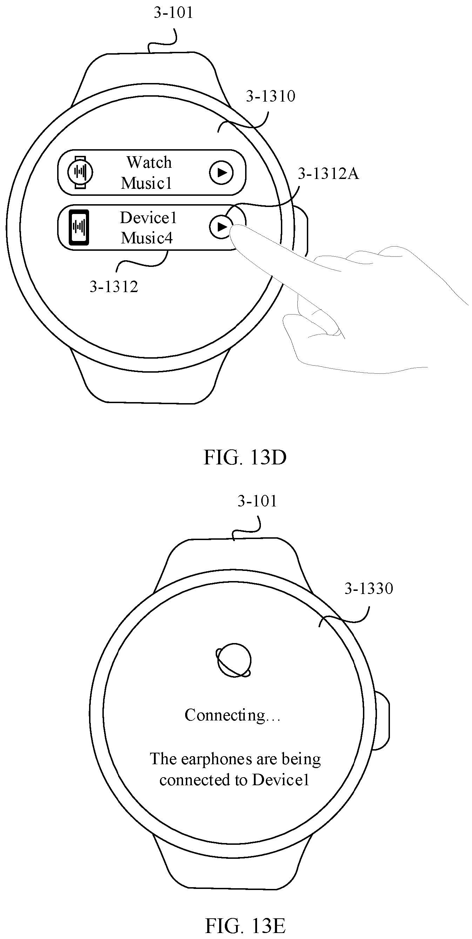

As shown in FIG. 13D, the user interface 3-1310 may further include a music control 3-1312. The music control 3-1312 may include a play control 3-1313A. In response to an operation performed on the play control 3-1312A, the smartwatch 3-101 may detect whether the earphones 3-102 are connected to the electronic device 3-200. In a possible implementation, because the smartwatch 3-101 is not connected to the earphones 3-102, the smartwatch 3-101 may send a query message to the electronic device 3-200, to query whether the electronic device 3-200 is connected to the earphones 3-102. The electronic device 3-200 may send a status of a connection between the electronic device 3-200 and the earphones 3-102 to the smartwatch 3-101.

If it is detected that a communication connection is established between the earphones 3-102 and the electronic device 3-200, the smartwatch 3-101 may control, according to embodiments shown in FIG. 10I and FIG. 10J, the electronic device 3-200 to play the music on the electronic device 3-200 through the earphones 3-102.

If it is detected that the earphones 3-102 are not connected to the electronic device 3-200, the smartwatch 3-101 may send, to the electronic device 3-200, an instruction for establishing a communication connection to the earphones 3-102. When receiving the instruction for establishing the communication connection, the electronic device 3-200 may search for the earphones 3-102, and establish the communication connection to the earphones 3-102 after finding the earphones 3-102. In a process in which the electronic device 3-200 establishes the communication connection to the earphones 3-102, the smartwatch 3-101 may display a user interface 3-1330 shown in FIG. 13E. For the user interface 3-1330, refer to the user interface 3-1220 shown in FIG. 12C.

For a scenario in which the electronic device 3-200 successfully establishes or fails to establish the communication connection to the earphones 3-102, refer to the descriptions of the scenario shown in FIG. 12C to FIG. 12E. Details are not described herein again.

In some embodiments, an audio playing apparatus (for example, an earpiece or a speaker) is configured in the smartwatch 3-101. The smartwatch 3-101 may play audio on devices such as the smartwatch 3-101 and the electronic device 3-200.

For example, in response to an operation of playing the music on the smartwatch 3-101 (refer to the operation shown in FIG. 6H), the smartwatch 3-101 may detect whether the smartwatch 3-101 is wirelessly connected to the earphones 3-102. If the smartwatch 3-101 is wirelessly connected to the earphones 3-102, the smartwatch 3-101 may send audio data of music playing to the earphones 3-102, and play the music on the smartwatch 3-101 through the earphones 3-102. If there is no wireless connection between the smartwatch 3-101 and the earphones 3-102, the smartwatch 3-101 may play the music on the smartwatch 3-101 through the audio playing apparatus in the smartwatch 3-101. A case in which there is no wireless connection between the smartwatch 3-101 and the earphones 3-102 may include: The earphones 3-102 are in an in state, and the earphones 3-102 are in an out state but is not wirelessly connected to the smartwatch 3-101.

For another example, in response to an operation of playing the music on the electronic device 3-200 (refer to the operation shown in FIG. 10F), the smartwatch 3-101 may detect whether the electronic device 3-200 is connected to the earphones 3-102. If the electronic device 3-200 is connected to the earphones 3-102, the smartwatch 3-101 may indicate the electronic device 3-200 to play the music through the earphones 3-102. If the electronic device 3-200 is not connected to the earphones 3-102, the smartwatch 3-101 may indicate the electronic device 3-200 to establish the communication connection to the earphones 3-102. If the electronic device 3-200 successfully establishes the communication connection to the earphones 3-102, the electronic device 3-200 may play the music through the earphones 3-102. If the electronic device 3-200 fails to establish the communication connection to the earphones 3-102, the electronic device 3-200 may play the music through an audio playing apparatus in the electronic device 3-200, or the smartwatch 3-101 may indicate the electronic device 3-200 to play the music through the smartwatch 3-101. When the smartwatch 3-101 indicates the electronic device 3-200 to play the music through the smartwatch 3-101, the electronic device 3-200 may send audio data of music playing to the smartwatch 3-101. Then, the smartwatch 3-101 may play the music on the electronic device 3-200.

**FIG. 14A to FIG. 14M** **show an example of another scenario in which audio playing is controlled through the smartwatch 3-101.**

As shown in FIG. 14A, the smartwatch 3-101 is paired with the electronic device 3-200, and a communication connection is established between the smartwatch 3-101 and the electronic device 3-200. A communication connection is established between the earphones 3-102 and the smartwatch 3-101. A communication connection is established between the earphones 3-102 and the electronic device 3-300. A communication connection has been established between the earphones 3-102 and the electronic device 3-200, but the earphones 3-102 and the electronic device 3-200 currently are not connected. The communication connection between the electronic device 3-200 and the smartwatch 3-101, the communication connection between the smartwatch 3-101 and the earphones 3-102, and the communication connection between the earphones 3-102 and the electronic device 3-300 may be, for example, Bluetooth communication connections. A communication connection manner is not limited in embodiments of this application. For a manner in which the smartwatch 3-101 establishes communication connections to the electronic device 3-200 and the earphones 3-102, and a manner in which the earphones 3-102 establish the communication connection to the electronic device 3-300, refer to the descriptions in the foregoing embodiments. Details are not described herein again.

In a connection relationship shown in FIG. 14A, the earphones 3-102 may play music from the electronic device 3-300 with a sound. The electronic device 3-300 may send audio data of music playing to the earphones 3-102. Music playing control information may be forwarded between the electronic device 3-300 and the smartwatch 3-101 through the earphone 3-102, to implement transmission of the music playing control information. For example, the electronic device 3-300 may send, to the earphones 3-102, information such as a name of the electronic device 3-300, and a name and a singer name of music played with a sound by the earphones 3-102. Then, the earphones 3-102 may send, to the smartwatch 3-101, information such as the name of the electronic device 3-300, a name and a singer name of music that is being played by the electronic device 3-300. The smartwatch 3-101 may display information such as the name and the singer name of the music that is being played by the electronic device 3-300. In this way, a user can view, on the smartwatch 3-101, a playing status of the music on the electronic device 3-300. For another example, after receiving an operation of pausing playing of the music on the electronic device 3-300, the smartwatch 3-101 may send, to the earphones 3-102, a message for pausing playing of the music on the electronic device 3-300. The earphones 3-102 may pause playing of the music on the electronic device 3-300, and send the message for pausing playing of the music on the electronic device 3-300 to the electronic device 3-300. In this way, the user can control, through the smartwatch 3-101, the electronic device 3-300 to play the music.

As shown in FIG. 14B, the smartwatch 3-101 may display a user interface 3-1410. For the user interface 3-1410, refer to the user interface 3-1050 shown in FIG. 10I. The user interface 3-1410 may include a music control 3-1411, a music control 3-1412, and a music control 1-1413.

The music control 3-1411 may be used to control music locally stored in the smartwatch 3-101. The music control 3-1412 may be used to control the music on the electronic device 3-200. The music control 3-1413 may be used to control the music on the electronic device 3-300.

The music control 3-1413 may include a device type identifier 3-1413A, a music information display area 3-1413B, and a play control 3-1413C.

The device type identifier 3-1413A may indicate a type of a device to which music that can be controlled by the music control 3-1413 belongs. For example, the device type identifier 3-1413A is a mobile phone icon, and may indicate that the type of the device to which the music that can be controlled by the music control 3-141 belongs is a mobile phone.

The music information display area 3-1413B may be used to display information such as a name of the device to which the music that can be controlled by the music control 3-1413 belongs and a name of the music. For example, text information "Device2 Music5" may be displayed in the music information display area 3-1413B. This may indicate that the name of the device to which the music that can be controlled by the music control 3-1413 belongs is "Device2" (namely, a name of the electronic device 3-300), and there is to-be-played music "Music5" on the electronic device 3-300. In embodiments of this application, an example in which the electronic device 3-300 is a mobile phone named "Device2" is used for description. The name of the electronic device 3-300 is not limited in embodiments of this application.

The play control 3-1413C may be used to trigger the smartwatch 3-101 to play music in the device to which the music that can be controlled by the music control 3-1413 belongs (namely, the music on the electronic device 3-300). In response to an operation performed on the play control 3-1413C shown in FIG. 14B, the smartwatch 3-101 may control the electronic device 3-300 to play music (for example, music "Music5").

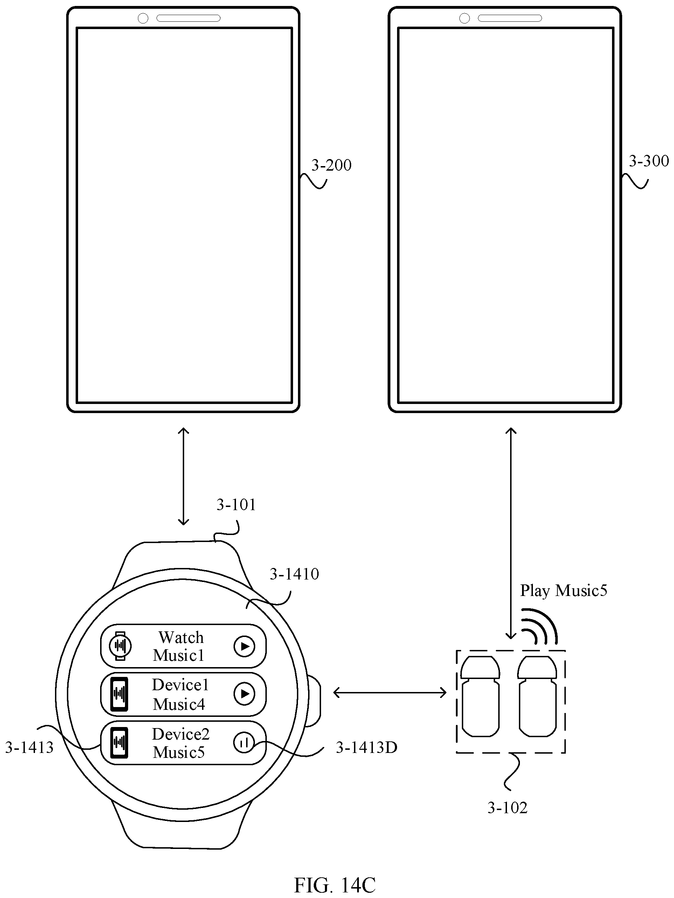

As shown in FIG. 14C, in response to the operation performed on the play control 3-1413C shown in FIG. 14B, the smartwatch 3-101 may indicate the earphones 3-102 to send, to the electronic device 3-300, a message for playing the music "Music5". When receiving the message for playing the music "Music5", the electronic device 3-300 may send audio data of the music "Music5" to the earphones 3-102, and indicate the earphones 3-102 to send, to the smartwatch 3-101, a message indicating that the music "Music5" is being played. When the audio data of the music "Music5" is received, the earphones 3-102 may play the music "Music5" with a sound. When receiving the message that indicates that the music "Music5" is being played and that is forwarded through the earphones 3-102, the smartwatch 3-101 may display the user interface 3-1410 shown in FIG. 14C. The smartwatch 3-101 may change the play control 3-1413C in the music control 3-1413 shown in FIG. 14B to a pause control 3-1413D shown in FIG. 14C. The pause control 3-1413D may be used to control the electronic device 3-300 to pause playing of the music.

As shown in FIG. 14D, the smartwatch 3-101 receives an operation performed on the music control 3-1413 on the user interface 3-1410. The operation may be an operation, for example, a tap operation, performed on an area other than the pause control 3-1413D in the music control 3-1413. In response to the operation performed on the music control 3-1413, the smartwatch 3-101 may display a user interface 3-1422 shown in FIG. 14E. For the user interface 3-1420, refer to the user interface 3-640 shown in FIG. 6F.

As shown in FIG. 14E, the user interface 3-1420 may include a device type identifier 3-1421, a music name 3-1422, and a music setting control 3-1423.

The device type identifier 3-1421 may indicate a type of a device to which music to be played or being played on the user interface 3-1420 belongs. For example, the device type identifier 3-1420 is a mobile phone icon shown in FIG. 14E, and may indicate that the device to which the music to be played or being played on the user interface 3-1420 belongs is a mobile phone. The mobile phone is the electronic device 3-300 in this application.

The music name 3-1422 may indicate a name of the music to-be-played or being played on the user interface 3-1420. For example, the music name 3-1422 is "Music5". The music named "Music5" is music in the electronic device 3-300.

The music setting control 3-1423 may be used to open a music playing setting interface.

For other controls on the user interface 3-1420, refer to the descriptions of the controls on the user interface 3-640 shown in FIG. 6F in the foregoing embodiments. Details are not described herein again.

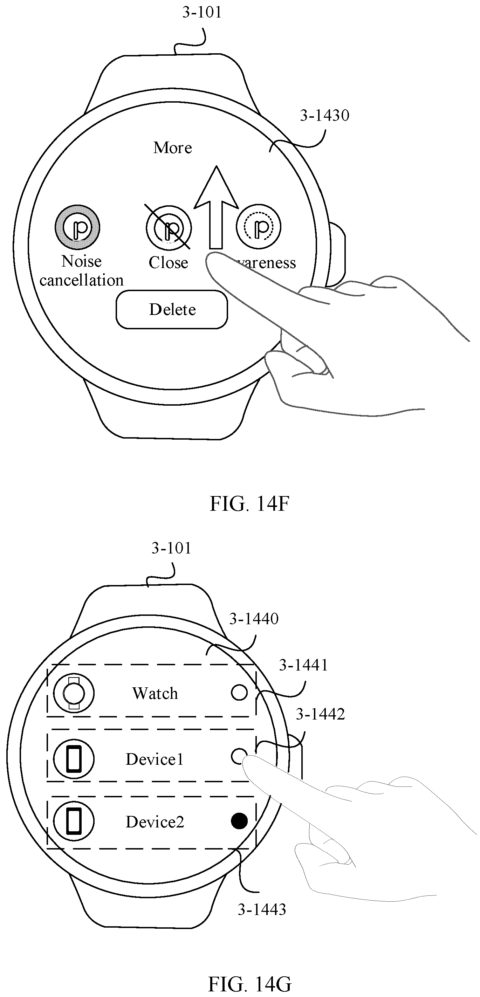

In response to an operation performed on the music setting control 3-1423, the smartwatch 3-101 may display a user interface 3-1430 shown in FIG. 14F. For the user interface 3-1430, refer to the user interface 3-720 shown in FIG. 7B.

As shown in FIG. 14F, in response to an operation of sliding upward performed on the user interface 3-1430, the smartwatch 3-101 may display a user interface 3-1440 shown in FIG. 14G. For the user interface 3-1440, refer to the user interface 3-1030 shown in FIG. 10D.

As shown in FIG. 14G, the user interface 3-1440 may include a device option 3-1441, a device option 3-1442, and a device option 3-1443. The device option 3-1441 may indicate a smartwatch named "Watch", namely, the smartwatch 3-101. The device option 3-1442 may indicate a mobile phone named "Device1", namely, the electronic device 3-200. The device option 3-1443 may indicate a mobile phone named "Device2", namely, the electronic device 3-300. The device options on the user interface 3-1440 may be used to perform device switching, to control music playing of different devices through the smartwatch 3-101.

It can be learned from FIG. 14E that the user interface 3-1420 displayed by the smartwatch 3-101 includes an operation control for controlling the electronic device 3-200 to play music. Correspondingly, in FIG. 14G, the device option 3-1443 is in a selected state. In this way, after returning to the user interface 3-1420 on the smartwatch 3-101, the user may control, through the operation control on the user interface 3-1420, the electronic device 3-200 to play the music.

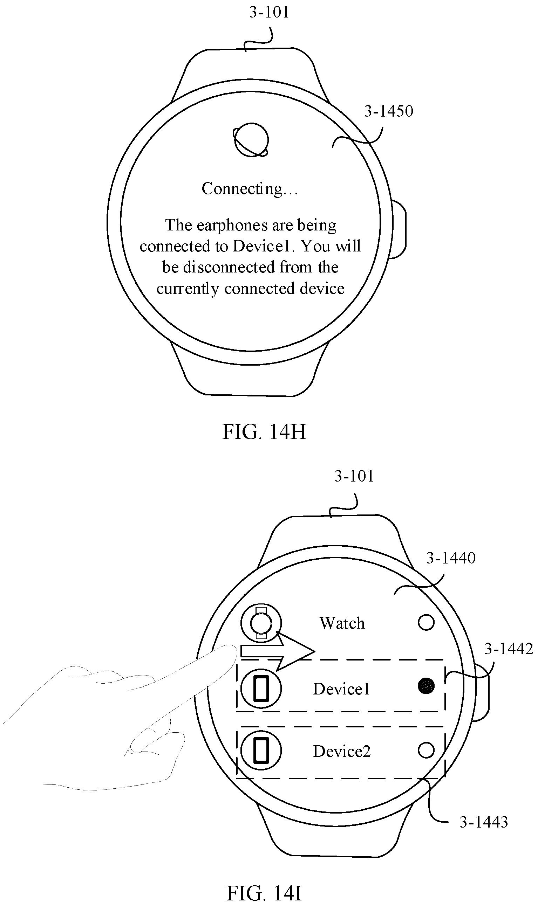

As shown in FIG. 14G, in response to an operation performed on the device option 3-1442, the smartwatch 3-101 may display a user interface 3-1450 shown in FIG. 14H. The user interface 3-1450 may include a connection prompt. The connection prompt may be used to give the user a prompt that the earphones are being connected to the electronic device 3-200 corresponding to the device option 3-1442, and is to be disconnected from the currently connected electronic device 3-300. Content of the connection prompt may include "Connecting... The earphones are being connected to Device1. You will be disconnected from the currently connected device". Specific content of the connection prompt on the user interface 3-1450 is not limited in embodiments of this application.

It may be understood that the earphones 3-102 are currently connected to the electronic device 3-300, and is playing the music from the electronic device 3-300 with a sound. The smartwatch 3-101 receives the operation performed on the device option 3-1442 shown in FIG. 14G, and may provide a related operation control for controlling the electronic device 3-200 corresponding to the device option 3-1442 to play the music, so that the user controls, through the smartwatch 3-101, the electronic device 3-200 to play the music through the earphones 3-102. In this case, in response to the operation performed on the device option 3-1442 shown in FIG. 14G, the smartwatch 3-101 may indicate the earphones 3-102 to be disconnected from the electronic device 3-300, and establish a communication connection to the electronic device 3-200.

For an implementation method in which the smartwatch 3-101 indicates the earphones 3-102 to establish the communication connection to the electronic device 3-200, refer to the descriptions in the foregoing embodiments. Details are not described herein again.

In some embodiments, when the communication connection between the earphones 3-102 and the electronic device 3-300 is disconnected, the electronic device 3-300 may pause playing of the music. Optionally, when the communication connection between the earphones 3-102 and the electronic device 3-300 is disconnected, the electronic device 3-300 may still resume the music. The electronic device 3-300 may play the music with a sound through a speaker of the electronic device 3-300.

When the earphones 3-102 successfully establish the communication connection to the electronic device 3-200, the smartwatch 3-101 may display a user interface 3-1440 shown in FIG. 14I. The smartwatch 3-101 may change a device option in a selected state on the user interface 3-1440 from the device option 3-1443 shown in FIG. 14G to the device option 1442 shown in FIG. 14I.

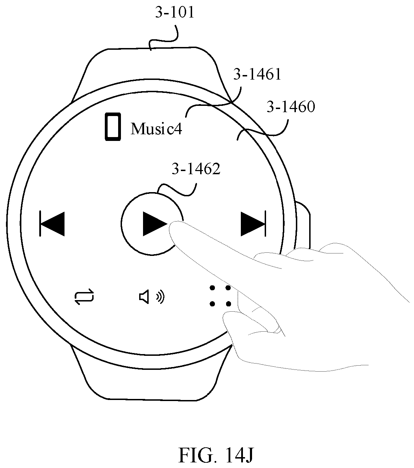

As shown in FIG. 14I, when the device option 3-1442 is in the selected state, in response to a user operation of sliding rightward performed on the user interface 3-1440, the smartwatch 3-101 may display a user interface 3-1460 shown in FIG. 14J. For the user interface 3-1460, refer to the user interface 3-640 shown in FIG. 6F.

As shown in FIG. 14J, the user interface 3-1460 may include a music name 3-1461 and a play control 3-1462.

The music name 3-1461 may indicate a name of music to-be-played or being played on the user interface 3-1460. For example, the music name 3-1461 is "Music4". The music named "Music4" is music in the electronic device 3-200.

The play control 3-1462 may be used to trigger the smartwatch 3-101 to control the electronic device 3-200 to play the music.

In response to an operation performed on the play control 3-1462, the smartwatch 3-101 may control the electronic device 3-200 to play the music (for example, the music "Music4" of the electronic device 3-200) with a sound through the earphones 3-102.

For an implementation in which the smartwatch 3-101 controls the electronic device 3-200 to play the music with a sound through the earphones 3-102, refer to the descriptions of embodiments shown in FIG. 10F and FIG. 10G. Details are not described herein again.

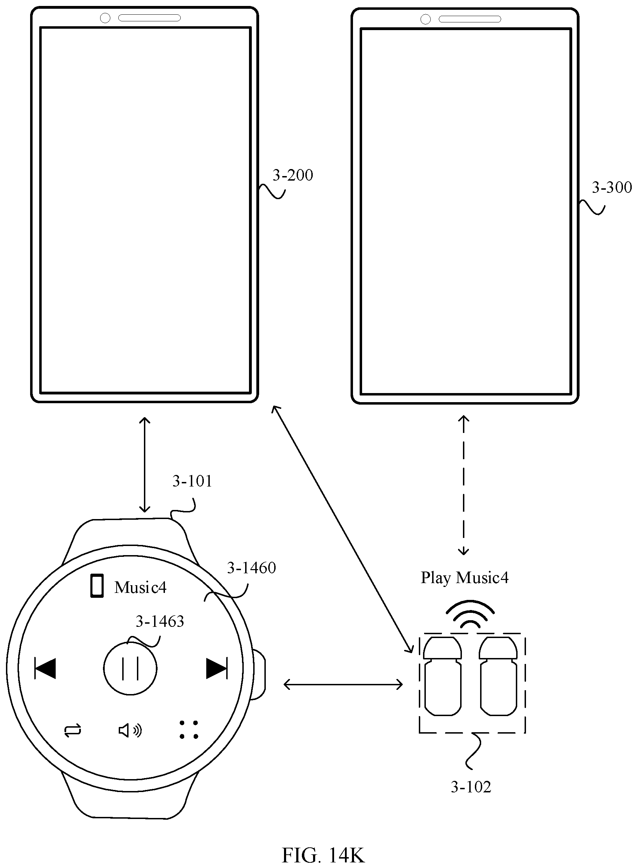

As shown in FIG. 14K, the communication connection between the earphones 3-102 and the electronic device 3-300 is disconnected. The earphones 3-102 currently establish a communication connection to the electronic device 3-200, and may play the music "Music4" from the electronic device 3-200. When the earphones 3-102 play the music from the electronic device 3-200, the smartwatch 3-101 may display a user interface 3-1460 shown in FIG. 14K. In FIG. 14K, the user interface 3-1460 may include a pause control 3-1463. The pause control 3-1463 may be used to trigger the smartwatch 3-101 to control the electronic device 3-200 to pause playing of the music.

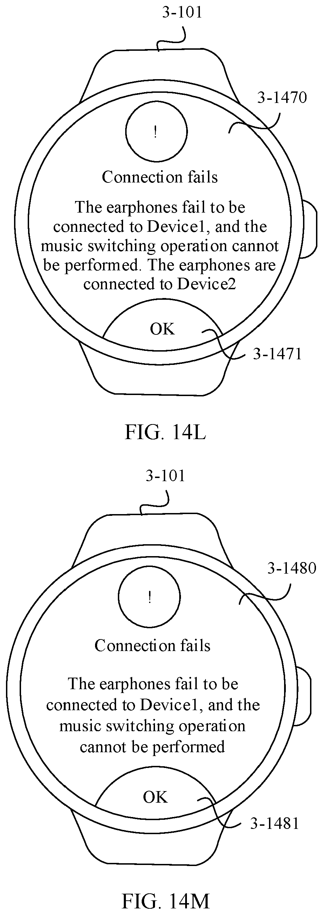

When the earphones 3-102 fail to establish the communication connection to the electronic device 3-200, the smartwatch 3-101 may display a user interface 3-1470 shown in FIG. 14L.

As shown in FIG. 14L, the user interface 3-1470 may include a connection failure prompt. The connection failure prompt may be used to give the user a prompt that the earphones 3-102 fail to be connected to the electronic device 3-200, and the earphones 3-102 are still connected to the electronic device 3-300. Content of the connection failure prompt may include "Connection fails. The earphones fail to be connected to Device1, and the music switching operation cannot be performed. The earphones are connected to Device2". In this way, the user may know that the earphones 3-102 fail to be connected to the electronic device 3-200, and cannot play the music from the electronic device 3-200. The content of the connection failure prompt on the user interface 3-1470 is not limited in embodiments of this application. If the user wants to play the music from the electronic device 3-200 through the earphones 3-102, the user may perform an operation of connecting the earphone 3-102 to the electronic device 3-200 again. The user interface 3-1470 may further include a confirm control 3-1471. In response to an operation performed on the confirm control 3-1471, the smartwatch 3-101 may display the user interface 3-1440 shown in FIG. 14G again.

In other words, when the earphones 3-102 fail to establish the communication connection to the electronic device 3-200, the earphones 3-102 may re-establish the communication connection to the electronic device 3-300, and resume the music from the electronic device 3-300.

In some embodiments, if the earphones 3-102 fail to establish the communication connection to the electronic device 3-200, and the earphones 3-102 also fail to re-establish the communication connection to the electronic device 3-300, the smartwatch 3-101 may display a user interface 3-1480 shown in FIG. 14M.

As shown in FIG. 14M, the user interface 1480 may include a connection failure prompt. The connection failure prompt may be used to give the user a prompt that the earphones 3-102 fail to be connected to the electronic device 3-200. Content of the connection failure prompt may include "Connection fails. The earphones fail to be connected to Device1, and the music switching operation cannot be performed". The content of the connection failure prompt on the user interface 3-1480 is not limited in embodiments of this application. The user interface 14M may further include a confirm control 3-1481. In response to an operation performed on the confirm control 3-1481, the smartwatch 3-101 may display the user interface 3-1440 shown in FIG. 14G again.

It can be learned from the scenario shown in FIG. 14A to FIG. 14M that, in addition to controlling an electronic device (for example, the electronic device 3-200) that directly establishes a communication connection to the smartwatch to play music, the smartwatch 3-101 may control, through the earphones 3-102, an electronic device (for example, the electronic device 3-300) that does not establish a communication connection to the smartwatch to play music. The user may control, through the smartwatch 3-101, the earphones 3-102 to play music on any one of the smartwatch 3-101, the electronic device 3-200, and the electronic device 3-300. This can avoid a conflict that a plurality of devices preempt the earphones 3-102, and improve user experience of listening to audio through the earphones 3-102.

**FIG. 15A to FIG. 15F** **show an example of another scenario in which audio playing is controlled through the smartwatch 3-101.**

As shown in FIG. 15A, the smartwatch 3-101 is paired with the electronic device 3-200, and a communication connection is established between the smartwatch 3-101 and the electronic device 3-200. A communication connection is established between the earphones 3-102 and the smartwatch 3-101. A communication connection is established between the earphones 3-102 and the electronic device 3-200. A communication connection has been established between the earphones 3-102 and the electronic device 3-300, but the earphones 3-102 and the electronic device 3-300 currently are not connected. The communication connection between the electronic device 3-200 and the smartwatch 3-101, the communication connection between the smartwatch 3-101 and the earphones 3-102, and the communication connection between the earphones 3-102 and the electronic device 3-200 may be, for example, Bluetooth communication connections. A communication connection manner is not limited in embodiments of this application. For a manner in which the smartwatch 3-101 establishes communication connections to the electronic device 3-200 and the earphones 3-102, and a manner in which the earphones 3-102 establish the communication connection to the electronic device 3-200, refer to the descriptions in the foregoing embodiments. Details are not described herein again.

In a connection relationship shown in FIG. 15A, the earphones 3-102 may play music from the electronic device 3-200 with a sound. For a method in which the smartwatch 3-101 controls the electronic device 3-200 to play the music with a sound through the earphones 3-102, refer to the descriptions of embodiments shown in FIG. 10F and FIG. 10G. Details are not described herein again. Because the earphones 3-102 currently are not connected to the electronic device 3-300, the electronic device 3-300 may play music with a sound through a speaker of the electronic device 3-300 after receiving a music playing operation.

When the earphones 3-102 play music "Music4" from the electronic device 3-200 with a sound, the smartwatch 3-101 may display a user interface 3-1510 shown in FIG. 15A. For the user interface 3-1510, refer to the user interface 3-1410 shown in FIG. 14B. The user interface 3-1510 may include a music control 3-1511, a music control 3-1512, and a music control 1-1513.

The music control 3-1511 may be used to control music locally stored in the smartwatch 3-101. The music control 3-1512 may be used to control the music on the electronic device 3-200. The music control 3-1513 may be used to control the music on the electronic device 3-300.

The music control 3-1512 may include a pause control 3-1512A. The pause control 3-1512A may be used to trigger the smartwatch 3-101 to control the electronic device 3-200 to pause playing of the music. When the earphones 3-102 play the music from the electronic device 3-200, after the electronic device 3-200 pauses playing of the music, the earphones 3-102 may pause playing of the music from the electronic device 3-200 with a sound.

The music control 3-1513 may include a play control 3-1513A. The play control 3-1513A may be used to trigger the smartwatch 3-101 to control the electronic device 3-300 to play the music. After the electronic device 3-300 establishes a communication connection to the earphones 3-102, the music on the electronic device 3-300 may be played with a sound by the earphones 3-102.

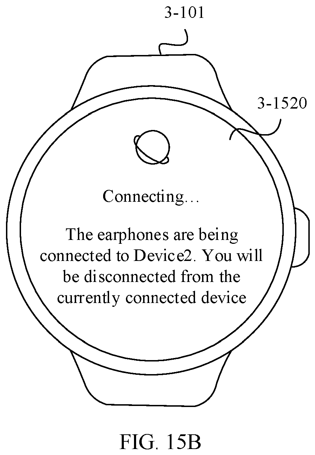

In response to an operation performed on the play control 3-1513A, the smartwatch 3-101 may display a user interface 3-1520 shown in FIG. 15B. For the user interface 3-1520, refer to the user interface 3-1450 shown in FIG. 14H.

As shown in FIG. 15B, the user interface 3-1520 may include a connection prompt. The connection prompt may be used to give a user a prompt that the earphones are being connected to the electronic device 3-300 corresponding to the music control 3-1513, and is to be disconnected from the currently connected electronic device 3-200. Content of the connection prompt may include "Connecting... The earphones are being connected to Device2. You will be disconnected from the currently connected device". Specific content of the connection prompt on the user interface 3-1520 is not limited in embodiments of this application.

It may be understood that the earphones 3-102 are currently connected to the electronic device 3-200, and is playing the music from the electronic device 3-200 with a sound. The smartwatch 3-101 receives an operation performed on the play control 3-1513A in the music control 3-1513 shown in FIG. 15A, and may control, through the earphones 3-102, the electronic device 3-300 corresponding to the music control 3-1513 to play the music, so that the user controls, through the smartwatch 3-101, the electronic device 3-300 to play the music through the earphones 3-102. In this case, in response to the operation performed on the play control 3-1513A shown in FIG. 15A, the smartwatch 3-101 may indicate the earphones 3-102 to be disconnected from the electronic device 3-200, and establish a communication connection to the electronic device 3-300.

In some embodiments, when the communication connection between the earphones 3-102 and the electronic device 3-200 is disconnected, the electronic device 3-200 may pause playing of the music.

In response to the operation performed on the play control 3-1513A shown in FIG. 15A, the smartwatch 3-101 may send, to the earphones 3-102, an instruction for establishing the communication connection to the electronic device 3-300. According to the communication connection establishment instruction, the earphones 3-102 may search for the electronic device 3-300, and request the electronic device 3-300 to establish the communication connection.

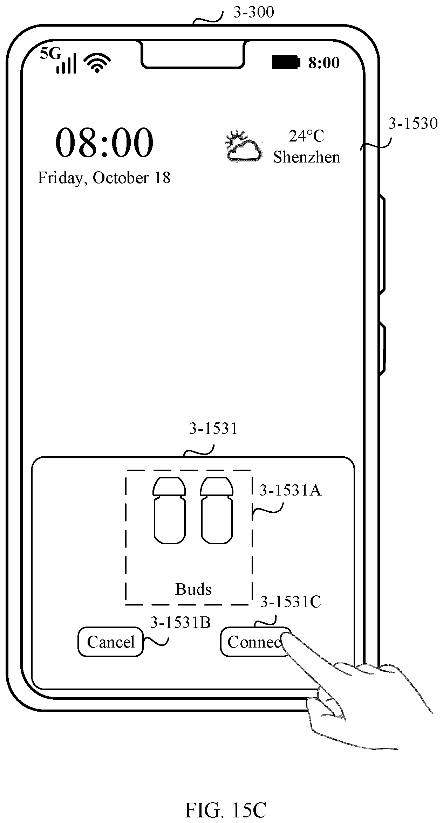

When receiving the request of the earphones 3-102 for establishing the communication connection, the electronic device 3-300 may display a user interface 3-1530 shown in FIG. 15C.

As shown in FIG. 15C, the user interface 3-1530 may include a connection widget 3-1531. The connection widget 3-1531 may be used to give the user a prompt that a device requests to establish a communication connection to the electronic device 3-300. The connection widget 3-1531 may include a device information display area 3-1531A, a cancel control 3-1531B, and a connection control 3-1531C.

The device information display area 3-1531A may be used to display related information of the device that requests to establish the communication connection to the electronic device 3-300, for example, a device image and a device name. The device that requests to establish the communication connection to the electronic device 3-300 is the earphones 3-102. Therefore, an image of the earphones 3-102 and a name (for example, "Buds") of the earphones 3-102 may be displayed in the device information display area 3-1531A. The name of the earphones 3-102 is not limited in embodiments of this application.

The cancel control 3-1531B may be used to decline establishment of the communication connection to the earphones 3-102.

The connection control 3-1531C may be used to agree to establish the communication connection to the earphones 3-102. In response to an operation performed on the connection control 3-1531C, the electronic device 3-300 may send, to the earphones 3-102, a message indicating that the establishment of the communication connection is agreed.

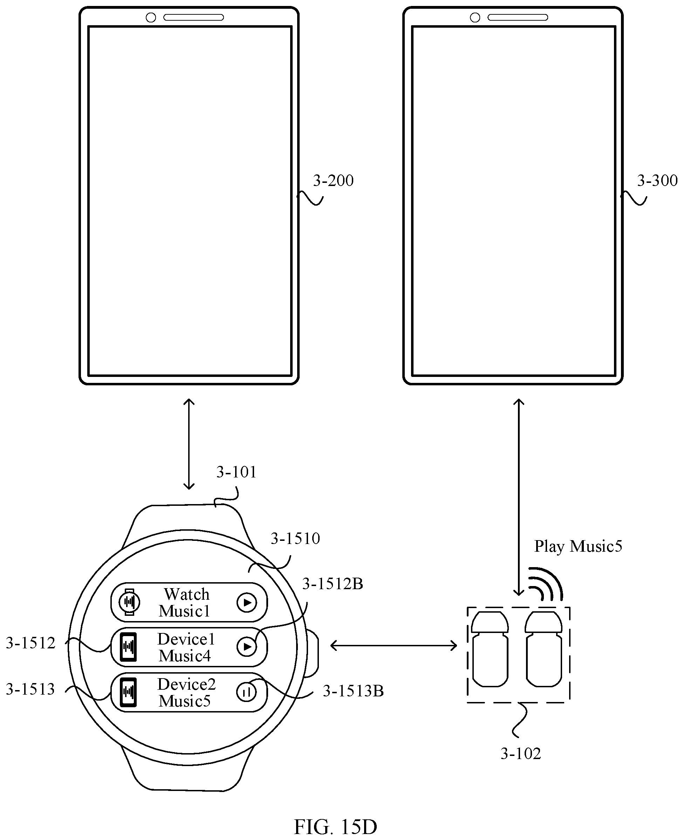

As shown in FIG. 15D, the earphones 3-102 successfully establish the communication connection to the electronic device 3-300. The smartwatch 3-101 may indicate the earphones 3-102 to send a music playing message to the electronic device 3-300. When receiving the music playing message, the electronic device 3-300 may send audio data of music playing, for example, audio data of music "Music5", to the earphones 3-102. The earphones 3-102 may play the music "Music5" from the electronic device 3-300 with a sound. In addition, the electronic device 3-300 may further send, to the smartwatch 3-101 through the earphones 3-102, a message indicating that the music is being played. The smartwatch 3-101 may display a user interface 3-1510 shown in FIG. 15D. The smartwatch 3-101 may change the pause control 3-1512A in the music control 3-1512 shown in FIG. 15A to a play control 3-1512B shown in FIG. 15D, and change the play control 3-1513Ain the music control 3-1513 shown in FIG. 15A to a pause control 3-1513C shown in FIG. 15D. The pause control 3-1513B may be used to trigger the smartwatch 3-101 to control the electronic device 3-300 to pause playing of the music.

It can be learned that, when the earphones 3-102 establish the communication connection to the electronic device 3-300, the communication connection between the earphones 3-102 and the electronic device 3-200 is disconnected. In addition, the electronic device 3-200 may pause playing of the music.

In some embodiments, when the earphones 3-102 establishes the communication connection to the electronic device 3-300 according to the communication connection establishment instruction sent by the smartwatch 3-101, the communication connection may fail to be established to the electronic device 3-300. For a scenario in which the earphones 3-102 fail to establish the communication connection to the electronic device 3-300, refer to the foregoing scenario shown in FIG. 14L and FIG. 14M in which the earphones 3-102 fail to establish the communication connection to the electronic device 3-200. Details are not described herein again.

In some embodiments, when there is a communication connection established between the earphones 3-102 and the electronic device 3-300, the electronic device 3-300 may control playing of music in the earphones 3-102 based on a received music playing control operation.

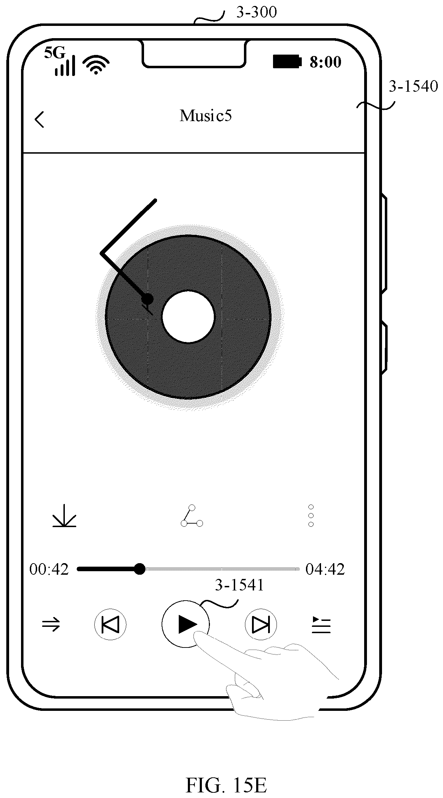

Specifically, as shown in FIG. 15E, the electronic device 3-300 may display a user interface 3-1540. The user interface 3-1540 may be a user interface of a Music application on the electronic device 3-300. The user interface 3-1540 may include a play control 3-1541. In response to an operation performed on the play control 3-1541, the electronic device 3-200 may start to play to-be-played music (for example, the music "MusicS") corresponding to the user interface 3-1540.

Because the electronic device 3-300 is connected to the earphones 3-102, the electronic device 3-300 may send audio data of music playing to the earphones 3-102, to play music (for example, the music "Music5") on the electronic device 3-300 with a sound through the earphones 3-102.

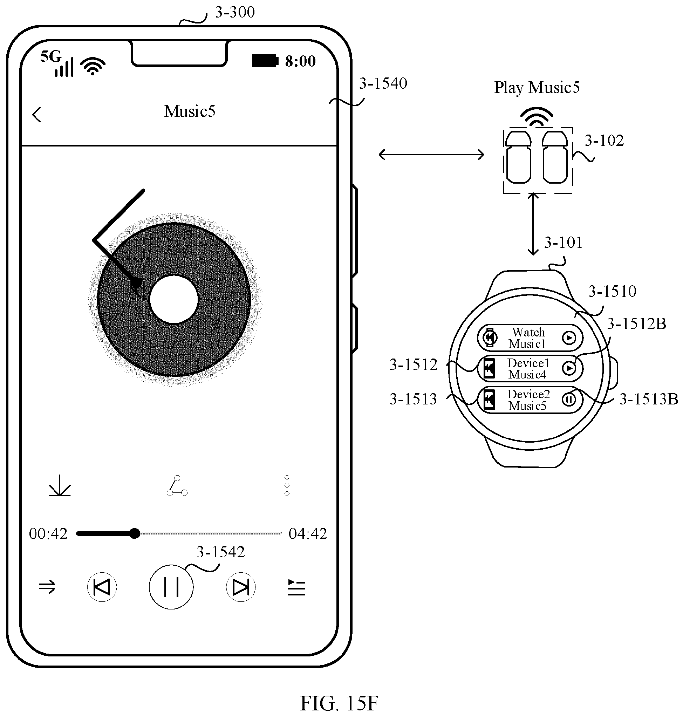

As shown in FIG. 15F, the electronic device 3-300 may send the audio data of "Music5" to the earphones 3-102. The earphones 3-102 may play the music "Music5" of the electronic device 3-300. The electronic device 3-300 may display a user interface 3-1540. In a process of playing the music through the earphones 3-102, the electronic device 3-300 may display a pause control 3-1542 on the user interface 3-1540. The pause control 3-1542 may be used to pause playing of the music. In addition, the electronic device 3-300 may further send, to the smartwatch 3-101 through the earphones 3-102, a message indicating that the music is being played. When receiving the message indicating that the music is being played, the smartwatch 3-101 may display the user interface 3-1510 shown in FIG. 15F. In FIG. 15F, the user interface 1510 may include the music control 3-1512 and the music control 3-1513. The music control 3-1512 may include a play control 3-1512B. The play control 3-1512B may be used to trigger the smartwatch 3-101 to control the electronic device 3-200 corresponding to the music control 3-1512 to play the music. The music control 3-1513 may include a pause control 3-1513B. The pause control 3-1513B may indicate that the electronic device 3-300 is playing the music. The pause control 3-1513B may be used to trigger the smartwatch 3-101 to control the electronic device 3-300 to pause playing of the music.

It can be learned from the scenario shown in FIG. 15A to FIG. 15F that the smartwatch 3-101 may control different devices to play music. The user may control, through the smartwatch 3-101, the earphones 3-102 to play music on different devices. This can avoid a conflict that a plurality of devices preempt the earphones 3-102, and improve user experience of listening to audio through the earphones 3-102.

**FIG. 16A to FIG. 16G** **show an example of another scenario in which audio playing is controlled through the smartwatch 3-101.**

As shown in FIG. 16A, the smartwatch 3-101 is paired with the electronic device 3-200, and a communication connection is established between the smartwatch 3-101 and the electronic device 3-200. A communication connection is established between the earphones 3-102 and the electronic device 3-300. A communication connection between the earphones 3-102 and the smartwatch 3-101 is disconnected. In addition, a communication connection has been established between the earphones 3-102 and the electronic device 3-200, but the earphones 3-102 and the electronic device 3-200 currently are not connected. The communication connection between the smartwatch 3-101 and the electronic device 3-200 and the communication connection between the earphones 3-102 and the electronic device 3-300 may be, for example, Bluetooth communication connections. A communication connection manner is not limited in embodiments of this application. For a manner in which the smartwatch 3-101 establishes the communication connection to the electronic device 3-200 and a manner in which the earphones 3-102 establish the communication connection to the electronic device 3-300, refer to the descriptions in the foregoing embodiments. Details are not described herein again.

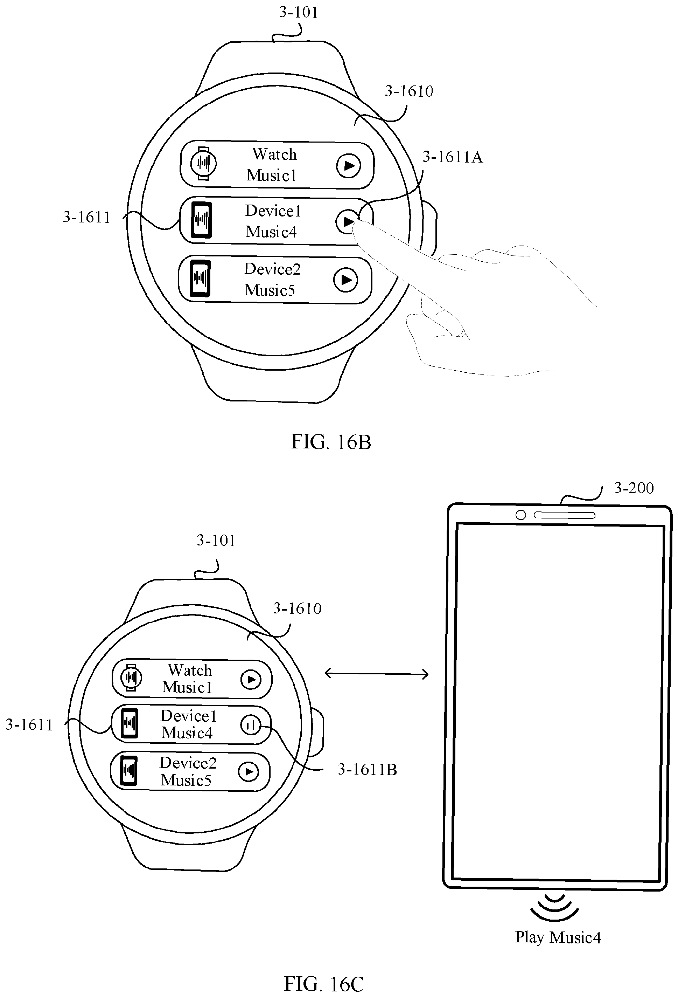

As shown in FIG. 16B, the smartwatch 3-101 may display a user interface 3-1610 shown in FIG. 16B. For the user interface 3-1610, refer to the user interface 3-1410 shown in FIG. 14B. The user interface 3-1610 may include a music control 3-1611. The music control 3-1611 may be used to control the music on the electronic device 3-200. The music control 3-1611 may include a play control 3-1611A.

As shown in FIG. 16C, in response to an operation performed on the play control 3-1611A shown in FIG. 16B, the smartwatch 3-101 may send a music playing message to the electronic device 3-200. Because the electronic device 3-200 is not connected to the earphones 3-102, the electronic device 3-200 may play the music (for example, music "Music4") with a sound through a speaker on the electronic device 3-200 after receiving the music playing message.

After playing the music, the electronic device 3-200 may send, to the smartwatch 3-101, a message indicating that the music is being played. Based on the message indicating that the music is being played, the smartwatch 3-101 may display a user interface 3-1610 shown in FIG. 16C. The smartwatch 3-101 may change the play control 3-1611A in the music control 3-1611 shown in FIG. 16B to a pause control 3-1611B shown in FIG. 16C. The pause control 3-1611B may be used to trigger the smartwatch 3-101 to control the electronic device 3-200 to pause playing of the music.

In some embodiments, in response to the operation performed on the play control 3-1611A shown in FIG. 16B, the smartwatch 3-101 may further detect whether the electronic device 3-200 is connected to the earphones 3-102. When determining that the electronic device 3-200 is not connected to the earphones 3-102, the smartwatch 3-101 may further send, to the electronic device 3-200, an instruction for establishing a communication connection to the earphones 3-102. According to the instruction for establishing the communication connection, the electronic device 3-200 may search for the earphones 3-102, and request to establish the communication connection to the earphones 3-102.

When there is a communication connection established between the earphones 3-102 and the electronic device 3-300, the earphones 3-102 may decline the request of the electronic device 3-200 for establishing the communication connection. In other words, the earphones 3-102 may maintain the communication connection to the electronic device 3-300. Alternatively, when receiving the request of the electronic device 3-200 for establishing the communication connection, the earphones 3-102 may determine, based on whether a service of the electronic device 3-300 is currently being performed, whether to agree to establish the communication connection to the electronic device 3-200. If the earphones 3-102 currently do not perform the service of the electronic device 3-300 (for example, the earphones 3-102 do not play audio from the electronic device 3-300), the earphones 3-102 may disconnect the communication connection to the electronic device 3-300, and agree to the request of the electronic device 3-200 for establishing the communication connection. After the earphones 3-102 are successfully connected to the electronic device 3-200, the electronic device 3-200 may play the music through the earphones 3-102. If the earphones 3-102 are currently performing the service of the electronic device 3-300 (for example, the earphones 3-102 are playing the audio from the electronic device 3-300), the earphones 3-102 may decline the request of the electronic device 3-200 for establishing the communication connection.

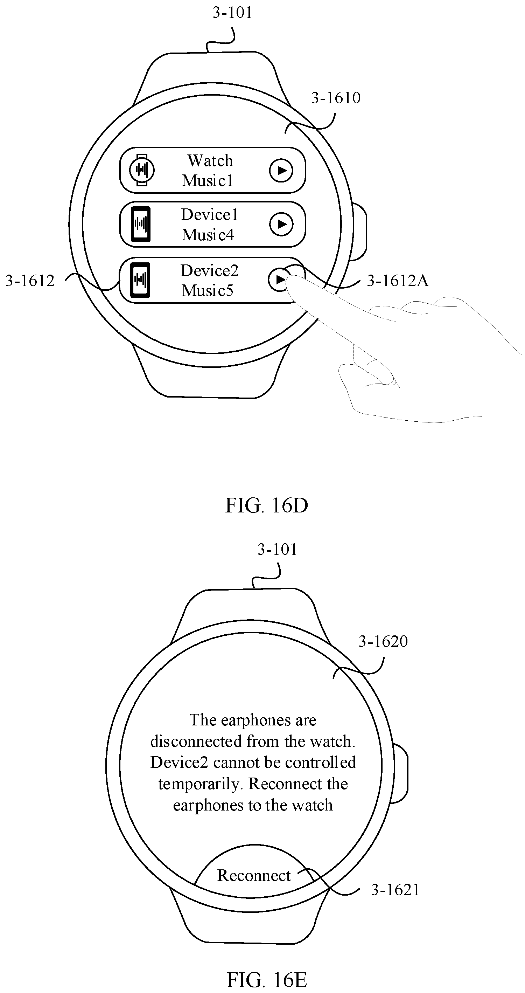

As shown in FIG. 16D, the user interface 3-1610 displayed by the smartwatch 3-101 may further include a music control 3-1612. The music control 3-1612 may be used to control the music on the electronic device 3-300. The music control 3-1612 may include a play control 3-1612A. In response to an operation performed on the play control 3-1612A, the smartwatch 3-101 may display a user interface 1620 shown in FIG. 16E.

As shown in FIG. 16E, the user interface 3-1620 may include a connection prompt. The connection prompt may be used to give a user a prompt that the earphones 3-102 are not connected to the smartwatch 3-101, and the smartwatch 3-101 cannot control the electronic device 3-300 to play the music. Content of the connection prompt may include "The earphones are disconnected from the watch. Device2 cannot be controlled temporarily. Reconnect the earphones to the watch". Specific content of the connection prompt is not limited in embodiments of this application.

The user interface 3-1620 may further include a connection control 3-1621. The connection control 3-1621 may be used to trigger the smartwatch 3-101 to search for the earphones 3-102 and establish a communication connection to the earphones 3-102. For an implementation in which the smartwatch 3-101 establishes the communication connection to the earphones 3-102 in response to an operation performed on the connection control 3-1621, refer to the descriptions of embodiments shown in FIG. 9B and FIG. 9C.

It may be understood that the electronic device 3-300 does not establish a communication connection to the smartwatch 3-101. The communication connection between the smartwatch 3-101 and the earphones 3-102 is disconnected. Therefore, the smartwatch 3-101 cannot communicate with the electronic device 3-300. In this case, the user cannot control the electronic device 3-300 through the smartwatch 3-101. After the smartwatch 3-101 is connected to the earphones 3-102 again, the smartwatch 3-101 may control the electronic device 3-300 through the earphones 3-102, and obtain a playing status of audio in the electronic device 3-300, so that the user views, on the smartwatch 3-101, the playing status of the audio in the electronic device 3-300.

In some embodiments, when there is a communication connection established between the earphones 3-102 and the electronic device 3-300, the electronic device 3-300 may control playing of audio in the earphones 3-102 based on a received audio playing control operation.

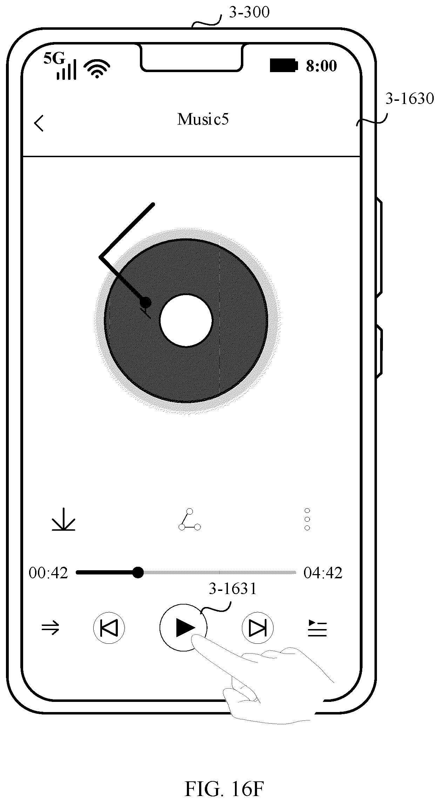

As shown in FIG. 16F, the electronic device 3-300 may display a user interface 3-1630. For the user interface 1-1630, refer to the user interface 3-1540 shown in FIG. 15E. The user interface 3-1630 may include a play control 3-1631. In response to an operation performed on the play control 3-1631, the electronic device 3-200 may start to play to-be-played music (for example, the music "Music5") corresponding to the user interface 3-1630.

Because the electronic device 3-300 is connected to the earphones 3-102, the electronic device 3-300 may send audio data of music playing to the earphones 3-102, to play music (for example, the music "Music5") on the electronic device 3-300 with a sound through the earphones 3-102.

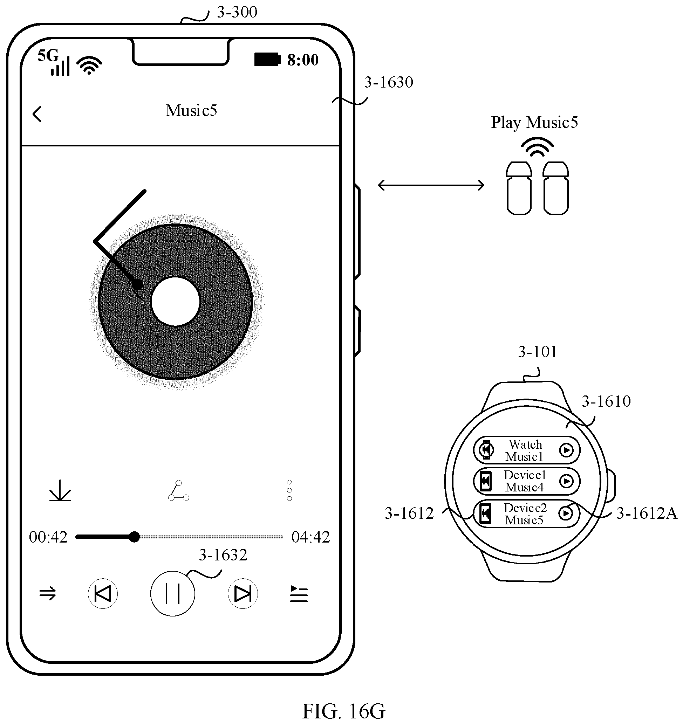

As shown in FIG. 16G, the electronic device 3-300 may send the audio data of "Music5" to the earphones 3-102. The earphones 3-102 may play the music "Music5" of the electronic device 3-300. The electronic device 3-300 may display a user interface 3-1630. In a process of playing the music through the earphones 3-102, the electronic device 3-300 may display a pause control 3-1632 on the user interface 3-1630. The pause control 3-1632 may be used to pause playing of the music.

In addition, because the communication connection between the earphones 3-102 and the smartwatch 3-101 is disconnected, the electronic device 3-300 cannot send, through the earphones 3-102, a message indicating that the music is being played. In this case, in the process in which the electronic device 3-300 plays the music through the earphones 3-102, the smartwatch 3-101 may still display the user interface 3-1610 shown in FIG. 16G. The user interface 3-1610 may include a music control 3-1612. The music control 3-1612Amay include the play control 3-1612A. It can be learned that, when the communication connection between the earphones 3-102 and the smartwatch 3-101 is disconnected, the user cannot learn of the playing status of the audio in the electronic device 3-300 through the user interface 3-1612A displayed by the smartwatch 3-101.

It can be learned from the scenario shown in FIG. 16A to FIG. 16G that, when the earphones 3-102 are connected to the smartwatch 3-101, the smartwatch 3-101 may control the earphones 3-102 to play music on a specified device. When the earphones 3-102 are not connected to the smartwatch 3-101, the earphones 3-102 may maintain a communication connection to a currently connected device, or the earphones 3-102 may establish a communication connection to another device in response to a connection request of the another device when no service is currently being performed, and perform a service from the another device. According to the foregoing embodiments, a conflict that a plurality of devices preempt the earphones 3-102 can be avoided, and user experience of listening to audio through the earphones 3-102 can be improved.

FIG. 17A and FIG. 17B **show an example of a flowchart of an audio playing control method.**

As shown in FIG. 17A and FIG. 17B, the method may include step S1711 to step S1726.
1. (S1711) **Play music on the smartwatch** 3-101 **based on a communication system including the smartwatch** 3-101 **and the earphones** 3-102.

S1711: The smartwatch 3-101 is connected to the earphones 3-102, and the earphones 3-102 play the music on the smartwatch 3-101 with a sound.

After being taken out of the smartwatch 3-101, the earphones 3-102 may establish a wireless connection, for example, a Bluetooth communication connection, to the smartwatch 3-101. The earphones 3-102 may play the music on the smartwatch 3-101 with a sound. For details, refer to the descriptions of the scenario shown in FIG. 6H and FIG. 6J.

2. (S1712 to S1718) **Establish the communication system shown in** FIG. 5A **and play music on the electronic device** 3-200.

S1712: The smartwatch 3-101 detects an operation of playing the music on the electronic device 3-200.

The smartwatch 3-101 is paired with the electronic device 3-200, and a communication connection (for example, a Bluetooth communication connection) is established between the smartwatch 3-101 and the electronic device 3-200.

For the operation of playing the music on the electronic device 3-200, refer to the operation shown in FIG. 10F, or refer to the operation shown in FIG. 10I.

S1713: The smartwatch 3-101 determines whether the earphones 3-102 are connected to the electronic device 3-200.

If it is determined that the earphones 3-102 are connected to the electronic device 3-200, the smartwatch 3-101 may perform the following step S1714.

If it is determined that the earphones 3-102 are not connected to the electronic device 3-200, the smartwatch 3-101 may perform the following step S1715.

It should be noted that, that the smartwatch 3-101 determines whether the earphones 3-102 are connected to the electronic device 3-200 may be specifically that the smartwatch 3-101 determines whether at least one earphone in the earphones 3-102 is connected to the electronic device 3-200.

When the at least one earphone in the earphones 3-102 is connected to the electronic device 3-200, the smartwatch 3-101 may perform the following step S1714. When two earphones in the earphones 3-102 are not connected to the electronic device 3-200, the smartwatch 3-101 may perform the following step S1715.

S1714: The smartwatch 3-101 determines whether the earphones 3-102 are in a worn state.

If it is determined that the earphones 3-102 are in the worn state, the smartwatch 3-101 may perform the following step S1716.

If it is determined that the earphones 3-102 are in a not-worn state, the smartwatch 3-101 may perform the following step S1717.

It should be noted that, that the smartwatch 3-101 determines whether the earphones 3-102 are in a worn state may be specifically that the smartwatch 3-101 determines whether at least one earphone in the earphones 3-102 is in the worn state.

When the at least one earphone in the earphones 3-102 is in the worn state, and the earphone in the worn state is connected to the electronic device 3-200, the smartwatch 3-101 may perform the following step S1716. When the two earphones in the earphones 3-102 are in the not-worn state, the smartwatch 3-101 may perform the following step S1717.

S1715: The smartwatch 3-101 indicates the earphones 3-102 to be connected to the electronic device 3-200.

For an implementation method in which the smartwatch 3-101 indicates the earphones 3-102 to be connected to the electronic device 3-200, refer to the descriptions of the scenario shown in FIG. 12C.

S1716: The smartwatch 3-101 sends a music play instruction to the electronic device 3-200, and the earphones 3-102 play the music on the electronic device 3-200 with a sound.

For an implementation method in which the earphones 3-102 play the music on the electronic device 3-200 with a sound, refer to the descriptions of the scenario shown in FIG. 10G.

In a process in which the earphones 3-102 play the music on the electronic device 3-200 with a sound, the earphones 3-102 may perform wearing detection. When it is detected that the earphones 3-102 are taken off, the earphones 3-102 may pause playing of the music, and send a music playing pause message to the smartwatch 3-101 and/or the electronic device 3-200. When it is detected that the earphones 3-102 are worn, the earphones 3-102 may resume music, and send, to the smartwatch 3-101 and/or the electronic device 3-200, a message indicating that the music is resumed.

S1717: The smartwatch 3-101 sends a music play instruction to the electronic device 3-200, and the electronic device 3-200 plays the music on the electronic device 3-200 with a sound.

For an implementation in which the electronic device 3-200 plays the music on the electronic device 3-200 with a sound, refer to the descriptions of the scenario shown in FIG. 10M.

Optionally, in step S1714, if the smartwatch 3-101 determines that the earphones 3-102 are in the not-worn state, the smartwatch 3-101 may further prompt a user to wear the earphones 3-102. For an implementation in which the smartwatch 3-101 prompts the user to wear the earphones 3-102, refer to the descriptions of the scenario shown in FIG. 6I.

Step S1714, step S1716, and step S1717 may constitute step Q1.

An execution sequence of step S1713 and step S1714 is not limited in embodiments of this application. In a possible implementation, the smartwatch 3-101 may first perform step S1714 and then perform step S1713. Alternatively, the smartwatch 3-101 may simultaneously perform step S1713 and step S1714.

In a possible implementation, the smartwatch 3-101 may not perform step S1714. When determining that the earphones 3-102 are connected to the electronic device 3-200, the smartwatch 3-101 may send the music play instruction to the electronic device 3-200. Then, the electronic device 3-200 may send audio data of music playing to the earphones 3-102. The earphones 3-102 may play the music on the electronic device 3-200 with a sound. Alternatively, the earphones 3-102 may determine, based on whether the earphones 3-102 are in the worn state, whether to play the music on the electronic device 3-200 with a sound or pause playing of the music on the electronic device 3-200.

S1718: The smartwatch 3-101 may determine whether the earphones 3-102 are successfully connected to the electronic device 3-200.

The earphones 3-102 may establish a communication connection to the electronic device 3-200 based on an indication of the smartwatch 3-101 for establishing the communication connection. The smartwatch 3-101 may determine whether the earphones 3-102 are successfully connected to the electronic device 3-200.

If it is determined that the earphones 3-102 are successfully connected to the electronic device 3-200, the smartwatch 3-101 may perform step Q1.

If it is determined that the earphones 3-102 fail to be connected to the electronic device 3-200, the smartwatch 3-101 may perform step S1717. Optionally, if it is determined that the earphones 3-102 fail to be connected to the electronic device 3-200, the smartwatch 3-101 may display the user interface 3-1230 shown in FIG. 12E, to give the user a prompt that when the earphones 3-102 fail to be connected to the electronic device 3-200, the electronic device 3-200 cannot be controlled, through the smartwatch 3-101, to play the music.

In a possible implementation, step S1713 may be performed by the electronic device 3-200. Specifically, after the smartwatch 3-101 detects the operation of playing the music on the electronic device 3-200 (namely, step S1712), the smartwatch 3-101 may send the music play instruction to the electronic device 3-200. When receiving the music play instruction, the electronic device 3-200 may determine whether the earphones 3-102 are connected to the electronic device 3-200.

When determining that the earphones 3-102 are connected to the electronic device 3-200, the electronic device 3-200 may send the audio data of music playing to the earphones 3-102, to indicate the earphones 3-102 to play the music on the electronic device 3-200 with a sound. Alternatively, when determining that the earphones 3-102 are connected to the electronic device 3-200, the electronic device 3-200 may determine whether the earphones 3-102 are in the worn state. When determining that the earphones 3-102 are in the worn state, the electronic device 3-200 may send the audio data of music playing to the earphones 3-102, to indicate the earphones 3-102 to play the music on the electronic device 3-200 with a sound. When determining that the earphones 3-102 are in the not-worn state, the electronic device 3-200 may play the music on the electronic device 3-200 with a sound through an audio playing apparatus on the electronic device 3-200. Alternatively, when determining that the earphones 3-102 are in the not-worn state, the electronic device 3-200 may send, to the smartwatch 3-101, a message indicating that the earphones 3-102 are in the not-worn state. Then, the smartwatch 3-101 may prompt the user to wear the earphones 3-102 to listen to music.

When determining that the earphones 3-102 are not connected to the electronic device 3-200, the electronic device 3-200 may play the music on the electronic device 3-200 with a sound through an audio playing apparatus on the electronic device 3-200. Alternatively, when determining that the earphones 3-102 are not connected to the electronic device 3-200, the electronic device 3-200 may send, to the smartwatch 3-101, a message indicating that the earphones 3-102 are not connected to the electronic device 3-200. Then, the smartwatch 3-101 may perform step S1715.

3. (S1719 to S1726) Establish the communication system shown in FIG. 5B and play music on the electronic device 3-300.

S1719: The smartwatch 3-101 detects an operation of playing the music on the electronic device 3-300.

In a possible implementation, the smartwatch 3-101 previously controls, through the earphones 3-102, the electronic device 3-300 to play the music. The smartwatch 3-101 may display a control for controlling the music played by the electronic device 3-300. For the control, refer to the music control 3-1413 shown in FIG. 14B.

For the operation of playing the music on the electronic device 3-300, refer to the operation shown in FIG. 14B, or refer to the operation shown in FIG. 15A.

S1720: The smartwatch 3-101 determines whether the earphones 3-102 are connected to the electronic device 3-300.

If it is determined that the earphones 3-102 are connected to the electronic device 3-300, the smartwatch 3-101 may perform the following step S1721.

If it is determined that the earphones 3-102 are not connected to the electronic device 3-300, the smartwatch 3-101 may perform the following step S1722.

It should be noted that, that the smartwatch 3-101 determines whether the earphones 3-102 are connected to the electronic device 3-300 may be specifically that the smartwatch 3-101 determines whether at least one earphone in the earphones 3-102 is connected to the electronic device 3-300.

When the at least one earphone in the earphones 3-102 is connected to the electronic device 3-300, the smartwatch 3-101 may perform the following step S1721. When two earphones in the earphones 3-102 are not connected to the electronic device 3-300, the smartwatch 3-101 may perform the following step S1722.

S1721: The smartwatch 3-101 determines whether the earphones 3-102 are in a worn state.

If it is determined that the earphones 3-102 are in the worn state, the smartwatch 3-101 may perform the following step S1724.

If it is determined that the earphones 3-102 are in a not-worn state, the smartwatch 3-101 may perform the following step S1723.

It should be noted that, that the smartwatch 3-101 determines whether the earphones 3-102 are in a worn state may be specifically that the smartwatch 3-101 determines whether at least one earphone in the earphones 3-102 is in the worn state.

When the at least one earphone in the earphones 3-102 is in the worn state, and the earphone in the worn state is connected to the electronic device 3-300, the smartwatch 3-101 may perform the following step S1724. When the two earphones in the earphones 3-102 are in the not-worn state, the smartwatch 3-101 may perform the following step S1723.

S1722: The smartwatch 3-101 indicates the earphones 3-102 to be connected to the electronic device 3-300.

For an implementation method in which the smartwatch 3-101 indicates the earphones 3-102 to be connected to the electronic device 3-300, refer to the descriptions of the scenario shown in FIG. 15B.

S1723: The smartwatch 3-101 sends a music play instruction to the electronic device 3-300 through the earphones 3-102, and the electronic device 3-300 plays the music on the electronic device 3-300 with a sound.

For an implementation method in which the earphones 3-102 play the music on the electronic device 3-300 with a sound, refer to the descriptions of the scenario shown in FIG. 14C.

**In** a process in which the earphones 3-102 play the music on the electronic device 3-300 with a sound, the earphones 3-102 may perform wearing detection. When it is detected that the earphones 3-102 are taken off, the earphones 3-102 may pause playing of the music, and send a music playing pause message to the smartwatch 3-101 and/or the electronic device 3-300. When it is detected that the earphones 3-102 are worn, the earphones 3-102 may resume music, and send, to the smartwatch 3-101 and/or the electronic device 3-300, a message indicating that the music is resumed.

S1724: The smartwatch 3-101 sends a music play instruction to the electronic device 3-300 through the earphones 3-102, and the earphones 3-102 play the music on the electronic device 3-300 with a sound.

Step S1721, step S1723, and step S1724 may constitute step Q2.

An execution sequence of step S1720 and step S1721 is not limited in embodiments of this application. **In** a possible implementation, the smartwatch 3-101 may first perform step S1721 and then perform step S1720. Alternatively, the smartwatch 3-101 may simultaneously perform step S1720 and step S1721.

**In** a possible implementation, the smartwatch 3-101 may not perform step S1721. When determining that the earphones 3-102 are connected to the electronic device 3-300, the smartwatch 3-101 may send the music play instruction to the electronic device 3-300 through the earphones 3-102. Then, the electronic device 3-300 may send audio data of music playing to the earphones 3-102. The earphones 3-102 may determine, based on whether the earphones 3-102 are in the worn state, whether to play the music on the electronic device 3-300 with a sound or pause playing of the music on the electronic device 3-300.

In a possible implementation, when performing step S1720, the smartwatch 3-101 determines that the earphones 3-102 are connected to the electronic device 3-300. In this case, the earphones 3-102 are not connected to the electronic device 3-200. The electronic device 3-200 may play music on the electronic device 3-200 with a sound through an audio playing apparatus on the electronic device 3-200 according to an instruction for playing music by the smartwatch 3-101 (refer to step S1717). The earphones 3-102 may play the music on the electronic device 3-300 with a sound.

S1725: The smartwatch 3-101 may determine whether the earphones 3-102 are successfully connected to the electronic device 3-300.

The earphones 3-102 may establish a communication connection to the electronic device 3-300 based on an indication of the smartwatch 3-101 for establishing the communication connection. The smartwatch 3-101 may determine whether the earphones 3-102 are successfully connected to the electronic device 3-300.

If it is determined that the earphones 3-102 are successfully connected to the electronic device 3-300, the smartwatch 3-101 may perform step Q2.

In a possible implementation, when the smartwatch 3-101 determines, when performing step S1725, that the earphones 3-102 are not connected to the electronic device 3-300, the earphones 3-102 may be connected to the electronic device 3-200. The earphones 3-102 may be playing the music on the electronic device 3-200 with a sound (refer to step S1716). When the earphones 3-102 successfully establish the communication connection to the electronic device 3-300 based on the indication of the smartwatch 3-101, the earphones 3-102 may be disconnected from the electronic device 3-200. Then, the earphones 3-102 may play the music on the electronic device 3-300 with a sound. After the earphones 3-102 are disconnected from the electronic device 3-200, the electronic device 3-200 may pause playing of the music or play the music on the electronic device 3-200 through the audio playing apparatus on the electronic device 3-200. In this way, a connection relationship among the smartwatch 3-101, the earphones 3-102, the electronic device 3-200, and the electronic device 3-300 may be switched from the connection relationship of a communication system shown in FIG. 5A to a connection relationship of the communication system shown in FIG. 5B.

If it is determined that the earphones 3-102 fail to be connected to the electronic device 3-300, the smartwatch 3-101 may perform the following step S1726.

S1726: The smartwatch 3-101 prompts the user with a failure of connecting the earphones 3-102 to the electronic device 3-300, and cannot control the electronic device 3-300 to play the music.

**In** a possible implementation, step S1720 may be performed by the electronic device 3-300. Specifically, after the smartwatch 3-101 detects the operation of playing the music on the electronic device 3-300 (namely, step S1719), the smartwatch 3-101 may send the music play instruction to the electronic device 3-300. When receiving the music play instruction, the electronic device 3-300 may determine whether the earphones 3-102 are connected to the electronic device 3-300.

When determining that the earphones 3-102 are connected to the electronic device 3-300, the electronic device 3-300 may send the audio data of music playing to the earphones 3-102, to indicate the earphones 3-102 to play the music on the electronic device 3-300 with a sound. Alternatively, when determining that the earphones 3-102 are connected to the electronic device 3-300, the electronic device 3-300 may determine whether the earphones 3-102 are in the worn state. When determining that the earphones 3-102 are in the worn state, the electronic device 3-300 may send the audio data of music playing to the earphones 3-102, to indicate the earphones 3-102 to play the music on the electronic device 3-300 with a sound. When determining that the earphones 3-102 are in the not-worn state, the electronic device 3-300 may play the music on the electronic device 3-300 with a sound through an audio playing apparatus on the electronic device 3-300. Alternatively, when determining that the earphones 3-102 are in the not-worn state, the electronic device 3-300 may send, to the smartwatch 3-101, a message indicating that the earphones 3-102 are in the not-worn state. Then, the smartwatch 3-101 may prompt the user to wear the earphones 3-102 to listen to music.

When determining that the earphones 3-102 are not connected to the electronic device 3-300, the electronic device 3-300 may play the music on the electronic device 3-300 with a sound through an audio playing apparatus on the electronic device 3-300. Alternatively, when determining that the earphones 3-102 are not connected to the electronic device 3-300, the electronic device 3-300 may send, to the smartwatch 3-101, a message indicating that the earphones 3-102 are not connected to the electronic device 3-300. Then, the smartwatch 3-101 may perform step S1722.

It can be learned from the method shown in FIG. 17A and FIG. 17B that the smartwatch 3-101 may be used as a control and management device of the earphones 3-102 to control audio played with a sound by the earphones 3-102. **In** this way, a user may control, through the smartwatch 3-101, the earphones 3-102 to play audio on a specified device with a sound. According to the foregoing method, a conflict that a plurality of devices preempt the earphones 3-102 can be avoided, and user experience of listening to audio through the earphones 3-102 can be improved.

**In** some embodiments, the earphones 3-102 may search for surrounding electronic devices, and calculate distances between the surrounding electronic devices and the earphones 3-102. The earphones 3-102 may play, with a sound, audio on an electronic device closest to the earphones 3-102. The electronic devices that can be found by the earphones 3-102 may include an electronic device currently connected to the earphones 3-102 and an electronic device to which the earphones 3-102 currently are not connected but has been connected. For example, both the electronic device 3-200 and the electronic device 3-300 are playing music. When one or two earphones in the earphones 3-102 are in an out state, surrounding electronic devices may be searched for through Bluetooth communication and distances between these electronic devices and the earphones 3-102 may be determined. The earphones 3-102 may calculate the distances between the electronic devices and the earphones 3-102 based on strength of received Bluetooth signals of the surrounding electronic devices. A method in which the earphones 3-102 calculate the distances between the surrounding electronic devices and the earphones 3-102 is not limited in embodiments of this application.

When the earphones 3-102 find that the electronic device 3-200 is an electronic device that is closest to the earphones 3-102 and that is playing music, the earphones 3-102 may be connected to the electronic device 3-200 and play the music on the electronic device 3-200 with a sound.

The user may move in a process of wearing the earphones 3-102. Herein, a scenario in which the user wears the earphones 3-102 and moves from a location close to the electronic device 3-200 to a location close to the electronic device 3-300 is used as an example for description.

As a location of the earphones 3-102 changes, the earphones 3-102 may detect that the electronic device that is closest to the earphones 3-102 and that is playing music changes from the electronic device 3-200 to the electronic device 3-300. Then, the earphones 3-102 may be connected to the electronic device 3-300 and play the music on the electronic device 3-300 with a sound.

**In** a possible implementation, when the earphones 3-102 are in the worn state, the earphones 3-102 may calculate the distances between the surrounding electronic devices and the earphones 3-102, and play, with a sound, music on an electronic device that is closest to the earphones 3-102 and that is playing music.

**In** a possible implementation, the smartwatch 3-101 may search for surrounding electronic devices, and calculate distances between the surrounding electronic devices and the smartwatch 3-101. The smartwatch 3-101 may indicate the earphones 3-102 to play, with a sound, music on an electronic device that is closest to the smartwatch 3-101 and that is playing music.

FIG. 18 shows an example of the software architecture of the watch and the earphones. **In** the software architecture, various control functions of the watch for the earphones may be implemented based on a watch and earphone interaction SDK. The watch and earphone interaction SDK may include a group of application interfaces (application interfaces, APIs) provided by an earphone developer, and a Bluetooth communication manner and an intra-compartment universal asynchronous receiver/transmitter (universal asynchronous receiver/transmitter, UART) communication manner on which these APIs are based. The watch may perform a plurality of types of control on the earphones by invoking the group of APIs, for example, upgrading the earphones, canceling noise, and increasing/decreasing volume, without requiring a watch developer to implement specific functions encapsulated or represented by these APIs. In this way, development burden on the watch side can be reduced, and development work of the watch and the earphones is decoupled. In addition, an update of the watch and earphone interaction SDK does not require that an earphone control function be adaptively changed on the watch side, so that the earphones are more flexibly updated.

The Bluetooth communication manner may be implemented based on a Bluetooth communication module in the watch and Bluetooth communication modules in left and right earphones. The intra-compartment UART communication manner may be implemented based on left-earphone and right-earphone UART communication circuits in the watch and UART communication circuits of the left and right earphones. In actual application, the Bluetooth communication manner may be replaced with another wireless communication manner, and the UART communication manner may be replaced with another bus communication manner.

As shown in FIG. 18, a software architecture of the watch may mainly include an application layer and the watch and earphone interaction SDK.

The application layer may include various earphone control functions (or applications or services). With reference to the foregoing methods, the various earphone control functions may include, for example, earphone upgrade, earphone reset (factory settings restoring), earphone pairing, music control, call control, noise cancellation control, volume control, earphone management, and an earphone UI (for example, "Quick settings" and "Earphone management"). This is not limited thereto. In actual application, the watch software application layer may include more or fewer earphone control functions than the foregoing functions.

The watch and earphone interaction SDK may include various earphone control APIs that are directly invoked by the application layer, and a Bluetooth communication software interface, a left-earphone UART communication software interface, and a right-earphone UART communication software interface that are based on the APIs. The Bluetooth communication software interface may be used by the watch to communicate with the earphones in the Bluetooth communication manner, for example, transmit an earphone upgrade package to the earphones and receive earphone power information from the earphones. The left-earphone and right-earphone UART communication software interfaces may be used by the watch to communicate with the earphones in the UART communication manner, for example, send a reset command to the earphones and obtain a MAC address of the earphones sent by the earphones.

The following describes an implementation of each earphone control function at the application layer based on the watch and earphone interaction SDK.

Earphone upgrade: This function may invoke an API for upgrading the earphones in the watch and earphone interaction SDK. The API for upgrading the earphones may specifically include an API for obtaining an earphone upgrade package and an API for updating an earphone capability. An example of the former API is "getPackage()", and the API may further invoke the Bluetooth communication software interface to send the earphone upgrade package to the earphones in the Bluetooth communication manner. An example of the latter API may be, "update (package)", and the API may further invoke the Bluetooth communication software interface to control, in the Bluetooth communication manner, the earphones to perform upgrade based on the upgrade package (package). Not limited to the Bluetooth communication manner, the upgrade package and an upgrade instruction may alternatively be sent to an in-position earphone in the UART communication manner.

Earphone reset (factory settings restoring): This function may invoke an API for restoring the earphones to factory settings in the watch and earphone interaction SDK. The API for restoring the earphones to factory settings may specifically include an API for deleting pairing information, for example, "deletePairInfo()". Here, deletePairInfo() may further invoke the left-earphone and right-earphone UART communication software interfaces to send, in the UART communication manner, a control instruction for deleting the pairing information to the in-position earphone. Here, deleting the pairing information may be deleting pairing information of the watch, the mobile phone, or the like from the earphone. The API for restoring the earphones to factory settings may further include another specific API, to implement another procedure further related to restoring the earphones to the factory settings.

Earphone pairing: This function may invoke an API for pairing the earphones with the watch (for example, "budsPairWatch()"), an API for pairing the earphones with the mobile phone (for example, "budsPairPhone()"), and an API for obtaining the MAC address of the earphones (for example, "getMac()") that are in the watch and earphone interaction SDK. Here, getMac() may further invoke the left-earphone and right-earphone UART communication software interfaces to obtain the MAC address of the earphones from the earphones in the UART communication manner. Here, budsPairWatch() may further invoke the left-earphone and right-earphone UART communication software interfaces to control, in the UART communication manner, the earphones to perform page scan (page scan), to scan paging of the watch and implement pairing between the watch and the earphones. Here, budsPairPhone() may further invoke the Bluetooth communication software interface to control, in the Bluetooth communication manner, the earphones to perform page scan, to scan paging of the mobile phone and implement pairing between the earphones and the mobile phone.

Music control: This function may invoke a playing API (for example, "play()"), a pause API (for example, "pause()"), a previous track API (for example, "previous()"), and a next track API (for example, "next()") that are in the watch and earphone interaction SDK. Here, play() may further invoke the Bluetooth communication software interface to send a music play instruction to the earphones in the Bluetooth communication manner, to control the earphones to start/continue to render currently buffered music. Here, pause() may further invoke the Bluetooth communication software interface to send a pause instruction to the earphones in the Bluetooth communication manner, to control the earphones to pause rendering of currently buffered music. Here, previous() may further invoke the Bluetooth communication software interface to send, to the earphones in the Bluetooth communication manner, an instruction for playing a previous track of music, to control the earphones to start to render the previous track of music. The earphones may simultaneously receive or have received the previous track of music from an audio source device (such as the mobile phone or the watch). Here, next() may further invoke the Bluetooth communication software interface to send, to the earphones in the Bluetooth communication manner, an instruction for playing a next track of music, to control the earphones to start to render the next track of music. The earphones may simultaneously receive or have received the previous track of music from the audio source device.

In addition, in a "U-shaped connection", the earphones may further forward, to the mobile phone connected to the earphones, a play/pause/previous track/next track instruction generated on the earphones, to trigger the mobile phone to start/pause transmitting an audio stream to the earphones, or change an audio stream transmitted to the earphones. In this way, in the "U-shaped connection", play()/pause()/previous()/next() may be further used to notify, in the Bluetooth manner, the earphones to forward a corresponding control instruction.

Call control: In a "U-shaped connection", this function may invoke an answer API (for example, accept()), a decline API (for example, decline()), and a call API (for example, call (number)) that are in the watch and earphone interaction SDK. Here, accept() may further invoke the Bluetooth communication software interface to notify, in the Bluetooth communication manner, the earphones to forward an answering instruction. Here, decline() may further invoke the Bluetooth communication software interface to notify, in the Bluetooth communication manner, the earphones to forward a declining instruction. Here, call (number) may further invoke the Bluetooth communication software interface to notify, in the Bluetooth communication manner, the earphones to forward a call instruction and a phone number (number).

Noise cancellation control: This function may invoke a noise cancellation API (for example, "noiseCancel() ") in the watch and earphone interaction SDK, and noiseCancel() may further invoke the Bluetooth communication software interface to send a noise cancellation instruction to the earphones in the Bluetooth communication manner.

Volume control: This function may invoke a volume increase API (for example, "volumeIncrease()") and a volume decrease API (for example, "volumeDecrease()") in the watch and earphone interaction SDK, and volumeIncrease() and volumeDecrease() may further separately invoke the Bluetooth communication software interface to send a volume increase instruction and a volume decrease instruction to the earphones in the Bluetooth communication manner.

Earphone management: This function may invoke an API for setting left and right earphones (for example, "setLR()"), an API for controlling the mobile phone connected to the earphones (for example, "connectPhone (targetPhone) "), an API for setting a wide-area touch-control gesture of the earphones (for example, "setGesture (targetGesture) "), and an API for finding the earphones (for example, "findBuds()") that are in the watch and earphone interaction SDK. Here, setLR() may further invoke the left and right earphone UART communication software interfaces to send, to in-position earphones in the UART communication manner, a control instruction for setting the left earphone and the right earphone, to control the left earphone and the right earphone to be set as the left earphone/right earphone, when stereo music is subsequently played, audio data of a corresponding audio channel is correspondingly selected and rendered based on whether an earphone is a left earphone or a right earphone. Here, connectPhone (targetPhone) may further invoke the Bluetooth communication software interface to send, to the earphones in the Bluetooth communication manner, an instruction for connecting to a target mobile phone targetPhone. The target mobile phone may be selected by the user. For example, in a "U-shaped connection", the user may choose, on the watch, to connect the earphones to the mobile phone connected to the watch. The target mobile phone may be selected by the watch based on an application scenario. For example, the watch may connect the earphones to a mobile phone closer to the watch, especially when the watch is in a worn state. Here, setGesture (targetGesture) may further invoke the Bluetooth communication software interface to send, to the earphones in the Bluetooth communication manner, an instruction for setting the wide-area touch-control gesture as a target gesture targetGesture, and control the earphones to update the wide-area touch-control gesture. Here, findBuds() may further invoke the Bluetooth communication software interface to send an instruction like a sound making/vibration instruction to the earphones in the Bluetooth communication manner, to control sound making/vibration of the earphones, so that the user can find the earphones.

Earphone UI (for example, "Quick settings" and "Earphone management"): This function may invoke a series of APIs related to earphone display in the watch and earphone interaction SDK, for example, including an earphone power detection API (for example, "getRemainCap()"), an API for detecting an in or out state of earphones (for example, "getInOutStatus()"), an API for obtaining earphone device information (for example, "getDevInfo()"), an API for obtaining an earphone pairing result (for example, "getPairRslt()"), an API for obtaining information about a connected mobile phone (for example, "getConnectPhoneInfo()"), an API for obtaining an earphone factory settings restoring result (for example, "getRecoverRslt()"), and an API for obtaining an earphone upgrade result (for example, "getUpdateRslt()"). Here, getRemainCap() may further invoke the Bluetooth communication software interface to send, to the earphones in the Bluetooth communication manner, an instruction for obtaining remaining power, to control the earphones to feed back remaining power information of the earphones to the watch, so that the watch refreshes and displays the remaining power of the earphones. Here, getInOutStatus() may further invoke the left and right earphone UART communication software interfaces to send an in-position detection instruction to in-position earphones in the UART communication manner, to obtain in/out states of the earphones (that is, whether the earphones are in position), so that the watch refreshes and displays in-position statuses of the earphones. Here, getDevInfo() may further invoke the Bluetooth communication software interface to send, to the earphones in the Bluetooth communication manner, an instruction for obtaining device information such as an earphone name and an earphone type, to control the earphones to feed back the device information of the earphones to the watch, so that the watch displays the device information of the earphones. Here, getPairRslt() may further invoke a UART communication software interface to send a pairing result query instruction to an in-position earphone in the UART communication manner, to obtain a result of pairing between the in-position earphone in the watch and the watch or the mobile phone, so that the watch displays the pairing result. Here, getConnectPhoneInfo() may further invoke the Bluetooth communication software interface to send, to the earphone in the Bluetooth communication manner, an instruction for querying a connected mobile phone, to control the earphone to feed back, to the watch, information about the mobile phone connected to the earphone, so that the watch refreshes and displays the information about the mobile phone connected to the earphone. Here, getRecoverRslt() and getUpdateRslt() may further invoke a UART communication software interface to send factory settings restoring and upgrade query instructions to an in-position earphone in the UART communication manner, to obtain factory settings restoring and upgrade results of the in-position earphone in the watch, so that the watch displays the results.

The earphone UI may appear on a plurality of functions or user interfaces of the watch. For example, the in-position status and the power information of the earphones may be displayed on a home (home) screen of the watch, the information about the mobile phone connected to the earphones may be displayed on a "Quick settings" user interface, the factory settings restoring and upgrade results may be respectively displayed on user interfaces of factory settings restoring and upgrade functions, and the pairing result may be displayed on a function related to earphone pairing (for example, "Watch and earphone management"). In other words, a plurality of functions at the application layer of the watch invoke API interfaces related to the earphone UI to implement display of the earphones, so that the user can learn of a status or a working status of the earphones when using these functions.

Whether an API in the watch and earphone interaction SDK invokes a Bluetooth software communication interface or a UART software communication interface may be determined based on a service scenario. For example, in a scenario in which the earphones are paired with the watch, an invoked API may invoke the Bluetooth software communication interface to control the earphones in the Bluetooth communication manner. For another example, in a scenario in which the earphones are in position, an invoked API may invoke the UART software communication interface to control the earphones in the UART communication manner.

**The following uses the electronic device 3-200 as an example to describe a structure of an electronic device in this application.**

FIG. 19 is an example of a diagram of a structure of the electronic device 3-200 according to an embodiment of this application. In addition to the mobile phone, the electronic device 3-200 may alternatively be a tablet computer, a notebook computer, a smart large-screen device, or the like. The smart large-screen device may be, for example, a smart television.

As shown in FIG. 19. The electronic device 3-200 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, an earphone jack 170D, a sensor module 180, a button 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 3-200. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 3-200.

The I2S interface may be used to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through Bluetooth earphones.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through Bluetooth earphones. Both the I2S interface and the PCM interface may be used for audio communication.

The UART interface is a universal serial data bus, and is used to perform asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through Bluetooth earphones.

The MIPI interface may be used to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 3-200. The processor 110 communicates with the display 194 through the DSI interface, to implement a display function of the electronic device 3-200.

The GPIO interface may be configured by software. The GPIO interface may be configured as a control signal or a data signal. In some embodiments, the GPIO interface may be used to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be used to connect to the charger to charge the electronic device 3-200, or may be used to transmit data between the electronic device 3-200 and a peripheral device, or may be used to connect to earphones for playing audio through the earphones. The interface may be further configured to connect to another electronic device like an AR device.

In embodiments of this application, only an interface connection relationship between the modules is used as an example, and does not constitute a limitation on an internal structure of the electronic device 3-200. In some other embodiments of this application, the electronic device 3-200 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 3-200. The charging management module 140 supplies power to an electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 3-200 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 3-200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 3-200. In some embodiments, at least some function modules in the mobile communication module 150 may be disposed in the processor 110. In some embodiments, at least some function modules of the mobile communication module 150 may be disposed in a same device as at least some modules of the processor 110.

The wireless communication module 160 may provide a wireless communication solution that is applied to the electronic device 3-200 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 3-200 are coupled, and the antenna 2 and the wireless communication module 160 in the electronic device 3-200 are coupled, so that the electronic device 3-200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 3-200 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The external memory interface 120 may be used to connect to an external storage card, for example, a micro SD card, to extend a storage capability of the electronic device 3-200. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 3-200 and data processing.

The electronic device 3-200 may implement an audio function, for example, music playing and recording, through the audio module 170, the speaker 170A, the receiver 170B, the microphone 170C, the earphone jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal. The electronic device 3-200 may be used to listen to music or answer a call in a hands-free mode over the speaker 170A.

The receiver 170B, also referred to as an "earpiece", is configured to convert an electrical audio signal into a sound signal. When a call is answered or a voice message is received through the electronic device 3-200, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 3-200. In some other embodiments, two microphones 170C may be disposed in the electronic device 3-200, to collect a sound signal and implement a noise cancellation function. In some other embodiments, three, four, or more microphones 170C may alternatively be disposed in the electronic device 3-200, to collect a sound signal, implement noise cancellation, and identify a sound source, so as to implement a directional recording function and the like.

The earphone jack 170D is configured to connect to wired earphones. The earphone jack 170D may be the USB port 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The sensor module 180 may include a pressure sensor 180A, a gyroscope sensor 180B, a barometric pressure sensor 180C, a magnetic sensor 180D, an acceleration sensor 180E, an optical proximity sensor 180G, a fingerprint sensor 180H, a temperature sensor 180J, a touch sensor 180K, an ambient light sensor 180L, a bone conduction sensor 180M, and the like.

The button 190 includes a power button, a volume button, and the like. The button 190 may be a mechanical button, or may be a touch button. The electronic device 3-200 may receive a button input, and generate a button signal input related to a user setting and function control of the electronic device 3-200.

The motor 191 may generate a vibration prompt. The motor 191 may be configured to provide an incoming call vibration prompt and a touch vibration feedback. For example, touch operations performed on different applications (for example, image shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further user-defined.

The indicator 192 may be an indicator light, and may be configured to indicate a charging status and a power change, or may be configured to indicate a message, a missed call, a notification, and the like.

The SIM card interface 195 is used to connect to a SIM card. The SIM card may be inserted into the SIM card interface 195 or removed from the SIM card interface 195, to implement contact with or separation from the electronic device 3-200. The electronic device 3-200 may support one or N SIM card interfaces, where N is a positive integer greater than 1.

The structure shown in FIG. 19 does not constitute a specific limitation on the electronic device 3-200. In some other embodiments of this application, the electronic device 3-200 may include more or fewer components than those shown in the figure, or some components may be combined, or some components may be split, or different component arrangements may be used. The components shown in the figure may be implemented by hardware, software, or a combination of software and hardware.

**FIG. 20** **is an example of a diagram of a structure of a wearable device accommodating an audio apparatus according to an embodiment of this application.**

As shown in FIG. 20, electronic composition of a wearable device 3-2100 mainly focuses on a host 3-2101. The wearable device 3-2100 may be the wearable device 1 shown in FIG. 1 to FIG. 4. The host 3-2101 may be the host 2 shown in FIG. 1 to FIG. 4.

As shown in FIG. 20, the host 3-2101 may include a processor 3-2110, a magnet 3-2111, a magnet 3-2112, an interface 3-2113, and an interface 3-2114. To better describe the host 3-2101, FIG. 20 further shows an audio apparatus that matches the host 3-2101.

As shown in FIG. 20, an audio apparatus 3-2102 and an audio apparatus 3-2103 may be accommodated in the wearable device 3-2100. The audio apparatus 3-2102 may be the first earphone 31 shown in FIG. 4. The audio apparatus 3-2103 may be the second earphone 32 shown in FIG. 4. The audio apparatus 3-2102 may include a processor 3-2120, a magnetic field sensor 3-2121, and an interface 3-2122. The audio apparatus 3-2103 may include a processor 3-2130, a magnetic field sensor 3-2131, and an interface 3-2132.

When the audio apparatus 3-2102 is placed in an audio apparatus slot (for example, an earphone slot) of the host 3-2101, the interface 3-2113 in the host 3-2101 may be connected to the interface 3-2122 in the audio apparatus 3-2102. The interface 3-2113 may be an electrical connector in the host 3-2101, for example, a communication electrode or a charging electrode in an audio apparatus compartment. A structure of the interface 3-2113 may cooperate with or be in contact with the interface 3-2122 in the audio apparatus, to implement an electrical connection (or a physical connection) between the host 3-2101 and the audio apparatus 3-102. The interface 3-2122 may be an audio apparatus electrical connector, for example, a communication electrode or a charging electrode at an end of an ear handle of the audio apparatus. The interface 3-2122 may be a pogo pin, a spring pin, a spring plate, a conductive block, a conductive patch, a conductive sheet, a pin, a plug, a contact pad, a jack, a socket, or the like in the audio apparatus electrical connector. A method for setting the interface 3-2113 and the interface 3-2122 is not limited in embodiments of this application.

The processor 3-2110 and the processor 3-2120 of the audio apparatus may transmit information through the interface 3-2113 and the interface 3-2122, or charge a battery in the audio apparatus 3-2102.

The magnet 3-2111 in the host 3-2101 may be distributed on a watch cover of the host 3-2101 and/or at a location close to the audio apparatus slot. A location of the magnet 3-2111 may correspond to a location at which the audio apparatus 3-2102 is placed in the audio apparatus slot, so that when the audio apparatus 3-2102 is in an in state or an out state, a magnitude of a magnetic induction intensity (for example, a magnetic flux) detected by the magnetic field sensor 3-2121 of the audio apparatus shown in FIG. 20 is mainly generated by the magnet 3-2111. Similarly, the magnet 3-2112 in the host 3-2101 may alternatively be distributed on the watch cover of the host 3-2101 and/or at a location close to the audio apparatus slot. A location of the magnet 3-2112 may correspond to a location at which the audio apparatus 3-2103 is placed in the audio apparatus slot, so that when the audio apparatus 3-2103 is in an in state or an out state, a magnitude of a magnetic induction intensity (for example, a magnetic flux) detected by the magnetic field sensor 3-2122 of the audio apparatus is mainly generated by the magnet 3-2112.

The audio apparatus 3-2102 may implement in/out state detection of the audio apparatus 3-2102 through the magnetic field sensor 3-2121. The audio apparatus 3-2103 may implement in/out state detection of the audio apparatus 3-2103 through the magnetic field sensor 3-2131.

**In** some embodiments, a magnetic field sensor may be disposed in the host 3-2101, and magnets may be disposed in the audio apparatus 3-2102 and the audio apparatus 3-2103. The host 3-2101 may detect, through the magnetic field sensor, whether the audio apparatus 3-2102 and the audio apparatus 3-2103 are in the in state or the out state.

For a method for placing the audio apparatus 3-2103 in the host 3-2101 to form an electrical connection to the host 3-2101, refer to the foregoing method for electrically connecting the audio apparatus 3-2102 to the host 3-2101. Details are not described herein again.

It is not shown that the host 3-2101 may further have a wireless communication module. The wireless communication module may be configured to support data exchange of wireless communication including Bluetooth, a GNSS, a WLAN, FM, NFC, IR, and the like between the host 3-2101 and another electronic device (for example, an audio apparatus). In addition, the wireless communication module may be further connected to an antenna, and may receive an electromagnetic wave through the antenna, perform frequency modulation and filtering on the electromagnetic wave signal, and sends a processed signal to the processor 3-2110. The wireless communication module may further receive a to-be-sent signal from the processor 3-2110, perform frequency modulation and amplification on the signal, and convert, through the antenna, the signal into an electromagnetic wave for radiation. The wireless communication module may further cooperate with a wireless charging coil to wirelessly charge the wearable device 3-2100.

It is not shown that the host 3-2101 may further have a power module. The power module may be configured to supply power to the host 3-2101, supply power to modules in the host 3-2101, support the host 3-2101 in receiving a charging input, and the like.

It is not shown that the host 3-2101 may further have a wireless charging coil, to obtain power supply from an external power supply (for example, a wireless charging cradle) in a wireless charging manner.

It is not shown that a first part (which may be referred to as a cover body) of the host 3-2101 may further have a magnetic field sensor, and a second part (which may be referred to as a main body) of the host 3-2101 may be mounted with a status detection magnet. The magnetic field sensor may be configured to detect a magnetic flux of the status detection magnet in the second part. A value of the magnetic flux may be used by the processor 3-2110 to determine whether the cover of the host 3-2101 is opened. Locations of the magnetic field sensor and a location of the status detection magnet may be interchanged. To be specific, the magnetic field sensor may be in the main body, and the status detection magnet may be in the cover body.

FIG. 20 shows only an example of the host 3-2101 of the wearable device 3-2100 according to embodiments of this application. In actual application, the host 3-2101 may include more or fewer components. For implementation details of the host 3-2101, refer to the content of the foregoing sections. Details are not described herein again.

**Structures** of the **audio apparatus 3-2102 and the audio apparatus 3-2103 shown in** **FIG.** 20 **may be completely consistent. Here, the audio apparatus 3-2102** is used as an example to **describe a structure of the audio apparatus.**

As shown in FIG. 21, the audio apparatus 3-2102 may include a processor 3-2010, a memory 3-2020, a wireless communication module 3-2030, an audio input/output circuit 3-2040, a power module 3-2050, an interface 3-2060, a sensor module 3-2070, and the like. The power module 3-2050 may include a power management module 3-2051 and a battery 3-2052. The interface 3-2060 may include an audio apparatus electrical connector 3-2061.

The memory 3-2020 may be configured to store program code, for example, program code used to charge the audio apparatus 3-2102, perform wireless pairing and connection between the audio apparatus 3-2102 and another electronic device, or perform wireless communication between the audio apparatus 3-2102 and an electronic device. The memory 3-2020 may further store a Bluetooth address used to uniquely identify a wireless audio apparatus. In addition, the memory 3-2020 may further store connection data of an electronic device that is previously successfully paired with the audio apparatus 3-2102. For example, the connection data may be a Bluetooth address of the electronic device that is previously successfully paired with the audio apparatus 3-2102. Based on the connection data, the audio apparatus 3-2102 can be automatically paired with the electronic device, and does not need to configure a connection to the electronic device, for example, perform validity verification. The Bluetooth address may be a media access control (media access control, MAC) address.

The processor 3-2010 may be configured to execute the program code stored in the memory 3-2020, and invoke a related module to implement a function of the audio apparatus 3-2102 in embodiments of this application, for example, to implement a charging function, a wireless communication function, an audio data playing function, a wearing detection function, and an in/out state detection function of the audio apparatus 3-2102. The processor 3-2010 may be specifically an integrated control chip, or may include a circuit including various active components and/or passive components, and the circuit is configured to perform a function of the processor 3-2010 that is described in this embodiment of this application. The processor of the audio apparatus 3-2102 may be a micro controller unit (micro controller unit, MCU).

In some embodiments, the processor 3-2010 may include one or more interfaces. The processor 3-2010 may be connected to another component of the audio apparatus 3-2102 through the one or more interfaces.

The wireless communication module 3-2030 may be configured to support data exchange of wireless communication including Bluetooth, a GNSS, a WLAN, FM, NFC, IR, and the like between the audio apparatus 3-2102 and another electronic device. In some embodiments, the wireless communication module 3-2030 may be a Bluetooth chip. The audio apparatus 3-2102 may be paired with and wirelessly connected to a Bluetooth chip in another electronic device through the Bluetooth chip, to implement wireless communication between the audio apparatus 3-2102 and the another electronic device and through the wireless connection. For example, in embodiments of this application, the wireless communication module 3-2030 may be configured to: after the processor 3-2010 determines that the audio apparatus 3-2102 is removed from a compartment, send remaining power of the audio apparatus 3-2102 to an electronic device that establishes a wireless connection (for example, a Bluetooth connection) to the audio apparatus 3-2102.

**In** addition, the wireless communication module 3-2030 may be further connected to an antenna. The wireless communication module 3-2030 receives an electromagnetic wave through the antenna, performs frequency modulation and filtering processing on the electromagnetic wave signal, and sends a processed signal to the processor 3-2010. The wireless communication module 3-2030 may further receive a to-be-sent signal from the processor 3-2010, perform frequency modulation and amplification on the signal, and convert, through the antenna, the signal into an electromagnetic wave for radiation.

The audio input/output circuit 3-2040 may be connected to a sound collection apparatus like a microphone, to process a sound, convert the sound into an audio signal, and transmit the audio signal to the processor for further processing. The audio input/output circuit 3-2040 may be further connected to a sound playing apparatus like a speaker, to convert an audio signal from the processor into a sound for output. **In** this way, functions such as answering/making a call, playing music, and using a voice assistant can be implemented.

The power module 3-2050 may be configured to supply power to the audio apparatus 3-2102, supply power to modules of the audio apparatus 3-2102, support the audio apparatus 3-2102 in receiving a charging input, and the like.

The interface 3-2060 may be used to provide a wired connection for charging or communication between the audio apparatus 3-2102 and the smartwatch 3-101. **In** some embodiments, the audio apparatus 3-2102 may have a plurality of interfaces 3-2060. **In** some embodiments, the interface 3-2060 may include an audio apparatus electrical connector 3-2061. When the audio apparatus 3-2102 is placed in an audio apparatus slot of the smartwatch 3-101, the audio apparatus 3-2102 may establish an electrical connection to an electrical connector in the smartwatch 3-101 through the audio apparatus electrical connector 3-2061 (for example, the audio apparatus electrical connector is in direct contact with the electrical connector in the smartwatch 3-101). After the electrical connection is established, the smartwatch 3-101 may charge the battery 3-2052 in the audio apparatus 3-2102 based on current transmission functions of the audio apparatus electrical connector 3-2061 and the electrical connector in the smartwatch 3-101. For example, the audio apparatus electrical connector 3-2061 may be a pogo pin, a spring pin, a spring plate, a conductive block, a conductive patch, a conductive sheet, a pin, a plug, a contact pad, a jack, a socket, or the like. A specific type of the electrical connector 3-2061 is not limited in embodiments of this application. In some other embodiments, after the electrical connection is established, the audio apparatus 3-2102 may further perform data communication with the smartwatch 3-101, for example, may receive a pairing instruction from the smartwatch 3-101.

The sensor module 3-2070 may include, for example, an optical proximity sensor 3-2071, a bone conduction sensor 3-2072, a touch sensor 3-2073, and a magnetic field sensor 3-2074. In some embodiments, the processor 3-2010 may perform wearing detection through the optical proximity sensor 3-2071, to determine whether the audio apparatus 3-2102 is worn by a user. In some embodiments, the processor 3-2010 may obtain a vibration signal of a vibration bone of a vocal-cord part through the bone conduction sensor 3-2072, and obtain a voice signal through parsing, to implement a voice function. In some embodiments, the processor 3-2010 may detect, based on a change of a magnetic induction intensity detected by the magnetic field sensor 3-2074, whether the audio apparatus 3-2102 is in an in state or an out state. The magnetic field sensor 3-2074 may be a Hall effect sensor or a magnetometer. In addition, the processor 3-2010 may perform the method in embodiments of this application, and exchange information with devices such as the smartwatch 3-101, the electronic device 3-200, and the electronic device 3-300.

In some embodiments, a housing of the audio apparatus 3-2102 may be further provided with a magnet (for example, a magnetic iron) configured to attract the smartwatch 3-101, so that the audio apparatus 3-2102 is placed in the audio apparatus slot of the smartwatch 3-101. For example, an outer surface of the audio apparatus 3-2102 may further include components such as a button, an indicator light (which may indicate power, an incoming/outgoing call, a pairing mode, and the like), a display (which may prompt user-related information), and a dust filter (which may be used in cooperation with an earpiece). The button may be a physical button, a touch button (used in cooperation with the touch sensor), or the like, and is configured to trigger operations such as powering on, powering off, pausing, playing, recording, starting charging, and stopping charging.

The structure shown in FIG. 21 does not constitute a specific limitation on the audio apparatus 3-2102. **In** actual application, the audio apparatus 3-2102 may include more or fewer components than those shown in the figure, or some components may be combined, or some components may be split, or different component arrangements may be used. The components shown in the figure may be implemented by hardware, software, or a combination of software and hardware.

An embodiment of this application provides an audio communication system, including a wearable device and an audio apparatus. The foregoing "fixed connection" may be formed between the wearable device and the audio apparatus. The wearable device may be the wearable device described in embodiments in FIG. 20, and the audio apparatus may be the audio apparatus described in embodiments in FIG. 20 and FIG. 21. For specific details of the wearable device and the audio apparatus, refer to the descriptions of the wearable device and the audio apparatus in the foregoing sections. Details are not described herein again.

An embodiment of this application further provides an audio communication system, including a wearable device, an audio apparatus, and a first electronic device. The foregoing "triangular connection" may be formed between the wearable device, the audio apparatus, and the first electronic device. The wearable device may be the wearable device described in embodiments in FIG. 20, the audio apparatus may be the audio apparatus described in embodiments in FIG. 20 and FIG. 21, and the first electronic device may be the electronic device described in embodiments in FIG. 19. For specific details of the wearable device and the audio apparatus, refer to the descriptions of the wearable device and the audio apparatus. Details are not described herein again. For specific details of the first electronic device, refer to the descriptions of the electronic device 3-200. Details are not described herein again.

An embodiment of this application further provides an audio communication system, including a wearable device, an audio apparatus, a first electronic device, and a second electronic device. The foregoing "U-shaped connection" may be formed between the wearable device, the audio apparatus, the first electronic device, and the second electronic device. The wearable device may be the wearable device described in embodiments in FIG. 20, the audio apparatus may be the audio apparatus described in embodiments in FIG. 20 and FIG. 21, and both the first electronic device and the second electronic device may be the electronic device described in embodiments in FIG. 19. For specific details of the wearable device and the audio apparatus, refer to the descriptions of the wearable device and the audio apparatus in the foregoing sections. Details are not described herein again. For specific details of the first electronic device and the second electronic device, refer to the descriptions of the electronic device 3-200 and the electronic device 3-300. Details are not described herein again. In a possibility, the earphones may support a plurality of connections. In this way, the system may further form the foregoing "2+1 connection", that is, the earphones may be connected to both the first electronic device and the second electronic device. However, there is a physical connection between the earphones and one of the electronic devices, and there is a virtual connection between the earphones and the other electronic device.

An embodiment of this application further provides an audio communication system, including a wearable device, an audio apparatus, and more than two electronic devices. When earphones support a plurality of connections, the foregoing "2+1 connection", "2+2 connection", "2+3 connection", and even a more complex communication architecture may be formed among the wearable device, the audio apparatus, and the more than two electronic devices. The wearable device may be the wearable device described in embodiments in FIG. 20, the audio apparatus may be the audio apparatus described in embodiments in FIG. 20 and FIG. 21, and both the first electronic device and the second electronic device may be the electronic device described in embodiments in FIG. 19.

It may be understood that each user interface described in embodiments of this application is merely an example interface, and constitutes no limitation on the solutions of this application. In another embodiment, the user interface may use different interface layouts, may include more or fewer controls, and may add or reduce other function options, and provided that the user interface is based on a same inventive idea provided in this application, all fall within the protection scope of this application. It should be noted that, if no contradiction or conflict occurs, any feature or any part of any feature in any embodiment of this application may be combined, and a combined technical solution also falls within the scope of embodiments of this application.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. An audio playing control method, wherein the method is applied to a communication system, the communication system comprises a wearable device and an audio apparatus, an audio apparatus slot accommodating the audio apparatus is disposed in the wearable device, a communication connection is established between the wearable device and the audio apparatus, a communication connection is established between the wearable device and a first device, and the method comprises:
detecting, by the wearable device, a first operation, wherein the first operation is used to play first audio on the first device;
sending, by the wearable device, a first instruction to the first device in response to the first operation, wherein the first instruction is used to trigger the first device to play the first audio; and
receiving, by the audio apparatus, first audio data from the first device, and playing the first audio based on the first audio data.

2. The method according to claim 1, wherein the method further comprises:
receiving, by the wearable device, first information from the first device, wherein the first information comprises one or more of the following: play progress of the first audio, description information of the first audio, and play volume of the first audio; and
displaying, by the wearable device, the first information.

3. The method according to claim 1 or 2, wherein the method further comprises:
detecting, by the wearable device, an operation of adjusting the play volume of the first audio to first volume, and sending a volume adjustment instruction to the audio apparatus; and
adjusting, by the audio apparatus, the play volume of the first audio to the first volume in response to the volume adjustment instruction.

4. The method according to any one of claims 1 to 3, wherein that the first instruction is used to trigger the first device to play the first audio specifically comprises:
the first instruction is used to trigger the first device to play the first audio through the audio apparatus.

5. The method according to any one of claims 1 to 4, wherein the method further comprises:
detecting, by the wearable device, a second operation, wherein the second operation is used to play second audio on a second device;
sending, by the wearable device, a second instruction to the audio apparatus in response to the second operation, wherein the second instruction is used to trigger the audio apparatus to establish a communication connection to the second device;
establishing, by the audio apparatus, the communication connection to the second device in response to the second instruction;
sending, by the wearable device, a third instruction to the second device through the audio apparatus, wherein the third instruction is used to trigger the second device to play the second audio; and
receiving, by the audio apparatus, second audio data from the second device, and playing the second audio based on the second audio data.

6. The method according to claim 5, wherein the method further comprises:
receiving, by the wearable device, second information from the second device through the audio apparatus, wherein the second information comprises one or more of the following: play progress of the second audio, description information of the second audio, and play volume of the second audio; and
displaying, by the wearable device, the second information.

7. The method according to any one of claims 1 to 6, wherein the method further comprises:
detecting, by the wearable device, a third operation, wherein the third operation is used to play third audio on the wearable device;
sending, by the wearable device, third audio data to the audio apparatus in response to the third operation; and
playing, by the audio apparatus, the third audio based on the third audio data.

8. The method according to claim 7, wherein a communication connection is established between the audio apparatus and the first device, and after the playing, by the audio apparatus, the third audio based on the third audio data, the method further comprises:
after the first device detects an operation of playing the first audio, stopping, by the audio apparatus, playing the third audio, and playing the first audio based on the first audio data.

9. The method according to claim 5 or 6, wherein after the receiving, by the audio apparatus, second audio data from the second device, and playing the second audio based on the second audio data, the method further comprises:
detecting, by the wearable device, a fourth operation, wherein the fourth operation is used to play fourth audio on the first device;
in response to the fourth operation, sending, by the wearable device, a fourth instruction to the audio apparatus, and sending, to the first device, an instruction for playing the fourth audio, wherein the fourth instruction is used to trigger the audio apparatus to establish a communication connection to the first device;
establishing, by the audio apparatus, the communication connection to the first device in response to the fourth instruction; and
receiving, by the audio apparatus, fourth audio data from the first device, stopping playing the second audio, and playing the fourth audio based on the fourth audio data.

10. The method according to any one of claims 1 to 9, wherein the method further comprises:
displaying, by the wearable device, a first audio playing interface, wherein the first audio playing interface is an interface used to control the wearable device, the first device, or the second device to play audio; and the first audio playing interface comprises one or more of the following audio controlling controls: an audio play/pause control, an audio switching control, and a volume adjustment control; and
if the first audio playing interface is an interface used to control the wearable device to play audio, and the wearable device detects an operation performed on a first audio controlling control on the first audio playing interface, controlling, by the wearable device, the audio on the wearable device through the first audio controlling control;
if the first audio playing interface is an interface used to control the first device to play audio, and the wearable device detects an operation performed on a second audio controlling control on the first audio playing interface, indicating, by the wearable device through the second audio controlling control, the first device to control the audio on the first device; or
if the first audio playing interface is an interface used to control the second device to play audio, and the wearable device detects an operation performed on a third audio controlling control on the first audio playing interface, indicating, by the wearable device through the third audio controlling control and the audio apparatus, the second device to control the audio on the second device, wherein
the first audio controlling control, the second audio controlling control, and the third audio controlling control are any audio controlling control comprised in the first audio playing interface.

11. The method according to claim 10, wherein the first audio playing interface further comprises a noise control mode switching control, the noise control mode switching control is used to switch a noise control mode of the audio apparatus, and the noise control mode comprises a noise cancellation mode, an awareness mode, and a noise cancellation and awareness disabled mode.

12. The method according to any one of claims 1 to 11, wherein the method further comprises:
displaying, by the wearable device, a first interface, wherein the first interface comprises one or more of the following controls: a first play control, a second play control, and a third play control, wherein the first play control is used to control the wearable device to play or pause the audio on the wearable device, the second play control is used to control the first device to play or pause the audio on the first device, and the third play control is used to control the second device to play or pause the audio on the second device.

13. The method according to any one of claims 1 to 12, wherein after the detecting, by the wearable device, a first operation, the method further comprises:
obtaining, by the wearable device, a status of the connection between the audio apparatus and the first device; and
when the communication connection is not established between the audio apparatus and the first device, indicating, by the wearable device, the audio apparatus to establish the communication connection to the first device.

14. The method according to any one of claims 1 to 13, wherein after the detecting, by the wearable device, a first operation, the method further comprises:
obtaining, by the wearable device, a wearing status of the audio apparatus; and
providing, by the wearable device, a first prompt when the audio apparatus is in a not-worn state, wherein the first prompt is used to prompt a user to wear the audio apparatus.

15. The method according to any one of claims 5, 6, and 10 to 14, wherein after the receiving, by the audio apparatus, second audio data from the second device, and playing the second audio based on the second audio data, the method further comprises:
detecting, by the wearable device, that the first device is playing the audio, and the first device is closer to the wearable device than the second device;
sending, by the wearable device, a fifth instruction to the audio apparatus, wherein the fifth instruction is used to trigger the audio apparatus to establish the communication connection to the first device;
establishing, by the audio apparatus, the communication connection to the first device in response to the fifth instruction; and
receiving, by the audio apparatus, audio data from the first device, stopping playing the second audio, and playing the audio on the first device based on the audio data of the first device.

16. The method according to any one of claims 5, 6, and 10 to 14, wherein after the receiving, by the audio apparatus, second audio data from the second device, and playing the second audio based on the second audio data, the method further comprises:
detecting, by the audio apparatus, that the first device is playing the audio, and the first device is closer to the audio apparatus than the second device;
establishing, by the audio apparatus, the communication connection to the first device; and
receiving, by the audio apparatus, audio data from the first device, stopping playing the second audio, and playing the audio on the first device based on the audio data of the first device.

17. The method according to any one of claims 1 to 16, wherein the method further comprises:
establishing, by the audio apparatus, the communication connection to the first device when the audio apparatus is taken out of the audio apparatus slot of the wearable device, wherein the audio apparatus is placed in the audio apparatus slot of the wearable device, and the communication connection is established between the audio apparatus and the first device before the audio apparatus is placed in the audio apparatus slot of the wearable device; or
establishing, by the audio apparatus, the communication connection to the second device when the audio apparatus is taken out of the audio apparatus slot of the wearable device, wherein the audio apparatus is placed in the audio apparatus slot of the wearable device, and the communication connection is established between the audio apparatus and the second device before the audio apparatus is placed in the audio apparatus slot of the wearable device.

18. The method according to any one of claims 1 to 17, wherein the wearable device is any one of the following devices: a smartwatch, a smart band, smart glasses, a smart helmet, smart clothing, and a smart backpack; and the audio apparatus is any one of the following devices: earphones, a mini sound box, and a portable music player.

19. An audio playing control method, wherein the method is applied to a wearable device, an audio apparatus slot accommodating an audio apparatus is disposed in the wearable device, a communication connection is established between the wearable device and the audio apparatus, a communication connection is established between the wearable device and a first device, and the method comprises:
detecting, by the wearable device, a first operation, wherein the first operation is used to play first audio on the first device; and
sending, by the wearable device, a first instruction to the first device in response to the first operation, wherein the first instruction is used to trigger the first device to play the first audio.

20. The method according to claim 19, wherein the method further comprises:
receiving, by the wearable device, first information from the first device, wherein the first information comprises one or more of the following: play progress of the first audio, description information of the first audio, and play volume of the first audio; and
displaying, by the wearable device, the first information.

21. The method according to claim 19 or 20, wherein the method further comprises:
detecting, by the wearable device, an operation of adjusting the play volume of the first audio to first volume, and sending a volume adjustment instruction to the audio apparatus, wherein the volume adjustment instruction is used to trigger the audio apparatus to adjust the play volume of the first audio to the first volume.

22. The method according to any one of claims 19 to 21, wherein that the first instruction is used to trigger the first device to play the first audio specifically comprises:
the first instruction is used to trigger the first device to play the first audio through the audio apparatus.

23. The method according to any one of claims 19 to 22, wherein the method further comprises:
detecting, by the wearable device, a second operation, wherein the second operation is used to play second audio on a second device;
sending, by the wearable device, a second instruction to the audio apparatus in response to the second operation, wherein the second instruction is used to trigger the audio apparatus to establish a communication connection to the second device; and
sending, by the wearable device, a third instruction to the second device through the audio apparatus, wherein the third instruction is used to trigger the second device to play the second audio.

24. The method according to claim 23, wherein the method further comprises:
receiving, by the wearable device, second information from the second device through the audio apparatus, wherein the second information comprises one or more of the following: play progress of the second audio, description information of the second audio, and play volume of the second audio; and
displaying, by the wearable device, the second information.

25. The method according to any one of claims 19 to 24, wherein the method further comprises:
detecting, by the wearable device, a third operation, wherein the third operation is used to play third audio on the wearable device; and
sending, by the wearable device, third audio data to the audio apparatus in response to the third operation.

26. The method according to claim 23 or 24, wherein after the sending, by the wearable device, a third instruction to the second device through the audio apparatus, the method further comprises:
detecting, by the wearable device, a fourth operation, wherein the fourth operation is used to play fourth audio on the first device;
sending, by the wearable device, a fourth instruction to the audio apparatus in response to the fourth operation, wherein the fourth instruction is used to trigger the audio apparatus to establish a communication connection to the first device; and
sending, by the wearable device to the first device, an instruction for playing the fourth audio.

27. The method according to any one of claims 19 to 26, wherein the method further comprises:
displaying, by the wearable device, a first audio playing interface, wherein the first audio playing interface is an interface used to control the wearable device, the first device, or the second device to play audio; and the first audio playing interface comprises one or more of the following audio controlling controls: an audio play/pause control, an audio switching control, and a volume adjustment control; and
if the first audio playing interface is an interface used to control the wearable device to play audio, and the wearable device detects an operation performed on a first audio controlling control on the first audio playing interface, controlling, by the wearable device, the audio on the wearable device through the first audio controlling control;
if the first audio playing interface is an interface used to control the first device to play audio, and the wearable device detects an operation performed on a second audio controlling control on the first audio playing interface, indicating, by the wearable device through the second audio controlling control, the first device to control the audio on the first device; or
if the first audio playing interface is an interface used to control the second device to play audio, and the wearable device detects an operation performed on a third audio controlling control on the first audio playing interface, indicating, by the wearable device through the third audio controlling control and the audio apparatus, the second device to control the audio on the second device, wherein
the first audio controlling control, the second audio controlling control, and the third audio controlling control are any audio controlling control comprised in the first audio playing interface.

28. The method according to claim 27, wherein the first audio playing interface further comprises a noise control mode switching control, the noise control mode switching control is used to switch a noise control mode of the audio apparatus, and the noise control mode comprises a noise cancellation mode, an awareness mode, and a noise cancellation and awareness disabled mode.

29. The method according to any one of claims 19 to 28, wherein the method further comprises:
displaying, by the wearable device, a first interface, wherein the first interface comprises one or more of the following controls: a first play control, a second play control, and a third play control, wherein the first play control is used to control the wearable device to play or pause the audio on the wearable device, the second play control is used to control the first device to play or pause the audio on the first device, and the third play control is used to control the second device to play or pause the audio on the second device.

30. The method according to any one of claims 19 to 29, wherein after the detecting, by the wearable device, a first operation, the method further comprises:
obtaining, by the wearable device, a status of the connection between the audio apparatus and the first device; and
when the communication connection is not established between the audio apparatus and the first device, indicating, by the wearable device, the audio apparatus to establish the communication connection to the first device.

31. The method according to any one of claims 19 to 30, wherein after the detecting, by the wearable device, a first operation, the method further comprises:
obtaining, by the wearable device, a wearing status of the audio apparatus; and
providing, by the wearable device, a first prompt when the audio apparatus is in a not-worn state, wherein the first prompt is used to prompt a user to wear the audio apparatus.

32. The method according to any one of claims 23, 24, and 27 to 31, wherein after the sending, by the wearable device, a third instruction to the second device through the audio apparatus, the method further comprises:
detecting, by the wearable device, that the first device is playing the audio, and the first device is closer to the wearable device than the second device; and
sending, by the wearable device, a fifth instruction to the audio apparatus, wherein the fifth instruction is used to trigger the audio apparatus to establish the communication connection to the first device, wherein
after the audio apparatus establishes the communication connection to the first device, the audio apparatus plays the audio on the first device, and the audio apparatus stops playing the second audio on the second device.

33. The method according to any one of claims 19 to 32, wherein the wearable device is any one of the following devices: a smartwatch, a smart band, smart glasses, a smart helmet, smart clothing, and a smart backpack.

34. An audio playing control method, wherein the method is applied to an audio apparatus, the audio apparatus is capable of being accommodated in an audio apparatus slot of a wearable device, a communication connection is established between the audio apparatus and the wearable device, and the method comprises:
receiving, by the audio apparatus, first audio data from a first device, and playing first audio on the first device based on the first audio data; and
receiving, by the audio apparatus, a first audio control instruction from the wearable device, and controlling the first audio according to the first audio control instruction, wherein the first audio control instruction comprises one or more of the following: an audio play or playing pause instruction, a volume adjustment instruction, and a noise control mode switching instruction, the noise control mode switching instruction is used to switch a noise control mode of the audio apparatus, and the noise control mode comprises a noise cancellation mode, an awareness mode, and a noise cancellation and awareness disabled mode.

35. The method according to claim 34, wherein the method further comprises:
receiving, by the audio apparatus, a second instruction from the wearable device, wherein the second instruction is used to trigger the audio apparatus to establish a communication connection to a second device;
establishing, by the audio apparatus, the communication connection to the second device in response to the second instruction; and
receiving, by the audio apparatus, second audio data from the second device, and playing second audio on the second device based on the second audio data.

36. The method according to claim 34 or 35, wherein the method further comprises:
receiving, by the audio apparatus, third audio data from the wearable device, and playing third audio on the wearable device based on the third audio data.

37. The method according to claim 36, wherein a communication connection is established between the audio apparatus and the first device, and after the receiving, by the audio apparatus, third audio data from the wearable device, and playing third audio on the wearable device based on the third audio data, the method further comprises:
after the first device detects an operation of playing the first audio, stopping, by the audio apparatus, playing the third audio, and playing the first audio based on the first audio data.

38. The method according to claim 35, wherein after the receiving, by the audio apparatus, second audio data from the second device, and playing second audio on the second device based on the second audio data, the method further comprises:
receiving, by the audio apparatus, a fourth instruction from the wearable device, wherein the fourth instruction is used to trigger the audio apparatus to establish a communication connection to the first device;
establishing, by the audio apparatus, the communication connection to the first device in response to the fourth instruction; and
receiving, by the audio apparatus, fourth audio data from the first device, stopping playing the second audio, and playing fourth audio on the first device based on the fourth audio data.

39. The method according to claim 35, wherein after the receiving, by the audio apparatus, second audio data from the second device, and playing second audio on the second device based on the second audio data, the method further comprises:
detecting, by the audio apparatus, that the first device is playing audio, and the first device is closer to the audio apparatus than the second device;
establishing, by the audio apparatus, a communication connection to the first device; and
receiving, by the audio apparatus, audio data from the first device, stopping playing the second audio, and playing the audio on the first device based on the audio data of the first device.

40. The method according to any one of claims 34 to 39, wherein the audio apparatus is any one of the following devices: earphones, a mini sound box, and a portable music player.

41. An electronic device, wherein the electronic device is a wearable device, an audio apparatus slot accommodating an audio apparatus is disposed in the electronic device, the electronic device comprises a communication apparatus, a memory, and a processor, the communication apparatus is configured to establish a communication connection between the electronic device and the audio apparatus, the memory is configured to store a computer program, and the processor is configured to invoke the computer program, for the electronic device to perform the method according to any one of claims 19 to 33.

42. An audio apparatus, wherein the audio apparatus is capable of being accommodated in an audio apparatus slot of a wearable device, the audio apparatus comprises a communication apparatus, a memory, and a processor, the communication apparatus is configured to establish a communication connection between the audio apparatus and the wearable device, the memory is configured to store a computer program, and the processor is configured to invoke the computer program, for the audio apparatus to perform the method according to any one of claims 34 to 40.

43. A computer-readable storage medium comprising instructions, wherein when the instructions are run on an electronic device, the electronic device is enabled to perform the method according to any one of claims 19 to 33 or 34 to 40.

44. A communication system, wherein the communication system comprises the electronic device according to claim 41 and the audio apparatus according to claim 42.
